(19) Europäisches Patentamt
European Patent Office
Office européen des brevets

(11) **EP 3 756 290 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **19709635.7**

(22) Anmeldetag: **21.02.2019**

(51) Internationale Patentklassifikation (IPC):
*H04J 11/00* (2006.01)    *H04B 1/10* (2006.01)
*H04L 25/03* (2006.01)    *H04L 27/38* (2006.01)
*H04B 1/12* (2006.01)

(52) Gemeinsame Patentklassifikation (CPC):
**H04J 11/004; H04L 25/03057; H04L 25/0328; H04L 27/389**

(86) Internationale Anmeldenummer:
**PCT/EP2019/054356**

(87) Internationale Veröffentlichungsnummer:
**WO 2019/162398 (29.08.2019 Gazette 2019/35)**

(54) **EMPFÄNGER, SENDER, VERFAHREN UND SYSTEM ZUM EMPFANGEN UND SENDEN EINES KOMBINATIONSSIGNALS**

RECEIVER, TRANSMITTER, METHOD AND SYSTEM FOR RECEIVING AND SENDING A COMBINATION SIGNAL

RÉCEPTEUR, ÉMETTEUR, PROCÉDÉ ET SYSTÈME DE RÉCEPTION ET D'ENVOI D'UN SIGNAL DE COMBINAISON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2018 DE 102018202647**

(43) Veröffentlichungstag der Anmeldung:
**30.12.2020 Patentblatt 2020/53**

(73) Patentinhaber: **Innovationszentrum für Telekommunikationstechnik GmbH IZT 91058 Erlangen (DE)**

(72) Erfinder: **HUBER, Johannes 91094 Langensendelbach (DE)**

(74) Vertreter: **Burger, Markus et al Schoppe, Zimmermann, Stöckeler Zinkler, Schenk & Partner mbB Patentanwälte Radlkoferstraße 2 81373 München (DE)**

(56) Entgegenhaltungen:
**US-A1- 2004 170 230    US-A1- 2009 161 749**

**Beschreibung**

Technisches Gebiet

Ausführungsbeispiele der Erfindung beschreiben Vorrichtungen und Verfahren zur Mehrnutzerkommunikation.

Hintergrund der Erfindung

Bei der digitalen Informationsübertragung tritt meist der Fall auf, dass sich zwei oder mehrere gleichartige, datentragende Nachrichtensignale auf dem Übertragungsweg additiv überlagern bzw. bereits als überlagerte Signale von einem Sender abgegeben werden. Solange für eine Trennbarkeit der Signale durch die Anwendung eines Multiplex-Verfahrens sendeseitig Sorge getragen wird, z.B. durch Nutzung unterschiedlicher Frequenzbereiche (Frequency Division Multiplex: FDM), disjunkter Zeitschlitze (Time Diversion Multiplex: TDM), unterschiedlicher Codes (Code Division Multiplex Access: CDMA) oder verschiedene räumliche Ausbreitungsrichtungen und deren Auflösung durch mehrere, räumlich getrennte Empfangsantennen (Space-Division Multiple Access durch MIMO-Übertragung: SDMA) stellt das keinerlei Problem dar und ist seit Beginn der elektrischen Nachrichtentechnik Stand der Technik. Komplizierter wird die Situation, wenn sich Signale unkoordiniert gleichzeitig im gleichen Frequenzband überlagern. Solange sich hierbei die Empfangssignale bzgl. der Empfangsleistung, der Übertragungsraten (bit/Symbol) und/oder ihrer Leistungseffizienz deutlich unterscheiden, ist oftmals eine sukzessive Demodulation, Detektion und Decodierung möglich, d.h. eine Detektion des jeweils stärksten Signals und dessen Subtraktion vom empfangenen Summensignal nach Recodierung und Remodulation anhand der detektierten Daten. Unter bestimmten Randbedingungen kann diese Vorgehensweise sogar eine informationstheoretisch optimale Lösung darstellen [8]. Bei weniger ausgeprägten Unterschieden in den Empfangsleistungen und/oder Leistungseffizienzen der einzelnen Signale empfiehlt sich ein iteratives Vorgehen, wobei eine den geschätzten Wahrscheinlichkeiten der Datensymbole entsprechende Teilsubtraktion von interferierenden Signalen erfolgt und in mehreren Iterationsschritten eine Ausprägung der Wahrscheinlichkeiten zugunsten jeweils nur einem Datensymbol erfolgen sollte. Bei nahezu gleich starken und gleich leistungseffizienten Signalen ist meist nur die Anwendung eines optimalen Multi-User (Mehrnutzer-) Empfängers ein gangbarer Weg. Die überlagerten Signale werden als ein Signal aufgefasst, das pro Modulationsschritt alle Datensymbole repräsentiert, die der Überlagerung der Einzelsignale entsprechen. Bei identischen Modulationsverfahren für N Einzelsignale mit je M Signalelementen je Modulationsschritt (M-stufiges Übertragungsverfahren) entsteht so ein äquivalentes Modulationsverfahren für die Empfangsseite mit bis zu $M^N$ Signalelementen, wobei mitunter in ungünstiger Weise gleiche bzw. sehr ähnliche Signalelemente für unterschiedliche Kombinationen der Einzeldatensymbole entstehen können. Hierdurch kann ein drastischer Kapazitätsverlust verursacht werden.

Beispiel: Als Beispiel sei die phasengleiche Addition zweier BPSK-Signale ($M = N = 2$) angeführt, wobei aus der Überlagerung zweier Konstellationen {-1; +1} empfangsseitig die Konstellation {-2; 0; +2} entsteht. Ein eindeutiger Rückschluss auf die Sendesymbole bei Detektion des Empfangssymbols 0 ist auch im störungsfreien Fall nicht mehr möglich.

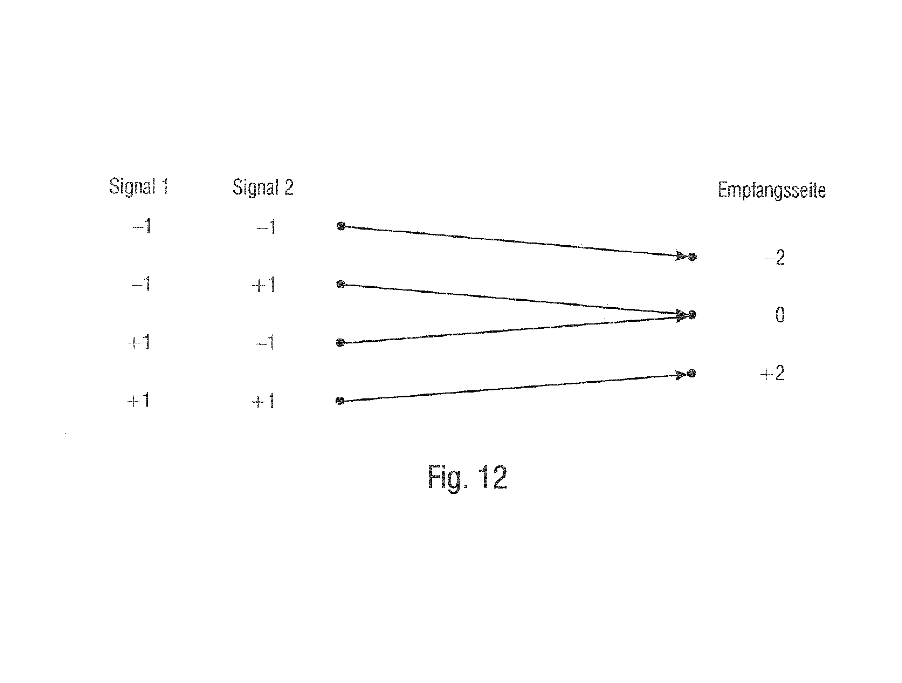

Dies ist in Fig. 12 illustriert in einem Übergangsdiagramm für zweimal BPSK: Die Kapazität nimmt auch ohne Störung von 2 auf 1,5 bit pro Modulationsschritt, d.h. beider Kanalbenutzungen, ab.

Treten bei den einzelnen Signalen aufgrund dispersiver Verzerrungen (z.B.infolge Mehrwegausbreitung und/oder Reflexionen) Inter-Symbol-Interferenzen (ISI) auf, so entsteht für die optimale Multi-User-Detektion ein bis zu $M^{NL}$-stufiges Signal, wobei $L$ die maximale Länge der ISI, gemessen in Symbolintervallen T, bezeichnet. Die Erzeugung des Empfangssignals kann durch die Wirkungsweise eines Mealy-Automaten mit bis zu $(M^N)^{L-1}$ Gedächtniszuständen modelliert werden. So ist eine gemeinsame Optimaldetektion aller Signale mittels eines Trellis-Decodierverfahrens, vorzugsweise des Viterbi- oder des BCJR Algorithmus [4], möglich. Die Zahl der Gedächtniszustände wird dabei zumeist aber so groß, dass eine Echtzeit-Implementierung eines Trellis-Decoders zur optimalen Multi-User-Detektion nicht mehr möglich ist. In [7] werden Methoden für den Entwurf eines Kompromiss-Empfängereingangsfilters vorgestellt, durch welches möglichst minimalphasige Impulsantworten der äquivalenten **F**inite-**I**mpulse-**R**esponse- (FIR) Systeme, welche die zeitdiskreten ISI nach einer Abtastung im Symboltakt beschreiben, erreicht werden. Da hierdurch ein Großteil der Energie der Empfangssignale auf die ersten FIR-Filter-Koeffizienten entfällt, werden **R**educed-**S**tate-**S**equence-**E**stimation- (RSSE-) Detektionsverfahren (siehe [2, 4]) effizient anwendbar. Allerdings bleibt ein Erfolg dieser Komplexitätsreduktion aufgrund fehlender Freiheitsgrade für das Empfänger-Eingangsfilter bei verschiedenen ISI-Impulsantworten für die Einzelsignale auf wenige günstige Sonderfälle beschränkt.

Es besteht daher ein Bedarf nach einem verbesserten Konzept zur Mehrnutzerkommunikation bzw. zur effizienteren Nutzung von Kanalressourcen. Dokument US2004/170230 A1 beschreibt einen Intersymbol-Interferenz-freien Empfänger, der die von einem anderen Signal verursachten Intersymbol-Interferenz vom eigentlichen Signal am Filterausgang subtrahiert.

Zusammenfassung

Zu den Aspekten der Erfindung gehören Empfänger, Kommunikationssystem, Verfahren und Computerprogramm gemäß den Ansprüchen.

Die beschrieben Empfänger basieren auf der Idee, dass ein Kombinationssignal, das zwei Signalanteile besitzt, vorteilhaft empfangen werden kann, wenn zumindest ein Signalanteil Intersymbol-Interferenz-frei abgetastet wird. Hiermit kann allein für den zweiten Signalanteil eine aufwendige Decodierung der ISI stattfinden, im Gegensatz zu herkömmlichen Ansätzen, bei denen eine aufwendige kombinierte Decodierung beider Signalanteile stattfindet. Insbesondere kann durch Beschränkung einer Decodiernotwendigkeit auf den zweiten Signalanteil eine Komplexitätsreduktion erreicht werden, da ein zu verwendender Decoder in der Regel einen wesentlich kleineren Zustandsapparat zu modellieren hat.

Bei den beschriebenen Ausführungsbeispielen kann durch Intersymbol-Interferenz-freie Abtastung des ersten Signalanteils eine Decodierung des zweiten Signalanteils stattfinden, obwohl diese ungefähr gleiche Leistung haben. In konventionellen Systemen ist eine Decodierung in diesem Fall nicht möglich.

Im folgenden werden mögliche Beispiele verschiedener Aspekte der Anmeldung kurz beschrieben.

Im Übrigen wird auf die folgende Anmerkung zu den Begriffen verwiesen: Eine Störung durch ein anderes Nutzsignal wird als Interferenz bezeichnet. Eine Störung durch thermisches Rauschen, vom Menschen verursachtes Rauschen ("man made noise") und Ähnliches wird als "Störung" bezeichnet.

Gemäß Beispielen des ersten Aspekts kann der Empfänger ausgelegt sein, um (beispielsweise basierend auf Abtastwerten, Beobachtungen; ($y[k]$)) Wahrscheinlichkeiten ($p_{1i}[k]$) von Sendesymbolen eines ersten Signalanteils für eine Mehrzahl von Abtastzeitpunkten (k) zu bestimmen. Ferner kann der Empfänger ausgelegt sein, um eine Wahrscheinlichkeitsdichtefunktion ($p_{N2}(n, k)$) einer eine Detektion von Sendesymbolen des zweiten Signalanteils beeinträchtigenden Störung (beispielsweise Interferenz und Rauschen) unter Berücksichtigung der Wahrscheinlichkeiten von Sendesymbolen des ersten Signalanteils zu bestimmen. Des Weiteren kann der Empfänger ausgelegt sein, um eine Wahrscheinlichkeitsdichtefunktion ($p_{N1}(n, k)$) einer eine Detektion von Sendesymbolen des ersten Signalanteils beeinträchtigenden Störung (beispielsweise Interferenz und Rauschen) unter Berücksichtigung

- der Wahrscheinlichkeitsdichtefunktion ($p_{N2}(n, k)$) einer eine Detektion von Sendesymbolen des zweiten Signalanteils beeinträchtigenden Störung, und
- der Abtastwerte (y[k]), und
- einer Information über Intersymbol-Interferenz-Eigenschaften (zum Beispiel eine Information über einen Zustandsübergang $y_{i \to j}$, und wobei die Intersymbol-Interferenz durch eine nicht-optimale Wahl der Abtastzeitpunkte im Hinblick auf eine Abtastung eines Ausgangssignals eines Signal-angepassten Filters zwischen benachbarten Sendesymbolen des zweiten Signalanteils entstanden sein kann)

zu bestimmen. Ferner kann der Empfänger ausgelegt sein, basierend auf Abtastwerten (bspw. Beobachtungen; y[k]) und der Wahrscheinlichkeitsdichtefunktion ($p_{N1}(n, k)$) einer eine Detektion von Sendesymbolen des ersten Signalanteils beeinträchtigenden Störung, aktualisierte Wahrscheinlichkeiten ($p_{1i}[k]$) von Sendesymbolen des ersten Signalanteils für eine Mehrzahl von Abtastzeitpunkten (k) zu bestimmen. Des Weiteren kann der Empfänger ausgelegt sein, um basierend auf einer End-Wahrscheinlichkeitsdichtefunktion (beispielsweise eine nach ausreichenden Iterationen erreichte Wahrscheinlichkeitsdichtefunktion $p_{N1}(n, k)$ oder $p_{N2}(n, k)$) Sendesymbole des ersten Signalanteils und/oder des zweiten Signalanteils zu bestimmen (beispielsweise anhand der aktualisierten Wahrscheinlichkeiten der Sendesymbole oder anhand von aktualisierten Wahrscheinlichkeiten von Zustandsübergängen i → j zu entscheiden, welches Sendesymbol mit höchster Wahrscheinlichkeit gesendet wurde). Das beschriebene Beispiel ermöglicht ein iteratives decodieren der Empfangssymbole unter Berücksichtigung von Interferenz verursacht durch Auswirkungen eines Signalanteils auf den anderen Signalanteil.

Gemäß Beispielen des ersten Aspekts kann der Empfänger ausgelegt sein, um die Wahrscheinlichkeitsdichtefunktion ($p_{N2}(n, k)$) einer eine Detektion von Sendesymbolen des zweiten Sendesignalanteils beeinträchtigenden Störung als eine Summe von Wahrscheinlichkeitsdichtefunktionen einer vermuteten Rauschstörung, oftmals normal verteilten Zufallsvariablen (oder als normal verteilte Zufallsvariablen modelliert), zu bestimmen. Ferner kann der Empfänger ausgelegt sein, um Mittelwerte (bzw. Mittelpunkte) von Wahrscheinlichkeitsdichtefunktionen einer Rauschstörungen, oftmals modelliert als Normalverteilungen, die zu der Summe von Wahrscheinlichkeitsdichtefunktionen beitragen, gemäß Sendesymbolen des ersten Signalanteils zu wählen. Des Weiteren kann der Empfänger ausgelegt sein, um Wahrscheinlichkeitsdichtefunktionen von vermuteten Rauschstörungen, oftmals Normalverteilungen (oder als Normalverteilungen modelliert), die zu der Summe von Wahrscheinlichkeitsdichten beitragen, mit Wahrscheinlichkeiten von Sendesymbolen des ersten Signalanteils zu gewichten. Durch das beschriebene Beispiel kann die Wahrscheinlichkeitsdichtefunktion der Störung, die die Decodierung des zweiten Signalanteils behindert, bestimmt werden und zur Decodierung des zweiten Signalanteils genutzt werden.

Gemäß Beispielen des ersten Aspekts kann der Empfänger ausgelegt sein, um die Wahrscheinlichkeitsdichte-

funktion ($p_{N1}(n, k)$) einer eine Detektion des ersten Signalanteils beeinträchtigende Störung basierend auf einer Gruppierung in Domänen von Beiträgen des zweiten Signalanteils zu den Abtastwerten zu bestimmen, wobei die in eine Domäne gruppierten Beiträge des zweiten Signalanteils im Wesentlichen ähnliche Werte aufweisen (beispielsweise sich um höchstens 10% unterscheiden (real und imaginär)). Das beschriebene Beispiel kann ein sogenanntes Clustering durchführen, um ähnliche Beiträge des zweiten Signalanteils zu den Abtastwerten zusammenzufassen. Hiermit kann eine Komplexitätsreduktion erreicht werden, da die Wahrscheinlichkeitsdichtefunktion ($p_{N1}(n, k)$) einer eine Detektion des ersten Signalanteils beeinträchtigende Störung wesentlich einfacher so zu bestimmen ist.

Gemäß Beispielen des ersten Aspekts kann der Empfänger ausgelegt sein, um die Wahrscheinlichkeitsdichtefunktion ($p_{N1}(n, k)$) einer eine Detektion des ersten Signalanteils beeinträchtigende Störung basierend auf einer gewichteten Summation von Wahrscheinlichkeitsdichtefunktionen einer vermuteten Rauschstörung (oder der vermuteten Rauschstörung), oftmals von Normalverteilungen (oder als Normalverteilungen modelliert), zu bestimmen, wobei der Empfänger ausgelegt ist, um die Gewichtung gemäß Wahrscheinlichkeiten von Beiträgen des zweiten Signalanteils zu den Abtastwerten zu wählen. Das beschriebene Beispiel kann vorteilhaft eine Interferenzwahrscheinlichkeit, basierend auf dem zweiten Signalanteil, bestimmen, die zu einer verbesserten Bestimmung des ersten Signalanteils genutzt werden kann.

Gemäß Beispielen des ersten Aspekts kann der Empfänger ausgelegt sein, um Sendesymbole, die dem zweiten Signalanteil zugrunde liegen, oder Wahrscheinlichkeiten von Sendesymbolen, die dem zweiten Signalanteil zugrunde liegen, mittels eines Trellis-Decodierverfahren zu bestimmen. Die Nutzung eines Trellis-Decodierverfahren, beispielsweise des BCJR- oder Viterbi-Algorithmus ermöglich eine effiziente Kompensation von Auswirkungen von Intersymbol-Interferenz.

Gemäß Beispielen des ersten Aspekts kann der Empfänger ausgelegt sein, um Intersymbol-Interferenz in Form eines diskreten Faltungsprozesses zu modellieren. Ferner kann der Empfänger ausgelegt sein, um allgemeine Übergangswahrscheinlichkeiten ($\gamma_{ij}[k]$) von einem ersten Speicherzustand eines diskreten Filters, das eine Intersymbol-Interferenz beschreibt (beispielsweise in Form eines diskreten Faltungsprozesses), basierend auf einem Abtastwert des Kombinationssignals und der Wahrscheinlichkeitsdichtefunktion ($p_{N2}(n, k)$) einer eine Detektion von Sendesymbolen des zweiten Signalanteils beeinträchtigende Störung, zu einem zweiten Speicherzustand zu bestimmen, wobei der zweite Speicherzustand dem ersten Speicherzustand zeitlich folgt. Das beschriebene Beispiel bietet eine effiziente Modellierung der Auswirkung von Intersymbol-Interferenz-behafteter Abtastung und somit auch eine Möglichkeit, dieser entgegenzuwirken, um das Signal mit hoher Wahrscheinlichkeit fehlerfrei zu empfangen.

Gemäß Beispielen des ersten Aspekts kann der Empfänger ausgelegt sein, um eine Vorrichtung zur Ableitung eines komplexen Basisbandsignals (zum Beispiel eine Mischung, oder eine einem Mischer nachgeschaltete digitale Phasenkorrektur) von dem Kombinationssignal so einzustellen, (bspw. zu regeln) dass Empfangssymbole des zweiten Signalanteils (z.B. nach Durchgang durch ein matched Filter und z.B. ein nicht zu den "richtigen" Zeitpunkten abgetasteten Signalanteils) getrennt in Inphasekomponente und Quadraturkomponente behandelt werden können. Das beschriebene Beispiel kann eine Komplexitätsreduktion ermöglichen, da ein Decodierverfahren weniger Zustände berücksichtigen muss, da diese getrennt für Inphase- und Quadraturkomponente angewandt werden können.

Gemäß Beispielen des ersten Aspekts kann der Empfänger ausgelegt sein, um Empfangssymbole des ersten Signalanteils von Empfangssymbolen des zweiten

Signalanteils unter Ausnutzung eines Zeitversatzes (der sich von einem Vielfachen eines Symboltaktes bspw. um 10% einer Symboldauer unterscheidet) und/oder eines Trägerphasenversatzes zu trennen und/oder zu detektieren. Durch Ausnutzung des Zeitversatzes und/oder des Trägerphasenversatzes lassen sich die unterschiedlichen Signalanteile effizient trennen, auch wenn diese im selben Frequenzbereich liegen oder einen identischen Code verwenden.

Gemäß Beispielen des ersten Aspekts kann der Empfänger ausgelegt sein, um Störungen von dem zweiten Signalanteil auf den ersten Signalanteil zu schätzen. Ferner kann der Empfänger ausgelegt sein, um basierend auf der Schätzung von Interferenzen von dem zweiten Signalanteil auf den ersten Signalanteil eine Schätzung von Sendesymbolwahrscheinlichkeit des ersten Signalanteils zu erhalten. Des Weiteren kann der Empfänger ausgelegt sein, um Interferenzen von dem ersten Signalanteil auf den zweiten Signalanteil, mittels der Schätzung von Sendesymbolwahrscheinlichkeiten des ersten Signalanteils, zu schätzen. Weiterhin kann der Empfänger ausgelegt sein, um basierend auf der Schätzung von Interferenzen von dem ersten Signalanteil auf den zweiten Signalanteil einen Beitrag des zweiten Signalanteils auf den Abtastwert zu schätzen. Das beschriebene Beispiel ermöglicht eine effiziente gemeinsame Berechnung von Sendesymbolwahrscheinlichkeiten des ersten Signalanteils und Beiträgen des zweiten Signalanteils auf Abtastwerte.

Gemäß Beispielen des ersten Aspekts kann der Empfänger ausgelegt sein, um die Schätzung von Interferenzen von dem zweiten Signalanteil auf den ersten Signalanteil und von Interferenzen von dem ersten Signalanteil auf den zweiten Signalanteil abwechselnd iterativ zu verbessern. Das beschriebene Beispiel ermöglicht eine verbesserte Detektion von Signalinhalten mittels einer iterativen Decodierung.

Gemäß Beispielen des ersten Aspekts kann der Empfänger ausgelegt sein, um direkt (beispielsweise ohne Berücksichtigung von ISI) aus einer Schätzung von Interferenzen von dem zweiten Signalanteil auf den ersten Signalanteil und einem Abtastwert ein Empfangssymbol des ersten Signalanteils oder eine Wahrscheinlichkeit eines Empfangssymbols des ersten Signalanteils zu bestimmen. Das beschriebene Beispiel beruht auf dem Vorteil, dass der erste Signalanteil in der Regel mit geringer Intersymbol-Interferenz empfangen wird, somit können Sendesymbole des ersten Signalanteils einfach bestimmt werden.

Gemäß Beispielen des ersten Aspekts kann der Empfänger ausgelegt sein, um für eine Bestimmung von Empfangssymbolen des zweiten Signalanteils (oder nur für die Bestimmung von Empfangssymbolen des zweiten Signalanteils) eine Modellierung von Intersymbol-Interferenz durchzuführen (d.h. es sind beispielsweise keine Zustände bzw. Zustandsübergangsbestimmung nötig für Bestimmung des ersten Signalanteils). Das beschriebene Beispiel ist durch die Beschränkung der Decodierung auf den zweiten Signalanteil effizienter bzw. weniger komplex als ein konventionelles Konzept, das eine Modellierung von Intersymbol-Interferenz für beide Signalanteile benötigt.

Beispiele gemäß des ersten Aspekts schaffen ein Kommunikationssystem, das einen ersten Sender, einen zweiten Sender und einen Empfänger gemäß einem der oben beschriebenen aufweist. Ferner können der erste Sender und der zweite Sender jeweils ausgelegt sein, um Sendesymbole mit einer identischen Symboltaktrate zu senden, wobei der Symboltakt des ersten Senders und des zweiten Senders (beispielsweise im Hinblick auf die Phasen) so sind (oder, optional, so gewählt sind), dass auf Seite des Empfängers empfangene Sendesymbole des ersten Senders und empfangene Sendesymbole des zweiten Senders einen Versatz aufweisen, der einem Bruchteil einer Symboldauer entspricht (also kein ganzzahliges Vielfaches der Symboldauer ist und sich von einem ganzzahligen Vielfachen der Symboldauer um mindestens 10% der Symboldauer unterscheidet). Ferner besteht auf Seiten des Empfängers mit sehr hoher Wahrscheinlichkeit ein signifikanter Trägerphasenversatz zwischen beiden Signalen.

Einen deutlichen Phasenversatz kann man empfängerseitig beispielsweise durch eine Positionsveränderung des Empfängers erreichen, wenn sich die Differenz der Entfernungen von beiden Sendern um ca. $\lambda/20$ ändert. Beispielsweise reicht bei einer Trägerfrequenz von 1GHz ($\lambda$=30cm) eine Positionsänderung von (etwa) 1cm. Eine Positionsänderung von 7,5cm ist bereits A/4 und kann Orthogonalität erzeugen.

Beispiele gemäß des ersten Aspekts schaffen ein Verfahren zum Empfangen eines Kombinationssignals, das zwei separate Signalanteile aufweist, deren (Sende- oder Empfangs-) Impulse zueinander verschoben sind und/oder deren Trägerphasen voneinander abweichen. Das Verfahren umfasst ein Einstellen (beispielsweise ein Regeln) von Abtastzeitpunkten, zu denen ein Ausgangssignal eines Filters abgetastet wird, wobei der Filter an eine Sendeimpulsform der Impulse zumindest eines der Signalanteile angepasst ist, so dass ein Ausgangssignalanteil des Filters, so dass ein Ausgangssignalanteil des Filters, der auf einem der Signalanteile (z.B. Signal 1) basiert, im Wesentlichen Intersymbol-Interferenz-frei abgetastet wird (beispielsweise also derart, dass jeder Impuls des ersten Signalanteils nur zu einem Abtastzeitpunkt einen wesentlich von Null verschiedenen Beitrag zu einem Abtastwert liefert; wobei ein Impuls des zweiten Signalanteils im Regelfall zu mehreren Abtastzeitpunkten wesentlich von Null verschiedene Beiträge zu den Abtastwerten liefert).

Beispiele gemäß des ersten Aspekts schaffen ein Computerprogramm mit einem Programmcode zur Durchführung des Verfahrens gemäß dem ersten Aspekt, wenn das Programm auf einem Computer abläuft.

Beispiele gemäß des ersten Aspekts schaffen einen Sender zum Senden eines Kombinationssignals, das zwei separate Signalanteile aufweist, deren (Sende-) Impulse zueinander verschoben sind. Ferner ist der Sender ausgelegt, um überlagert (bzgl. Zeit/Frequenz/etc.) Sendesymbole eines ersten Signalanteils und Sendesymbole eines zweiten Signalanteils zu senden, wobei ein Symboltakt zwischen Sendesymbolen des ersten Signalanteils und des zweiten Signalanteils einen zeitlichen Versatz aufweist, der beispielsweise zwischen 10% einer Symboldauer und 90% der Symboldauer liegt, und/oder einen hinreichenden Versatz der Phasen der beiden Trägerschwingungen aufweist.

Das beschriebene Beispiel beruht auf der Idee, dass eine effiziente Nutzung von Netzwerkressourcen durch Verwendung überlappender Signale gewährleistet werden kann. Ferner können angepasste Empfänger, wie sie oben beschrieben sind, ein Sendesignal des Senders sicher empfangen.

Die beiden Signale sind trotz gleicher Leistung trennbar und detektierbar, wenn entweder ein hinreichender Symboltaktversatz, zum Beispiel von 10% einer Symboldauer T, und/oder ein hinreichender Trägerphasenversatz vorliegen.

Beispiele gemäß eines zweiten Aspekts der Erfindung schaffen einen Empfänger zum Empfangen eines Kombinationssignals, das zwei separate Signalanteile aufweist, deren [Sende- oder Empfangs-] Impulse zueinander verschoben sind und/oder deren Trägerschwingungen einen Phasenversatz aufweisen. Ferner ist der Empfänger ausgelegt, um (beispielsweise basierend auf Abtastwerten; Beobachtungen; (y[k])) Wahrscheinlichkeiten ($p_{1i}$[k]) von Sendesymbolen eines ersten Signalanteils für eine Mehrzahl von Abtastzeitpunkten ($k$) zu bestimmen. Weiterhin ist der Empfänger ausgelegt, um eine Wahrscheinlichkeitsdichtefunktion ($p_{N2}(n, k)$) einer eine Detektion von Sendesymbolen des zweiten Signalanteils beeinträchtigenden Störung (beispielsweise Interferenz und Rauschen) unter Berücksichtigung der Wahrscheinlichkeiten von Sendesymbolen des ersten Signalanteils zu bestimmen. Ferner ist der Empfänger ausgelegt, um eine Wahrscheinlichkeitsdichtefunktion ($p_{N1}(n, k)$) einer eine Detektion von Sendesymbolen des ersten Signalanteils beeinträchtigenden Störung (beispielsweise Interferenz und Rauschen) unter Berücksichtigung

- der Wahrscheinlichkeitsdichtefunktion ($p_{N2}(n, k)$) einer eine Detektion von Sendesymbolen des zweiten Signalanteils beeinträchtigenden Störung, und
- der Abtastwerte ($y[k]$), und
- einer Information über Intersymbol-Interferenz-Eigenschaften (zum Beispiel eine Information über einen Zustandsübergang $y_{i\rightarrow j}$; die Intersymbol-Interferenz kann durch eine nicht-optimale Wahl der Abtastzeitpunkte im Hinblick auf eine Abtastung eines Ausgangssignals eines Signal-angepassten Filters zwischen benachbarten Sendesymbolen des zweiten Signalanteils verursacht sein)

zu bestimmen. Des Weiteren ist der Empfänger ausgelegt, basierend auf Abtastwerten (Beobachtungen; ($y[k]$)) und der Wahrscheinlichkeitsdichtefunktion ($p_{N1}(n, k)$) einer eine Detektion von Sendesymbolen des ersten Signalanteils beeinträchtigenden Störung, aktualisierte Wahrscheinlichkeiten ($p_{1i}[k]$) von Sendesymbolen des ersten Signalanteils für eine Mehrzahl von Abtastzeitpunkten ($k$) zu bestimmen. Weiterhin ist der Empfänger ausgelegt, um basierend auf einer End-Wahrscheinlichkeitsdichtefunktion (beispielsweise eine nach ausreichenden Iterationen erreichte Wahrscheinlichkeitsdichtefunktion $p_{N1}(n, k)$ oder $p_{N2}(n, k)$) Sendesymbole des ersten Signalanteils und/oder des zweiten Signalanteils zu bestimmen (beispielsweise anhand der aktualisierten Wahrscheinlichkeiten der Sendesymbole oder anhand von aktualisierten Wahrscheinlichkeiten von Zustandsübergängen $i \rightarrow j$ zu entscheiden, welches Sendesymbol mit höchster Wahrscheinlichkeit gesendet wurde).

Das beschrieben Beispiel beruht auf der Idee, dass eine Detektion von Empfangssymbolen, die Intersymbol-Interferenz-behaftet sind, besonders vorteilhaft gelingt, wenn Informationen über Interferenzen und Störungen vorhanden sind. Insbesondere kann basierend auf einer Detektion oder Einschätzung von Wahrscheinlichkeiten von Sendesymbolen des ersten Signalanteils, abgeschätzt werden wie der erste Signalanteil auf den zweiten Signalanteil störend wirkt. Hierdurch kann eine verbesserte Einschätzung erhalten werden, mit welcher Wahrscheinlichkeit ein Beitrag zu dem Abtastwert durch den zweiten Signalanteil bewirkt wurde. Dadurch können Rückschlüsse gefolgert werden, welches Sendesymbol mit größter Wahrscheinlichkeit im zweiten Sendesignal gesendet wurden. Wiederum durch die Schätzung der Wahrscheinlichkeit des Beitrags des zweiten Signalanteil können die Wahrscheinlichkeiten von Interferenzen auf den ersten Signalanteil bestimmt oder abgeschätzt werden womit der erste Signalanteil besser bestimmt werden kann. In Zwischenschritten ist es hierbei nicht erforderlich, Wahrscheinlichkeiten von Sendesymbolen des zweiten Signalanteils zu bestimmen. Vielmehr ist es ausreichend, zu schätzen, welcher Empfangssignalbeitrag mit welcher Wahrscheinlichkeit durch eine Inter-symbol-Interferenz-erzeugende Sequenz von Sendesymbolen des zweiten Signalanteils erzeugt wird.

Gemäß Beispielen des zweiten Aspekts kann der Empfänger ausgelegt sein, um die Wahrscheinlichkeitsdichtefunktion ($p_{N2}(n, k)$) einer eine Detektion von Sendesymbolen des zweiten Sendesignalanteils beeinträchtigenden Störung als eine Summe von Wahrscheinlichkeitsdichtefunktionen einer vermuteten Rauschstörung, oftmals modelliert als normal verteilte Zufallsvariablen, zu bestimmen. Das beschriebene Beispiel ermöglicht eine vorteilhafte und einfache Bestimmung der Wahrscheinlichkeitsdichtefunktion ($p_{N2}(n, k)$) einer eine Detektion von Sendesymbolen des zweiten Sendesignalanteils beeinträchtigenden Störung.

Gemäß Beispielen des zweiten Aspekts kann der Empfänger ausgelegt sein, um Mittelwerte (bzw. Mittelpunkte) von Wahrscheinlichkeitsdichtefunktionen einer vermuteten Rauschstörung, oftmals modelliert als Normalverteilungen, die zu der Summe von Wahrscheinlichkeitsdichtefunktionen (bzw. von Wahrscheinlichkeitsdichte-Werten) beitragen, gemäß Sendesymbolen des ersten Signalanteils zu wählen. Das beschriebene

Beispiel ermöglicht eine effiziente und gute Abschätzung von Störungen für den zweiten Signalanteil basierend auf dem ersten Signalanteil.

Gemäß Beispielen des zweiten Aspekts kann der Empfänger ausgelegt sein, um Wahrscheinlichkeitsdichtefunktionen einer vermuteten Rauschstörung, oftmals modelliert als Normalverteilungen, die zu der Summe von Wahrscheinlichkeitsdichtefunktionen (bzw. von Wahrscheinlichkeitsdichte-Werten) beitragen, mit Wahrscheinlichkeiten von Sendesymbolen des ersten Signalanteils zu gewichten. Somit kann eine gute Abschätzung von Störungen auf den zweiten Signalanteil bestimmt werden, beispielsweise iterativ basierend auf einer möglicherweise verbesserten Schätzung der Wahrscheinlichkeiten von Sendesymbolen des ersten Signalanteils.

Gemäß Beispielen des zweiten Aspekts kann der Empfänger ausgelegt sein, um die Wahrscheinlichkeitsdichtfunktion ($p_{N2}$) einer eine Detektion von Sendesymbolen des zweiten Sendesignalanteils beeinträchtigende Störung gemäß

$$p_{N2}(n, k) = \sum_{i=1}^{M} p_{1i}[k] f_N(n - a_{1i})$$

zu bestimmen; wobei $k$ ein Zeitpunkt ist, für den die Wahrscheinlichkeitsdichtefunktion $p_{N2}$ bestimmt wird, $n$ ein möglicher Wert oder Abtastwert ist, für den die Wahrscheinlichkeitsdichtefunktion ausgewertet wird, $a_{1i}$ ein mögliches Sendesymbol

des ersten Signalanteils ist, M die Anzahl der möglichen Sendesymbole $a_{1i}$, $f_N$ die angenommene oder gemessene Wahrscheinlichkeitsdichtefunktion einer Rauschstörung ist, meist als Normalverteilung modelliert, und $p_{1i}[k]$ eine Wahrscheinlichkeit für Sendesymbol $a_{1i}$ zum Zeitpunkt k ist. $f_N(n)$ ist beispielsweise die Wahrscheinlichkeitsdichtefunktion (WDF) der (vermuteten) Rauschstörung, zumeist als komplexwertig normalverteilt modelliert aufgrund des zentralen Grenzwertsatzes (also, kurz gesagt, beispielsweise als Normalverteilung modelliert). Die beschriebene Formel bietet eine einfache Berechnungsmöglichkeit für die Wahrscheinlichkeitsdichtfunktion ($p_{N2}$) einer eine Detektion von Sendesymbolen des zweiten Sendesignalanteils beeinträchtigende Störung

Gemäß Beispielen des zweiten Aspekts kann der der Empfänger ausgelegt sein, um Sendesymbole, die dem zweiten Signalanteil zugrunde liegen, oder Wahrscheinlichkeiten von Sendesymbole, die dem zweiten Signalanteil zugrunde liegen, mittels eines Trellis-Decodierverfahren zu bestimmen. Das beschriebene Beispiel kann ein effizientes Trellis-Decodierverfahren nutzen, um vom Sender gesendete Daten zu empfangen und dabei einer Intersymbol-Interferenz entgegenwirken.

Gemäß Beispielen des zweiten Aspekts kann der der Empfänger ausgelegt sein, um basierend auf dem Algorithmus nach Bahl, Cocke, Jelinek und Raviv (BCJR-Algorithmus, siehe [5]) Sendesymbole des zweiten Sendesignalanteils oder Wahrscheinlichkeiten für Sendesymbole des zweiten Sendesignalanteils zu bestimmen. Der BCJR-Algorithmus ermöglicht eine effektive Soft-in/Soft-out Decodierung bzw. Entgegenwirkung zu Intersymbol-Interferenz. Das heißt, dass dem Algorithmus Wahrscheinlichkeiten und Abtastwerte zur Verfügung gestellt werden und er damit Wahrscheinlichkeiten für Sendesymbole oder Beiträge zu Abtastwerten bestimmen kann.

Gemäß Beispielen des zweiten Aspekts kann der der Empfänger ein an eine Sendeimpulsform der Impulse zumindest eines der Signalanteile angepasstes Filter ("matched Filter") aufweisen. Ferner kann der Empfänger ausgelegt sein, um Abtastzeitpunkte, zu denen ein Ausgangssignal des Filters abgetastet wird, so einzustellen (beispielsweise zu regeln), dass der Ausgangssignalanteil des Filters, der auf dem ersten Signalanteil basiert, im Wesentlichen Intersymbol-Interferenz-frei abgetastet wird. Durch das beschriebene Beispiel kann eine Komplexitätsreduktion erwirkt werden da ein entgegenwirken gegen Intersymbol-Interferenz nur für den zweiten Signalanteil nötig ist.

Gemäß Beispielen des zweiten Aspekts kann der Empfänger ausgelegt sein, um Intersymbol-Interferenz in Form eines zeitdiskreten Faltungsprozesses zu modellieren. Ferner kann der Empfänger ausgelegt sein, um allgemeine Übergangswahrscheinlichkeiten ($\gamma_{ij}[k]$) von einem ersten Speicherzustand mit Nummer i eines (zeit-) diskreten Filters, das eine Intersymbol-Interferenz beschreibt (beispielsweise in Form eines zeitdiskreten Faltungsprozesses), basierend auf einem Abtastwert des Kombinationssignals und der Wahrscheinlichkeitsdichtefunktion ($p_{N2}(n, k)$) einer eine Detektion von Sendesymbolen des zweiten Signalanteils beeinträchtigende Störung, zu einem zweiten Speicherzustand mit Nummer j zu bestimmen, wobei der zweite Speicherzustand dem ersten Speicherzustand zeitlich folgt. Das beschriebene Beispiel kann vorteilhaft Einflüsse von Sendesymbolen des zweiten Signalanteils auf den Abtastwert abschätzen und somit beitragen die Sendesymbole des zweiten Signalanteils zu bestimmen, obwohl dieser in der Regel Intersymbol-Interferenz-behaftet ist.

Gemäß Beispielen des zweiten Aspekts kann der der Empfänger ausgelegt sein, um eine allgemeine Übergangswahrscheinlichkeit ($\gamma_{ij}[k]$) zu erhalten, basierend auf einer Auswertung der Wahrscheinlichkeitsdichtefunktion ($p_{N2}(n, k)$) einer eine Detektion von Sendesymbolen des zweiten Signalanteils beeinträchtigende Störung für einen Wert, der einen Unterschied zwischen einem beobachteten Abtastwert und einem erwarteten Abtastwert ($y_{i \to j}$), der ein zu der allgemeinen Übergangswahrscheinlichkeit gehörigen Zustandsübergang zugeordnet ist, darstellt. Mit dem beschriebenen Beispiel kann festgestellt, wie wahrscheinlich es ist, einen bestimmten Zustandsübergang zu beobachten (d.h. dass ein bestimmtes Sendesymbol in dem zweiten Signalanteil auftritt), wenn ein bestimmter Abtastwert erhalten wurde, in Anbetracht der Interferenz aufgrund des ersten Signalanteils.

Gemäß Beispielen des zweiten Aspekts kann der der Empfänger ausgelegt sein, um allgemeine Übergangswahrscheinlichkeiten ($\gamma_{ij}[k]$) gemäß

$$\gamma_{ij}[k] = p_{N2}(y[k] - y_{i \to j})$$

zu bestimmen; wobei $p_{N2}$ die Wahrscheinlichkeitsdichtfunktion einer eine Detektion von Sendesymbolen des zweiten Sendesignalanteils beeinträchtigende Störung ist, y[k] ein Abtastwert des empfangenen Kombinationssignals ist und $y_{i \to j}$ ein zu erwartender Abtastwert ist, der bei einem Übergang von Zustand *i* zum Zustand j von Speicherelementen eines Filters zugeordnet ist (der ausgelegt sein kann, um eine Intersymbol-Interferenz zu modellieren). Das beschriebene Beispiel bietet eine einfache Berechnungsvorschrift für die allgemeine Übergangswahrscheinlichkeiten.

Gemäß Beispielen des zweiten Aspekts kann der Empfänger ausgelegt sein, um basierend auf den allgemeinen Übergangswahrscheinlichkeiten ($\gamma_{ij}[k]$) Vorwärtszustandswahrscheinlichkeiten ($\alpha_i$) zu bestimmen, wobei die Vorwärtszustandswahrscheinlichkeiten die Wahrscheinlichkeit eines Speicherzustands des diskreten Filters zu einem Abtastzeitpunkt beschreiben, ausgehend von einem Anfangsabtastzeitpunkt der Mehrzahl von Abtastzeitpunkten. Das beschriebene Beispiel berücksichtigt vorherige Abtastwerte < *k* eines Blocks, bei der Bestimmung eines Sendesymbols zum Zeitpunkt *k* innerhalb eines Blocks. Die Funktionalität kann beispielsweise unter Verwendung des BCJR-Algorithmus implementiert werden.

Gemäß Beispielen des zweiten Aspekts kann der Empfänger ausgelegt sein, um basierend auf den allgemeinen Übergangswahrscheinlichkeiten ($\gamma_{ij}[k]$) Rückwärtszustandswahrscheinlichkeiten ($\beta_j$) zu bestimmen, wobei die Rückwärtszustandswahrscheinlichkeiten die Wahrscheinlichkeit eines Speicherzustands des diskreten Filters zu einem Abtastzeitpunkt beschreiben, ausgehend von einem Endabtastzeitpunkt der Mehrzahl von Abtastzeitpunkten. Das beschriebene Beispiel berücksichtigt spätere Abtastwerte > k eines Blocks, bei der Bestimmung eines Sendesymbols zum Zeitpunkt k innerhalb eines Blocks. Die Funktionalität kann beispielsweise unter Verwendung des BCJR-Algorithmus implementiert werden.

Gemäß Beispielen des zweiten Aspekts kann der Empfänger ausgelegt sein um sequenzbasierte Übergangswahrscheinlichkeiten ($p_{i \to j}[k]$) zu bestimmen, basierend auf den allgemeinen Übergangswahrscheinlichkeiten ($\gamma_{ij}[k]$), den Vorwärtszustandswahrscheinlichkeiten ($\alpha_i$) und den Rückwärtszustandswahrscheinlichkeiten ($\beta_j$). Das beschriebene Beispiel kann über eine Maximierung über mögliche Zustandsübergänge $i \to j$ eine Bestimmung von Sendesymbolen des zweiten Signalanteils durchführen.

Gemäß Beispielen des zweiten Aspekts kann der Empfänger ausgelegt sein, um sequenzbasierte Übergangswahrscheinlichkeiten ($p_{i \to j}[k]$) gemäß

$$p_{i \to j}[k] = c \cdot \alpha_i[k] \cdot \gamma_{ij}[k] \cdot \beta_j[k+1]$$

zu bestimmen; wobei c ein Gewichtungsfaktor ist, um zu gewährleisten, dass die Summe der Wahrscheinlichkeiten $\Sigma_{i,j} p_{i \to j}=1$ ist, $\alpha_i[k]$ eine Vorwärtszustandswahrscheinlichkeit ist, die eine Wahrscheinlichkeit angibt sich im Zustand i zu befinden zum Zeitpunkt k bei vorwärts gerichteter Auswertung der Abtastwerte beginnend bei einem Anfangsabtastwert zum Zeitpunkt $k_0 \leq k$, $\beta_j[k+1]$ eine Rückwärtszustandswahrscheinlichkeit ist, die eine Wahrscheinlichkeit angibt sich im Zustand j zu befinden zum Zeitpunkt k + 1 bei rückwärts gerichteter Auswertung der Abtastwerte beginnend bei einem Endabtastwert zum Zeitpunkt $k_1 \geq k + 1$ und $\gamma_{ij}[k]$ eine allgemeine Übergangswahrscheinlichkeit, die einen Übergang vom Zustand i zum Zustand j zum Zeitpunkt k beschreibt.

Gemäß Beispielen des zweiten Aspekts kann der Empfänger ausgelegt sein, um Sendesymbole des zweiten Sendesignalanteils basierend auf den Zustandsübergangen zu schätzen, wobei der Empfänger ausgelegt ist, die Gesamtübergangswahrscheinlichkeit, die auf den sequenzbasierten Übergangswahrscheinlichkeiten basiert zu maximieren. Beispielsweise werden alle zugelassenen Zustandsübergänge betrachtet.

Gemäß Beispielen des zweiten Aspekts kann der Empfänger ausgelegt sein, um Wahrscheinlichkeiten für Zustandsübergänge eines (zeit-) diskreten Filters, denen gleiche mögliche Abtastwerte (y[k]) zugeordnet sind, zusammenzufassen, um als Zusammenfassung $p_l[k]$ zu erhalten, um die Wahrscheinlichkeitsdichtefunktion ($p_{N1}(n, k)$) einer eine Detektion von Sendesymbolen des ersten Signalanteils beeinträchtigenden Störung zu erzeugen. Hiermit kann vereinfacht die Wahrscheinlichkeitsdichtefunktion ($p_{N1}(n, k)$) einer eine Detektion von Sendesymbolen des ersten Signalanteils beeinträchtigenden Störung und Interferenz bestimmt werden.

Gemäß Beispielen des zweiten Aspekts kann der Empfänger ausgelegt sein, um die Wahrscheinlichkeitsdichtefunktion ($p_{N1}(n, k)$) einer eine Detektion von Sendesymbolen des ersten Signalanteils beeinträchtigenden Störung gemäß

$$p_{N1}(n, k) = \sum_{l=1}^{M^L} p_l[k] f_N(n - y_l)$$

zu bestimmen; wobei *k* ein Zeitpunkt ist, für den die Wahrscheinlichkeitsdichtefunktion $p_{N1}$ bestimmt wird, n ein möglicher Wert (oder Abtastwert) ist, M die Größe eines Sendesymbolalphabets des zweiten Signalanteils beschreibt, L eine modellierte Länge der Intersymbol-Interferenz des zweiten Signalanteils beschreibt, $y_l$ ein möglicher Intersymbol-Interferenzbehafteter Abtastwert ist, $p_l[k]$ eine Wahrscheinlichkeit für eine Beobachtung des Intersymbol-Interferenzbehafteten Abtastwert $y_l$ ist und $f_N$ eine Wahrscheinlichkeitsdichtefunktion der vermuteten Rauschstörung, oftmals modelliert als Normalverteilung, ist.

Gemäß Beispielen des zweiten Aspekts kann der Empfänger ausgelegt sein, um Wahrscheinlichkeiten für Zustandsübergänge eines diskreten Filters, denen im Wesentlichen ähnliche (beispielsweise im Betrag sich höchstens um 10% unterscheiden bzw. innerhalb eines Clusters/Domäne liegen) mögliche (oder resultierende) Abtastwerte (y[k]) zugeordnet sind, in Domänen zusammenzufassen, um die Wahrscheinlichkeitsdichtefunktion ($p_{N1}(n, k)$) einer eine Detektion von Sendesymbolen des ersten Signalanteils beeinträchtigenden Störung zu erzeugen, wobei bei der Bestimmung der Wahrscheinlichkeitsdichtefunktion jeder Domäne nur eine Wahrscheinlichkeitsdichtefunktion einer Normalverteilung zugeordnet ist. Hiermit kann eine Komplexitätsreduktion erreicht werden, da nicht alle möglichen Abtastwerte berücksichtigt werden müssen, sondern nur die Repräsentanten der Domänen.

Gemäß Beispielen des zweiten Aspekts kann der Empfänger ausgelegt sein, um die Wahrscheinlichkeitsdichtefunktion ($p_{N1}(n, k)$) einer eine Detektion von Sendesymbolen des ersten Signalanteils beeinträchtigenden Störung gemäß

$$p_{N1}(n, k) = \sum_{\lambda=1}^{\Lambda} p_{D\lambda}[k] f_N(n - \bar{y}_\lambda)$$

zu bestimmen; wobei k ein Zeitpunkt ist, für den die Wahrscheinlichkeitsdichtefunktion $p_{N1}$ bestimmt wird, n ein möglicher Wert (oder Abtastwert) ist, $\Lambda$ eine Anzahl von Abtastwertbeitragsdomänen des zweiten Signalanteils beschreibt, wobei $\Lambda$ kleiner ist als eine Anzahl von möglichen [unterschiedlichen] Beiträgen des zweiten Signalanteils zu einem Abtastwert, $\lambda$ ein Index einer Abtastwertbeitragsdomäne ist, in der ein oder mehrere mögliche Beiträge zu Abtastwerten zusammengefasst sind, $p_{D\lambda}[k]$ eine Wahrscheinlichkeit beschreibt, dass ein Beitrag zu einem Abtastwert innerhalb der Domäne mit Index $\lambda$ liegt, $\bar{y}_\lambda$ ein Domänenrepräsentant ist für ein oder mehrere mögliche Intersymbol-Interferenz-behaftete Beiträge zu Abtastwerten und $f_N$ die Wahrscheinlichkeitsdichtefunktion der vermuteten Rauschstörung, oftmals modelliert als eine Normalverteilung, ist.

Gemäß Beispielen des zweiten Aspekts kann der Empfänger ausgelegt sein, um die möglichen Abtastwerte, die sich durch aufgrund von Intersymbol-Interferenz von Signalanteilen des zweiten Sendesignals für verschiedene Sequenzen von Sendesymbolen des zweiten Sendesignals ergeben, in Clustern (Gruppen) oder Domänen zusammenzufassen, beispielsweise mittels des Lloyd's-Algorithmus oder des k-Means-Algorithmus [6]. Der Lloyd's-Algorithmus oder der k-Means-Algorithmus bieten eine effiziente Bestimmung von Domänen.

Gemäß Beispielen des zweiten Aspekts kann der Empfänger ausgelegt sein, um basierend auf den aktualisierten Schätzungen der Wahrscheinlichkeiten von Sendesymbolen des ersten Signalanteils eine verbesserte Schätzung der Wahrscheinlichkeitsdichtefunktion ($p_{N2}(n, k)$) einer eine Detektion von Sendesymbolen des zweiten Signalanteils beeinträchtigenden Störung zu erhalten, um basierend darauf eine verbesserte Schätzung von Wahrscheinlichkeiten von möglichen Beiträgen des zweiten Signalanteils auf die Abtastwerte zu erhalten. Hiermit kann ein iteratives Vorgehen erfolgen, womit iterativ die Störwahrscheinlichkeitsdichten und Sendesymbole verbessert geschätzt werden.

Gemäß Beispielen des zweiten Aspekts kann der Empfänger ausgelegt sein, um abwechselnd Schätzungen der Wahrscheinlichkeitsdichtefunktion ($p_{N1}(n, k)$) einer eine Detektion von Sendesymbolen des ersten Signalanteils beeinträchtigenden Störung und der Wahrscheinlichkeitsdichtefunktion ($p_{N2}(n, k)$) einer eine Detektion von Sendesymbolen des zweiten Signalanteils beeinträchtigenden Störung, iterativ zu verbessern. Hiermit kann ein iteratives Vorgehen erfolgen, womit iterativ die Störwahrscheinlichkeitsdichten und Sendesymbole verbessert geschätzt werden.

Gemäß Beispielen des zweiten Aspekts kann der Empfänger ausgelegt ist, um eine Vorrichtung zur Ableitung eines komplexen Basisbandsignals (zum Beispiel eine Mischung, oder eine einem Mischer nachgeschaltete digitale Phasenkorrektur) von dem Kombinationssignal so einzustellen, (bspw. zu regeln) dass Empfangssymbole des zweiten Signalanteils (bspw. die ISI-behaftet erhalten wurden, z.B. nach Durchgang durch ein matched Filter nicht zu den "richtigen" Zeitpunkten abgetastet wurden), getrennt in Inphasekomponente und Quadraturkomponente behandelt werden können. Das beschriebene Beispiel ermöglicht eine Komplexitätsreduktion, da ein weniger komplexes Zustandsmodell durch einen Decoder modelliert werden muss.

Beispiele gemäß dem zweiten Aspekts schaffen ein Verfahren zum Empfangen eines Kombinationssignals, das zwei separate Signalanteile aufweist, deren (Sende- oder Empfangs-) Impulse zueinander verschoben sind. Das Verfahren umfasst ein Bestimmen (bspw. basierend auf Abtastwerten; Beobachtungen; ($y[k]$)) von Wahrscheinlichkeiten ($p_{1i}[k]$) von Sendesymbolen eines ersten Signalanteils für eine Mehrzahl von Abtastzeitpunkten (k). Ferner umfasst das Verfahren Bestimmen einer Wahrscheinlichkeitsdichtefunktion ($p_{N2}(n, k)$) einer eine Detektion von Sendesymbolen des zweiten Signalanteils beeinträchtigenden Störung (bspw. Interferenz und Rauschen) unter Berücksichtigung der Wahrscheinlichkeiten von Sendesymbolen des ersten Signalanteils. Des Weiteren umfasst das Verfahren Bestimmen einer Wahrscheinlichkeitsdichtefunktion ($p_{N1}(n, k)$) einer eine Detektion von Sendesymbolen des ersten Signalanteils beeinträchtigenden Störung (bspw. Interferenz und Rauschen) unter Berücksichtigung

- der Wahrscheinlichkeitsdichtefunktion ($p_{N2}(n, k)$) einer eine Detektion von Sendesymbolen des zweiten Signalanteils beeinträchtigenden Störung, und
- der Abtastwerte ($y[k]$), und
- einer Information über Inter-Symbol-Interferenz-Eigenschaften (zum, Beispiel eine Information über $y_{i \to j}$, wobei die Inter-Symbol-Interferenz durch eine nicht-optimale Wahl der Abtastzeitpunkte im Hinblick auf eine Abtastung eines Ausgangssignals eines Signal-angepassten Filters zwischen benachbarten Sendesymbolen des zweiten Signalanteils bewirkt ist).

Weiterhin umfasst das Verfahren ein Bestimmen von aktualisierten Wahrscheinlichkeiten ($p_{1i}[k]$) von Sendesymbolen des ersten Signalanteils für eine Mehrzahl von Abtastzeitpunkten (k), basierend auf Abtastwerten (Beobachtungen; ($y[k]$)) und der Wahrscheinlichkeitsdichtefunktion ($p_{N1}(n, k)$) einer eine Detektion von Sendesymbolen des ersten Signalanteils beeinträchtigenden Störung. Das Verfahren umfasst ferner ein Bestimmen von Sendesymbole des ersten Signalanteils und/oder des zweiten Signalanteils (Beispielsweise anhand der aktualisierten Wahrscheinlichkeiten der Sendesymbole oder anhand von aktualisierten Wahrscheinlichkeiten von Zustandsübergängen $i \rightarrow j$ zu entscheiden, welches Sendesymbol mit höchster Wahrscheinlichkeit gesendet wurde), basierend auf einer End-Wahrscheinlichkeitsdichtefunktion (beispielsweise eine nach ausreichenden Iterationen erreichte Wahrscheinlichkeitsdichtefunktion $p_{N1}(n, k)$ oder $p_{N2}(n, k)$).

Beispiele gemäß dem zweiten Aspekts schaffen ein Computerprogramm mit einem Programmcode zur Durchführung des Verfahrens gemäß dem zweiten Aspekt, wenn das Programm auf einem Computer abläuft.

Beispiele gemäß einem dritten Aspekt schaffen einen Empfänger zum Empfangen eines Kombinationssignals, das zwei separate Signalanteile aufweist (deren (Sende- oder Empfangs-) Impulse beispielsweise zueinander verschoben sind und/oder deren Trägerphasen einen (Phasen-) Versatz aufweisen). Ferner ist der Empfänger ausgelegt, um eine Vorrichtung zur Ableitung eines komplexen Basisbandsignals (zum Beispiel eine Mischung, oder eine einem Mischer nachgeschaltete digitale Phasenkorrektur) von dem Kombinationssignal so einzustellen (bspw. zu regeln), dass Empfangssymbole eines in Intersymbolinterferenz erzeugender Weise verarbeiteten Signalanteils (z.B. ein Signalanteil, der nach Durchgang durch ein matched Filter nicht zu den "richtigen" Zeitpunkten abgetastet wurde), getrennt in Inphasekomponente und Quadraturkomponente behandelt werden können, beispielsweise derart, dass in dem komplexen Basisbandsignal eine Mehrzahl von Empfangssymbolen einer Konstellation des in Intersymbolinterferenz erzeugender Weise erzeugten Signalanteils existieren, die unterschiedliche Imaginärteile aufweisen und deren Realteile sich beispielsweise um höchstens 10% eines Empfangssymbolabstands entlang einer reellen Achse unterscheiden. In anderen Worten haben beispielsweise Beiträge des in intersymbolinterferenzerzeugender Weise erzeugten Signalanteils, bei variierendem Imaginärteil, einen Realteil, der höchstens um 10% variiert, wenn ursprünglich zugrunde liegende Sendesymbole einen identischen Realteil hatten.

Das beschriebene Beispiel ermöglicht eine massive Komplexitätsreduktion, da, um die Intersymbolinterferenz zu berücksichtigen, ein wesentlich geringerer Zustandsautomat berücksichtigt werden muss. Durch eine getrennte Behandlung von Inphase- und Quadraturkomponente kann eine Komplexitätsreduktion entsprechend der Wurzel der Konstellationsgröße erreicht werden. Beispielsweise kann die Decodierung einer 16-QAM Konstellation, die ISI-behaftet empfangen wurde, auf 2 Decoder mit je 4 Zuständen reduziert werden, im Gegensatz zu einem Decoder mit 16 Zuständen. Hiermit wird in diesem Fall eine Reduktion der Komplexität von 16^L ($16^L$) auf $2 \cdot 4^L$ erreicht (wobei die Länge als Potenz in die reduzierte Komplexität einfließt). Bei größeren Konstellationen, beispielsweise 256-QAM, ist die Komplexitätsreduktion weit größer, also beispielsweise von 256 auf $2 \cdot 16$, was einer Komplexitätsreduktion von $8^L$ entspricht.

Gemäß Beispielen des dritten Aspekts kann der Empfänger ausgelegt sein, um eine mit einem signalangepassten Filter gefilterte Version des Kombinationssignals derart abzutasten, dass ein Ausgangssignalanteil des Filters, der auf einem ersten der Signalanteile basiert, im Wesentlichen Intersymbol-Interferenz-frei abgetastet wird. Ferner kann der Empfänger ausgelegt sein, um eine Inphasekomponente eines zweiten Signalanteils, der

Intersymbolinterferenz aufweist, und eine Quadraturkomponente des zweiten Signalanteils, der Intersymbolinterferenz aufweist, separat zu verarbeiten. Durch im Wesentlichen Intersymbolinterferenzfreiheit des ersten Signalanteils reduziert sich ein nötiger Aufwand zu einer Entgegenwirkung der Intersymbolinterferenz, da nur ein Signalanteil entsprechend behandelt werden muss.

Gemäß Beispielen des dritten Aspekts kann der Empfänger ausgelegt sein, um bei einer Intersymbol-Interferenz-berücksichtigenden Bestimmung von Wahrscheinlichkeiten von Beiträgen des zweiten Signalanteils zu einem Abtastwert Inphasekomponente und Quadraturkomponente separat zu verarbeiten. Hiermit können vorteilhaft Beiträge eines Intersymbol-Interferenz-behafteten Signalanteil direkt beispielsweise mit einem Trellis-Decoder bestimmt werden.

Gemäß Beispielen des dritten Aspekts kann der Empfänger ausgelegt sein, um die Intersymbol-Interferenzberücksichtigende Bestimmung von Wahrscheinlichkeiten von Beiträgen des zweiten Signalanteils zu einem Abtastwert unter der Annahme durchzuführen, dass ein Inphase-Beitrag des zweiten Signalanteils zu einem (bspw. aktuellen) Abtastwert (nur von Inphase-Anteilen vorhergehender Sendesymbole und eines aktuellen Sendesymbols abhängig ist und) von Quadratur-Anteilen vorhergehender Sendesymbole (und des aktuellen Sendesymbols) des zweiten Signalanteils unabhängig ist (und unter der Annahme, dass ein Quadratur-Beitrag des zweiten Sendesymbols zu einem aktuellen Abtastwert von Inphase-Anteilen vorhergehender Sendesymbole des zweiten Signalanteils unabhängig ist). Das beschriebene Beispiel beschreibt, dass vorteilhaft nur Inphasekomponenten gleicher Signalanteile voneinander abhängig sein können und, dass vorteilhaft nur Quadraturkomponenten gleicher Signalanteile voneinander abhängig sein können.

Gemäß Beispielen des dritten Aspekts kann der Empfänger ausgelegt sein, um separat Wahrscheinlichkeiten ($p_{DI,\lambda I}$) von Beiträgen des zweiten Signalanteils zu einer Inphasekomponente eines (aktuellen) Abtastwerts und Wahrscheinlichkeiten ($p_{DQ,\lambda Q}$) von Beiträgen des zweiten Signalanteils zu einer Quadraturkomponente eines (aktuellen) Abtastwerts zu bestimmen (beispielsweise um eine Wahrscheinlichkeitsdichtefunktion ($p_{N1}(n, k)$) einer eine Detektion von Sendesymbolen des ersten Signalanteils beeinträchtigenden Störung zu erhalten).

Gemäß Beispielen des dritten Aspekts kann die Vorrichtung zur Ableitung eines komplexen Basisbandsignals ausgelegt sein, um eine Trägerphasensynchronisation durchzuführen, so dass ein mit Intersymbol-Interferenz-behafteter Signalanteil trägerphasenrichtig demoduliert wird. Eine Trägerphasensynchronisation kann eine einfaches Konzept sein, um eine getrennte Behandlung von Inphase- und Quadraturkomponente zu ermöglichen.

Gemäß Beispielen des dritten Aspekts kann der Empfänger ausgelegt sein, um die Vorrichtung zur Ableitung eines komplexen Basisbandsignals so zu regeln, dass der mit Intersymbol-Interferenz-behaftete Signalanteil derart in ein komplexes Basisbandsignal umgesetzt wird, dass Inphase- und Quadraturkomponenten einer Konstellation des Intersymbol-Interferenz-behaftete Signalanteils jeweils (mit einer Toleranz von beispielsweise +/-10Grad) an Koordinatenachsen der komplexen Ebene ausgerichtet sind (wobei Konstellationspunkte, die in einer Sendekonstellation entlang einer zu einer Inphase-Achse senkrechten Geraden in der komplexen Ebene liegen, für sich alleine genommen - ohne Einfluss von Intersymbolinterferenz, anderen Signalanteilen und Rauschen - mit einer Toleranz von höchstens +/-10Grad auf eine zu der Inphase-Achse oder Quadratur-Achse senkrechten Gerade in einem komplexwertigen Basisbandsignal abgebildet werden; wobei Konstellationspunkte, die in einer Sendekonstellation entlang einer zu einer Quadratur-Achse senkrechten Geraden in der komplexen Ebene liegen, für sich alleine genommen - ohne Einfluss von Intersymbolinterferenz, anderen Signalanteilen und Rauschen - beispielsweise mit einer Toleranz von höchstens +/-10Grad auf eine zu der Inphase-Achse oder Quadratur-Achse senkrechten Gerade in einem komplexwertigen Basisbandsignal abgebildet werden).

Gemäß Beispielen des dritten Aspekts kann der Empfänger ausgelegt sein, um Empfangssymbole eines der Signalanteile, Intersymbol-Interferenz-frei abzutasten, und wobei der Empfänger ausgelegt ist, um eine Phasendrehung des anderen, Intersymbol-Interferenz-freien Signalanteils nach der Abtastung zu kompensieren. Das beschriebene Beispiel führt eine Phasendrehung eines Intersymbol-Interferenz-freien Anteils nach einer phasenrichtigen Demodulation eines Intersymbol-Interferenz-behafteten Signalanteils.

Gemäß Beispielen des dritten Aspekts kann der Empfänger ausgelegt sein, um Empfangssymbole eines Signalanteils, der Intersymbol-Interferenz-behaftet abgetastet wurde, mittels eines Trellis-Decodierverfahren zu erhalten. Trellis-Decodierverfahren ermöglichen eine effiziente Entgegenwirkung zur Intersymbol-Interferenz.

Gemäß Beispielen des dritten Aspekts kann der Empfänger ausgelegt sein, um Wahrscheinlichkeiten der Empfangssymbole des ersten Signalanteils und des zweiten Signalanteils iterativ zu bestimmen, so dass eine Schätzung von Empfangssymbolen des ersten Signalanteils eine verbesserte Schätzung von Empfangssymbolen des zweiten Signalanteils bewirkt, und so dass eine Schätzung von Empfangssymbolen des zweiten Signalanteils eine verbesserte Schätzung von Empfangssymbolen des ersten Signalanteils bewirkt. Durch eine iterative Bestimmung kann eine Verbesserung so lange durchgeführt werden, bis die erzielten Ergebnisse hinreichend genau sind oder eine bestimmte Anzahl an Iterationen erreicht wurde.

Gemäß Beispielen des dritten Aspekts kann der Empfänger ausgelegt sein, um basierend auf Schätzungen von Beiträgen eines Signalanteils auf einen Abtastwert, eine Wahrscheinlichkeitsdichtefunktion für eine Störung von Empfangssymbole des anderen Signalanteils zu bestimmen. Die Wahrscheinlichkeitsdichtefunktion für Empfangssymbole des anderen Signalanteils kann dazu genutzt werden um Sendesymbole des anderen Signalanteils zu bestimmen oder Wahrscheinlichkeiten für Sendesymbole zu bestimmen.

Gemäß Beispielen des dritten Aspekts kann der Empfänger ausgelegt sein, um Abtastwertbeiträge eines mit Intersymbol-Interferenz-behafteten Signalanteils in Domänen zusammenzufassen, wobei Domänen einen Repräsentanten aufweisen, und wobei ein Abtastwert beispielsweise einem Repräsentanten zugeordnet wird, der dem Abtastwert am nächsten liegt. Hiermit kann eine Komplexitätsreduktion erzielt werden, da nicht alle möglichen Abtastwerte berücksichtigt werden müssen, beispielsweise zur Erzeugung der Störwahrscheinlichkeitsdichte.

Gemäß Beispielen des dritten Aspekts kann der Empfänger ausgelegt sein, um in einer ersten Teilmenge von Domänen Beiträge abhängig von dem Inphaseanteil und unabhängig von dem Quadraturanteil zu gruppieren und in einer zweiten Teilmenge von Domänen Beiträge abhängig von dem Quadraturanteil und unabhängig von dem Inphaseanteil zu gruppieren, wobei die Teilmengen sich überschneiden können. Hier kann zusätzlich zur Zusammenfassung eine weiter Komplexitätsreduktion erzielt werden, da und Inphase- und Quadraturkomponente getrennt berücksichtigt werden können.

Gemäß Beispielen des dritten Aspekts kann der Empfänger ausgelegt sein, um eine Wahrscheinlichkeitsdichtefunktion ($p_{N1}(n, k)$) einer eine Detektion von Sendesymbolen eines ersten Signalanteils beeinträchtigenden Störung gemäß

$$p_{N1}(n, k) = \sum_{\lambda_I=1}^{\sqrt{\Lambda}} \sum_{\lambda_Q=1}^{\sqrt{\Lambda}} p_{DI,\lambda_I}[k] \cdot p_{DQ,\lambda_Q}[k] \cdot f_N\left(n - \left(\bar{y}_{I,\lambda_I} + j\bar{y}_{Q,\lambda_Q}\right)\right)$$

zu bestimmen; wobei k ein Zeitpunkt ist, für den die Wahrscheinlichkeitsdichtefunktion $p_{N1}$ bestimmt wird, n ein möglicher Wert oder Abtastwert ist, $\Lambda$ eine Anzahl von Domänen, in die Abtastwerte zusammengefasst sind, die durch einen mit Intersymbol-Interferenz-behafteten zweiten Signalanteil erhalten werden, $\lambda_I$ ist ein Index der Domänen in Richtung der reellen Achse, $\lambda_Q$ ist der Index der Domänen in Richtung der imaginären Achse, $p_{Oi^\wedge Ik]}$ ist eine Wahrscheinlichkeit für das Beobachten eines Abtastwert, dessen Realteil innerhalb der der Domäne X, liegt, $p_{DQi^\wedge Ql}k]$ ist eine Wahrscheinlichkeit für das beobachten eines Abtastwert, dessen Imaginärteil innerhalb der der Domäne $\lambda_Q$ liegt, $f_N$ ist eine (beispielsweise zwei-dimensionale) Wahrscheinlichkeitsdichtefunktion der komplexwertigen Rauschstörung, vorzugsweise einer komplexwertigen normalverteilten Zufallsvariable, bzw. $f_N$ ist eine Wahrscheinlichkeitsdichtefunktion einer vermuteten Rauschstörung, vorzugsweise modelliert als komplexwertige normalverteilte Zufallsvariable, $\overline{y}_{I,\lambda I}$ ist ein Repräsentant der Domäne $\lambda_I$ entlang der Realteil-Achse, $\overline{y}_{Q,\lambda Q}$ ist ein Repräsentant der Domäne $\lambda_Q$ entlang der Imaginärteil-Achse und j ist die Imaginäreinheit $j = \sqrt{-1}$ .

Gemäß Beispielen des dritten Aspekts kann der Empfänger ausgelegt sein, um Wahrscheinlichkeitsdichtefunktionen ($p_{NI2}(n_I, k)$ $p_{NQ2}(n_Q, k)$) einer eine Detektion von Sendesymbolen eines zweiten Signalanteils beeinträchtigenden Störung gemäß

$$p_{NI2}(n_I, k) = \sum_{i=1}^{M} p_{1i}[k] \cdot f_{NR}\left(n_I - \mathrm{Re}\left\{a_{1i} \cdot \mathrm{e}^{\mathrm{j}\Delta\varphi}\right\}\right)$$

für den Realteil, und

$$p_{NQ2}(n_Q, k) = \sum_{i=1}^{M} p_{1i}[k] \cdot f_{NR}\left(n_q - \mathrm{Im}\left\{a_{1i} \cdot \mathrm{e}^{\mathrm{j}\Delta\varphi}\right\}\right)$$

für den Imaginärteil, zu bestimmen; wobei k ein Zeitpunkt ist, für den die Wahrscheinlichkeitsdichtefunktion $p_{N1}$ bestimmt wird, n, ein möglicher Wert oder Signalwert in Richtung der Realteil-Achse ist, $n_Q$ ein möglicher Wert oder Signalwert in Richtung der Imaginärteil-Achse ist, $a_{1i}$ ein mögliches Sendesymbol des ersten Signalanteils, M ist die Anzahl der möglichen Sendesymbole des ersten Signalanteils, $p_{1i}[k]$ eine Wahrscheinlichkeit für Sendesymbol $a_{1i}$ zum Zeitpunkt k ist, $f_{NR}$ die Wahrscheinlichkeitsdichtefunktion einer reellwertigen, beispielsweise eindimensionalen (vermuteten) Rauschstörung, beispielsweise einer reellwertigen normalverteilten Rauschstörung, beispielsweise einer reellwertigen Zufallsvariablen, ist, Re{} den Realteil des Wertes in Klammern wiedergibt, Im{} den Imaginärteil des Wertes in Klammern wiedergibt, j ist die Imaginäreinheit $j = \sqrt{-1}$ , e die komplexe e-Funktion und $\Delta\varphi$ ein Versatz der Trägerphase für den ersten Signalanteil gegenüber der Trägerphase für den zweiten Signalanteil. Anders ausgedrückt, $f_{NR}$ kann eine Wahrscheinlichkeitsdichtefunktion einer reellwertigen vermuteten Rauschstörung, vorzugsweise modelliert als reellwertige normalverteilte Zufallsvariable, sein.

Beispiele gemäß des dritten Aspekts schaffen ein Verfahren zum Empfangen eines Kombinationssignals, das zwei separate Signalanteile aufweist, (deren (Sende- oder Empfangs-) Impulse zueinander verschoben sind). Das Verfahren umfasst ein Einstellen (bspw. ein Regeln) einer Ableitung eines komplexen Basisbandsignals (zum Beispiel eine Mischung, oder eine einem Mischer nachgeschaltete digitale Phasenkorrektur) von dem Kombinationssignal, so dass Empfangssymbole eines in Intersymbolinterferenz erzeugender Weise verarbeiteten (z.B. nach Durchgang durch ein matched Filter) Signalanteils (der nicht zu den "richtigen" Zeitpunkten abgetastet wurde), getrennt in Inphasekomponente und Quadraturkomponente behandelt werden können, beispielsweise derart, dass in dem komplexen Basisbandsignal eine Mehrzahl von Empfangssymbolen einer Konstellation des ersten Signalanteils existieren, die unterschiedliche Imaginärteile aufweisen und deren Realteile sich beispielsweise um höchstens 10% eines Empfangssymbolabstands entlang einer reellen Achse unterscheiden.

Beispiele gemäß des dritten Aspekts schaffen ein Computerprogramm mit einem Programmcode zur Durchführung des Verfahrens gemäß dem dritten Aspekt, wenn das Programm auf einem Computer abläuft.

Ein bevorzugtes Beispiel schafft einen Programmcode zur Durchführung der beschriebenen Verfahren, wenn das Programm auf einem Computer abläuft.

Die Verfahren können um alle Merkmale und Funktionalitäten, die hierhin in Bezug auf die Vorrichtungen beschrieben sind, erweitert werden.

Figurenkurzbeschreibung

Ausführungsbeispiele gemäß der vorliegenden Erfindung werden nachfolgend Bezug nehmend auf die beiliegenden Figuren näher erläutert. Es zeigen:

Fig. 1     zeigt ein Blockschaltbild eines Empfängers gemäß Ausführungsbeispielen des ersten Aspekts der Erfindung;

Fig. 2     zeigt eine schematische Darstellung eines Kommunikationssystems;

Fig. 3     zeigt ein Flussdiagramm eines Verfahrens zum Empfangen eines Kombinationssignals;

Fig. 4     zeigt eine schematische Darstellung eines Senders gemäß Ausführungsbeispielen des ersten Aspekts der Erfindung;

Fig. 5     zeigt ein Blockschaltbild eines Empfängers gemäß Ausführungsbeispielen des zweiten Aspekts der Erfindung;

Fig. 6     zeigt ein Flussdiagramm eines Verfahrens zum Empfangen eines Kombinationssignals gemäß Ausführungsbeispielen des zweiten Aspekts der Erfindung;

Fig. 7     zeigt ein Blockschaltbild eines Empfängers zum Empfangen eines Kombinationssignals gemäß Ausführungsbeispielen des dritten Aspekts der Erfindung;

Fig. 8     zeigt ein Flussdiagramm eines Verfahrens 800 zum Empfangen eines Kombinationssignals gemäß Ausführungsbeispielen des dritten Aspekts der Erfindung;

Fig. 9     zeigt eine schematische Darstellung von Funktionsblöcken bzw. Funktionalitäten eines Empfängers gemäß Ausführungsbeispielen der Erfindung;

Fig. 10     zeigt eine Signalkonstellation ohne ISI von M Empfangssignalpunkten (Beispiel 16QAM);

Fig. 11     zeigt die Signalpunkte einer Signalkonstellation bei Vorliegen von ISI ($M^L$ mögliche Punkte, zum Beispiel für Signalanteil 2) mit einer Zusammenfassung von Punkten in Domänen gemäß Ausführungsbeispielen der Erfindung von Empfangssignalpunkten;

Fig. 12     zeigt eine Mehrfachnutzung eines Kanals mit einer BPSK;

Fig. 13     zeigt eine Abtastung von zwei Empfangsimpulsen nach Durchgang durch ein Matched Filter;

Fig. 14     zeigt ein Modell einer Intersymbolinterferenzbehafteten Abtastung gemäß Ausführungsbeispielen der Erfindung gemäß Fig. 13.

Detaillierte Beschreibung der Ausführunqsbeispiele

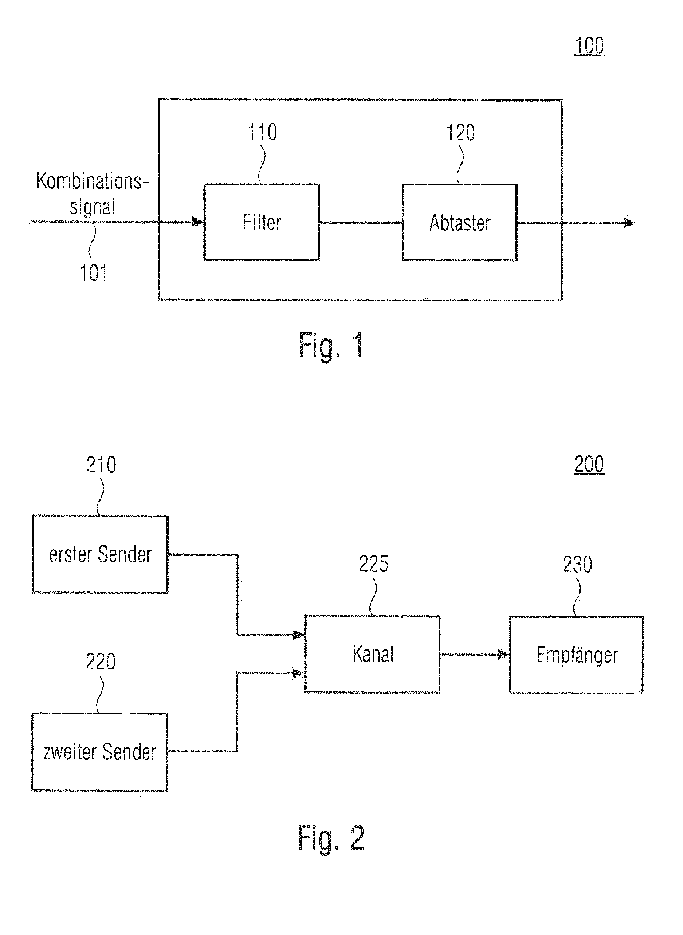

Fig. 1 zeigt ein Blockschaltbild eines Empfängers 100 gemäß Ausführungsbeispielen des ersten Aspekts der Erfindung. Der Empfänger 100 ist ausgelegt, um ein Kombinationssignal 101, das zwei separate Signalanteile aufweist, deren Impulse zueinander verschoben sind und/oder deren Trägerschwingungen eine Phasendifferenz aufweisen, zu empfangen. Der Empfänger weist einen Filter 110 auf, der an eine Sendeimpulsform der Impulse zumindest eines der Signalanteile angepasst ist. Der Empfänger 100 ist ferner ausgelegt, um Abtastzeitpunkte, zu denen ein Ausgangssignal des Filters abgetastet wird, so einzustellen, dass ein Ausgangssignalanteil des Filters, der auf einem der Signalanteile basiert, im Wesentlichen Intersymbol-Interferenz-frei abgetastet wird, beispielsweise mittels des Abtasters 120.

Eine ausführliche Beschreibung der Funktionalitäten des Empfängers 100 wird im Zusammenhang mit Weiteren im Folgenden vorgestellten Ausführungsbeispielen gegeben. Der Empfänger 100 kann um einige oder alle Merkmale und Funktionalitäten der im Folgenden vorgestellten Vorrichtungen, Systeme und Verfahren erweitert, einzeln oder in Kombination.

Fig. 2 zeigt eine schematische Darstellung eines Kommunikationssystems 200, das einen ersten Sender 210, einen zweiten Sender 220 und einen Empfänger 230 aufweist. Der Empfänger 230 entspricht in seinen Merkmalen und Funktionalitäten dem Empfänger 100. Der erste Sender 210 und der zweite Sender 220 sind jeweils ausgelegt, um Sendesymbole mit einer identischen Symboltaktrate zu senden, wobei der Symboltakt des ersten Senders und des zweiten Senders im Hinblick auf die Taktphasen beispielsweise durch Zufall oder durch eine entsprechende Einstellung so sind, dass auf Seite des Empfängers empfangene Sendesymbole des ersten Senders und empfangene Sendesymbole des zweiten Senders einen Versatz aufweisen, der einem Bruchteil einer Symboldauer entspricht, also kein ganzzahliges Vielfaches der Symboldauer (korrespondiert mit Symboltaktrate über den Kehrwert) ist. Zudem liegt beispielsweise durch Zufall oder durch eine gezielte Einstellung ein Versatz der Trägerschwingungen zwischen beiden Signalen (beispielsweise dem von dem ersten Sender 210 durch den Empfänger 230 empfangenen Signal und dem von dem zweiten Sender 220 durch den Empfänger 230 empfangenen Signal) vor. Die Wahrscheinlichkeit, dass über einen längeren Zeitraum sowohl kein Symboltaktversatz als auch kein Trägerphasenversatz vorliegt, ist verschwindend gering. Die Sender können beispielsweise nicht synchronisiert sein, der Taktphasenversatz entsteht dann beispielsweise aus den Gegebenheiten und ist zumeist nicht steuerbar. Zudem entsteht aus den Gegebenheiten (zum Beispiel Entfernungen des ersten Senders und des zweiten Senders von dem Empfänger, und oder aus dem Oszillatorversatz, und so weiter) oftmals ein Trägerphasenversatz. Wenn eines von beiden, Symboltaktversatz oder Trägerphasenversatz, vorliegt, funktioniert das hierin beschriebene Verfahren bzw. Konzept. Es versagt (nur) bei Übereinstimmung von Symboltakt und Trägerphase, was in der Praxis jedoch sehr unwahrscheinlich auftritt. Die Sender 210 und 220 senden ihre Signale in den Kanal 250, wo sie sich additiv überlagern und worüber die additive Überlagerung vom Empfänger 230 empfangen wird. Das System 200 erlaubt eine effiziente Nutzung von Kanalressourcen.

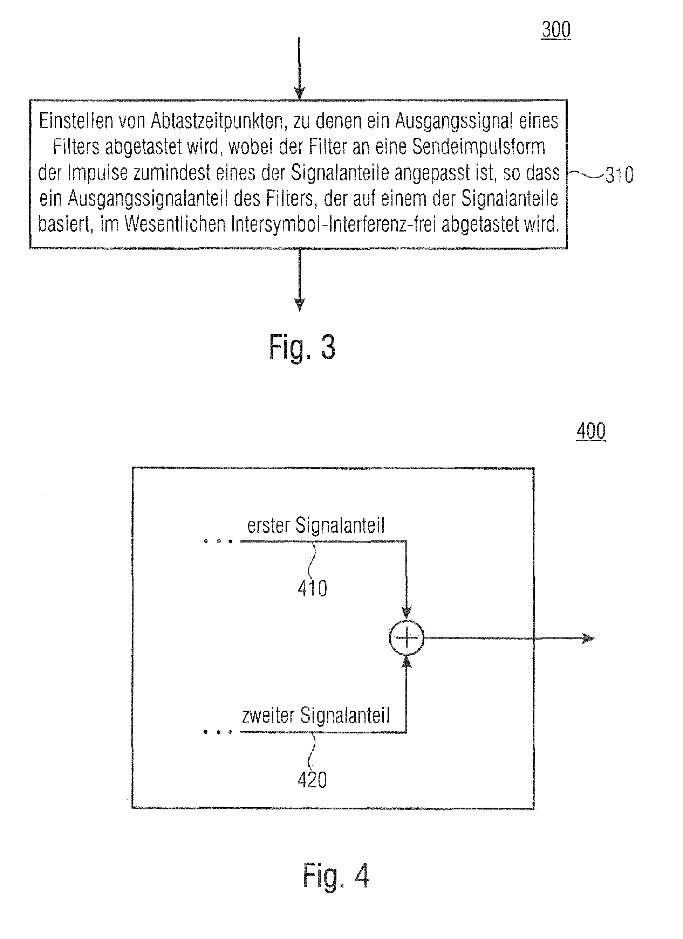

Fig. 3 zeigt ein Flussdiagramm eines Verfahrens 300 zum Empfangen eines Kombinationssignals, das zwei separate Signalanteile aufweist, deren Impulse zueinander verschoben sind und/oder deren Trägerschwingungen eine Phasendifferenz aufweisen. Das Verfahren umfasst ein Einstellen 310 von Abtastzeitpunkten, zu denen ein Ausgangssignal eines Filters, abgetastet wird, wobei der Filter an eine Sendeimpulsform der Impulse zumindest eines der Signalanteile angepasst ist, so dass ein Ausgangssignalanteil des Filters, der auf einem der Signalanteile basiert, im Wesentlichen Intersymbol-Interferenz-frei abgetastet wird.

Fig. 4 zeigt eine schematische Darstellung eines Senders 400 gemäß Ausführungsbeispielen des ersten Aspekts der Erfindung. Der Sender 400 ist ausgelegt, um ein Kombinationssignal zu senden, das zwei separate Signalanteile aufweist, deren Impulse zueinander verschoben sind. Der Sender 400 ist ferner ausgelegt, um überlagert Sendesymbole eines ersten Signalanteils 410 und Sendesymbole eines zweiten Signalanteils 420 zu senden, wobei ein Symboltakt zwischen Sendesymbolen des ersten Signalanteils 410 und des zweiten Signalanteils 420 einen zeitlichen Versatz aufweist, der zwischen 10% einer Symboldauer und 90% der Symboldauer liegt.

Im Hinblick auf die Szenarios bzw. Konfigurationen, die in den Figuren 2 und 4 gezeigt sind, sei darauf hingewiesen dass es nicht erforderlich ist, dass ein (gemeinsamer) Sender (wie in der Figur 4 gezeigt) vorliegt. Allerdings kann dies der Fall sein.

Die Signale zweier Sender, die räumlich weit auseinander liegen mögen (zum Beispiel einer in Europa und einer in den USA) überlagern sich erst im Raum als elektromagnetische Wellen (siehe das Beispiel gemäß Fig. 2; hierbei ist beispielsweise keine Synchronisation zwischen Symboltakten und/oder Trägerphasen der Sender 210,220 gegeben).

Werden die Signale 410 und 420 in einer Sendeeinrichtung 410 koordiniert erzeugt (wie in Fig. 4 gezeigt), so kann das erfindungsgemäße Konzept eingesetzt werden. Allerdings gibt es in diesem Falle auch alternative Konzepte.

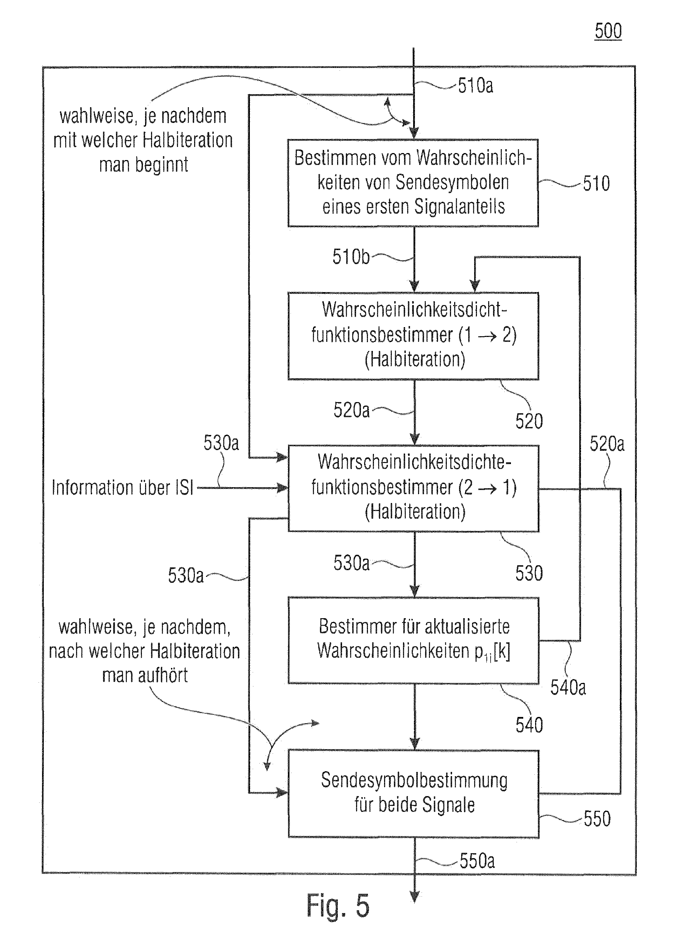

Fig. 5 zeigt ein Blockschaltbild eines Empfängers 500 gemäß Ausführungsbeispielen des zweiten Aspekts der Erfindung. Der Empfänger 500 ist ausgelegt, um ein Kombinationssignals zu empfangen, das zwei separate Signalanteile aufweist, deren Sende- oder Empfangs-Impulse zueinander verschoben sind und/oder deren Trägerphasen zueinander versetzt sind. Der Empfänger 500 ist ferner ausgelegt, um basierend auf Abtastwerten 510a (Beobachtungen; ($y[k]$)) Wahrscheinlichkeiten 510b ($p_{1_i}[k]$) von Sendesymbolen eines ersten Signalanteils für eine Mehrzahl von Abtastzeitpunkten (k) zu bestimmen, beispielsweise in Sendesymbolwahrscheinlichkeitsbestimmer 510. Der Empfänger 500 ist weiterhin ausgelegt, um eine Wahrscheinlichkeitsdichtefunktion 520a ($p_{N2}(n, k)$) einer eine Detektion von Sendesymbolen des zweiten Signalanteils beeinträchtigenden Störung (beispielsweise Interferenz und Rauschen) unter Berücksichtigung der Wahrscheinlichkeiten von Sendesymbolen des ersten Signalanteils zu bestimmen, beispielsweise in einem ersten Wahrscheinlichkeitsdichtfunktionsbestimmer 520. Ferner ist der Empfänger 500 ausgelegt, um eine Wahrscheinlichkeitsdichtefunktion 530a ($p_{N1}(n, k)$) einer eine Detektion von Sendesymbolen des ersten Signalanteils beeinträchtigenden Störung (beispielsweise Interferenz und Rauschen) unter Berücksichtigung

- der Wahrscheinlichkeitsdichtefunktion 520a ($p_{N2}(n, k)$) einer eine Detektion von Sendesymbolen des zweiten Signalanteils beeinträchtigenden Störung, und
- der Abtastwerte 510a *(y[k]),* und
- einer Information 530a über Intersymbol-Interferenz-Eigenschaften (ISI) (zum Beispiel eine Information über $y_{i \rightarrow j}$, d.h. dass der Abtastwert durch den Zustandswechsel $i \rightarrow j$ beeinflusst wird) (die Intersymbol-Interferenz ISI kann beispielsweise durch eine nicht-optimale Wahl der Abtastzeitpunkte im Hinblick auf eine Abtastung eines Ausgangssignals eines Signal-angepassten Filters zwischen benachbarten Sendesymbolen des zweiten Signalanteils entstehen)

zu bestimmen, beispielsweise in einem zweiten Wahrscheinlichkeitsdichtefunktionsbestimmer 530. Der Empfänger 500 ist weiterhin ausgelegt, um basierend auf Abtastwerten 510a (Beobachtungen; ($y[k]$)) und der Wahrscheinlichkeitsdichtefunktion 530a ($p_{N1}(n, k)$) einer eine Detektion von Sendesymbolen des ersten Signalanteils beeinträchtigenden Störung, aktualisierte Wahrscheinlichkeiten 540a ($p_{1_i}[k]$) von Sendesymbolen des ersten Signalanteils für eine Mehrzahl von Abtastzeitpunkten (k) zu bestimmen, beispielsweise in Bestimmer 540. Des Weiteren ist der Empfänger 500 ausgelegt ist, um basierend auf einer End-Wahrscheinlichkeitsdichtefunktion, beispielsweise nach einer ausreichenden Zahl von Iterationen erreichte Wahrscheinlichkeitsdichtefunktionen $p_{N1}(n, k)$ und $p_{N2}(n, k)$, Sendesymbole 550a des ersten Signalanteils und/oder des zweiten Signalanteils zu bestimmen, beispielsweise in Sendesymbolbestimmer 550. Beispielsweise anhand der aktualisierten Wahrscheinlichkeiten der Sendesymbole oder anhand von aktualisierten Wahrscheinlichkeiten von Zustandsübergängen i → j zu entscheiden, welches Sendesymbol mit höchster Wahrscheinlichkeit gesendet wurde.

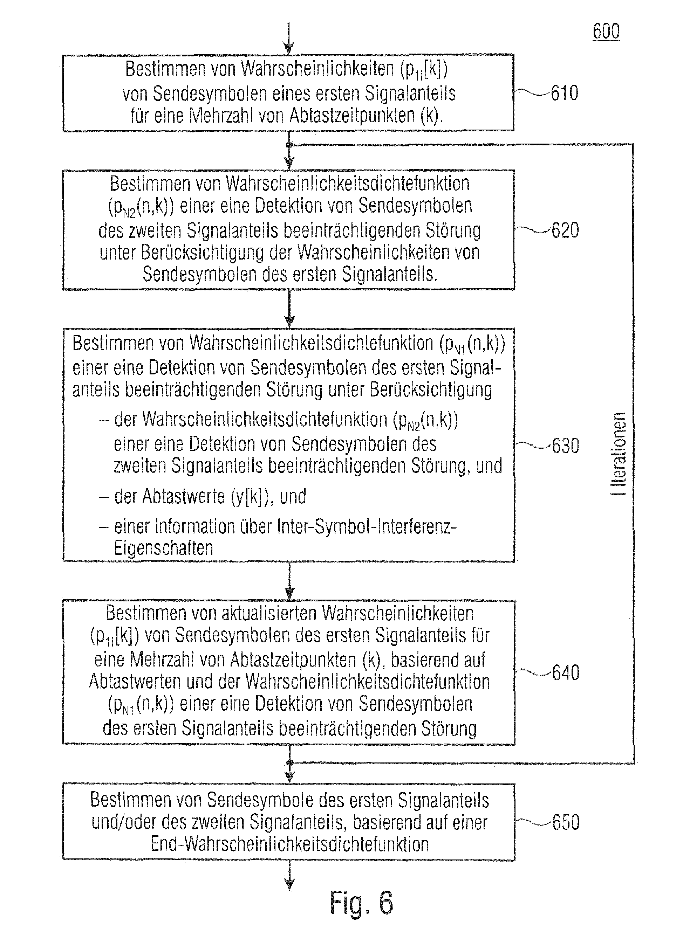

Fig. 6 zeigt ein Flussdiagramm eines Verfahrens 600 zum Empfangen eines Kombinationssignals , das zwei separate Signalanteile aufweist, deren (Sende- oder Empfangs-) Impulse zueinander verschoben sind und/oder einen Versatz von Trägerschwingungen aufweisen, gemäß Ausführungsbeispielen des zweiten Aspekts der Erfindung. Des Verfahren umfasst ein Bestimmen 610 (bspw. basierend auf Abtastwerten; Beobachtungen; ($y[k]$)) von Wahrscheinlichkeiten ($p_{1_i}[k]$) von Sendesymbolen eines ersten Signalanteils für eine Mehrzahl von Abtastzeitpunkten (k). Das Verfahren 600 weist weiterhin ein Bestimmen 620 einer Wahrscheinlichkeitsdichtefunktion ($p_{N2}(n, K)$) einer eine Detektion von Sendesymbolen des zweiten Signalanteils beeinträchtigenden Störung (bspw. Interferenz und Rauschen) unter Berücksichtigung der Wahrscheinlichkeiten von Sendesymbolen des ersten Signalanteils. Ferner weist das Verfahren 600 ein Bestimmen 630 einer Wahrscheinlichkeitsdichtefunktion ($p_{N1}(n, k)$) einer eine Detektion von Sendesymbolen des ersten Signalanteils beeinträchtigenden Störung (bspw. Interferenz und Rauschen) unter Berücksichtigung

- der Wahrscheinlichkeitsdichtefunktion ($p_{N2}(n, k)$) einer eine Detektion von Sendesymbolen des zweiten Signalanteils beeinträchtigenden Störung, und
- der Abtastwerte (y[k]), und
- einer Information über Intersymbol-Interferenz-Eigenschaften (zum, Beispiel eine Information über $y_{i→j}$, wobei die Inter-Symbol-Interferenz durch eine nicht-optimale Wahl der Abtastzeitpunkte im Hinblick auf eine Abtastung eines Ausgangssignals eines Signal-angepassten Filters zwischen benachbarten Sendesymbolen des zweiten Signalanteils entstehen kann),

auf. Des Verfahren 600 umfasst ferner ein Bestimmen 640 von aktualisierten Wahrscheinlichkeiten ($p_{1_i}[k]$) von Sendesymbolen des ersten Signalanteils für eine Mehrzahl von Abtastzeitpunkten (k), basierend auf Abtastwerten (Beobachtungen; ($y[k]$)) und der Wahrscheinlichkeitsdichtefunktion ($p_{N1}(n, k)$) einer eine Detektion von Sendesymbolen des ersten Signalanteils beeinträchtigenden Störung. Des Weiteren umfasst das Verfahren 600 ein Bestimmen 650 von Sendesymbole des ersten Signalanteils und/oder des zweiten Signalanteils [Beispielsweise anhand der aktualisierten Wahrscheinlichkeiten der Sendesymbole oder anhand von aktualisierten Wahrscheinlichkeiten von Zustandsübergängen i → j zu entscheiden, welches Sendesymbol mit höchster Wahrscheinlichkeit gesendet wurde], basierend auf einer End-Wahrscheinlichkeitsdichtefunktion, beispielsweise eine nach ausreichenden Iterationen erreichte Wahrscheinlichkeitsdichtefunktion $p_{N1}(n, k)$ und/oder $p_{N2}(n, k)$.

Es sei darauf hingewiesen, dass das Verfahren auch ohne Symboltaktverschiebung funktionier, beispielsweise nur bei einer hinreichenden Differenz der Phasen der Trägerschwingungen. Allerdings funktioniert das Verfahren bei Symboltaktversatz oftmals besser.

Auch sei darauf hingewiesen, dass bei diesen Verfahren die Iterationsschritte zur Bestimmung der Wahrscheinlichkeitsdichtefunktionen $p_{N1}(n,k)$ und $p_{N2}(n,k)$ auch in umgekehrter Reihenfolge begonnen werden könnten, also zuerst Bestimmung von $p_{N1}(n,k)$ und dann erst darauf aufbauend $p_{N2}(n,k)$ etc. Für beide Fälle des Einstiegs in die iterative Bestimmung und Verbesserung von $p_{N1}(n,k)$ und $p_{N2}(n,k)$ funktioniert das Verfahren.

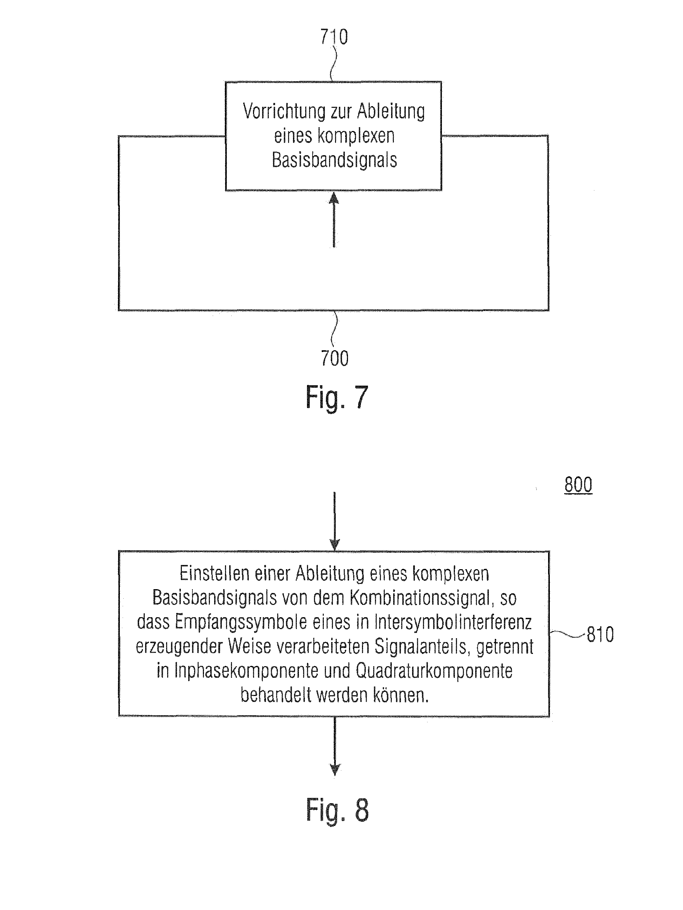

Fig. 7 zeigt ein Blockschaltbild eines Empfängers 700 zum Empfangen eines Kombinationssignals, das zwei separate Signalanteile aufweist, gemäß Ausführungsbeispielen des dritten Aspekts der Erfindung. Die (Sende- oder Empfangs-) Impulse der Signalanteile des Kombinationssignals können zueinander verschoben sein. Der Empfänger 700 ist ausgelegt, um eine Vorrichtung 710 zur Ableitung eines komplexen Basisbandsignals (zum Beispiel eine Mischung, oder eine einem Mischer nachgeschaltete digitale Phasenkorrektur) von dem Kombinationssignal so einzustellen (bspw. zu regeln), dass Empfangssymbole eines in Intersymbolinterferenz erzeugender Weise verarbeiteten (z.B. durch nach Durchgang durch ein matched Filter nicht zu den "richtigen" Zeitpunkten abgetasteten) Signalanteils, getrennt in Inphasekomponente und Quadraturkomponente behandelt werden können. Beispielsweise derart, dass in dem komplexen Basisbandsignal eine Mehrzahl von Empfangssymbolen einer Konstellation des ersten Signalanteils existieren, die unterschiedliche Imaginärteile aufweisen und deren Realteile sich beispielsweise um höchstens 10% eines Empfangssymbolabstands entlang einer reellen Achse unterscheiden.

Fig. 8 zeigt ein Flussdiagramm eines Verfahrens 800 zum Empfangen eines Kombinationssignals, das zwei separate Signalanteile aufweist, deren (Sende- oder Empfangs-) Impulse zueinander verschoben sein können, gemäß Ausführungsbeispielen des dritten Aspekts der Erfindung. Das Verfahren 800 umfasst ein Einstellen 810 (bspw. ein Regeln) einer Ableitung eines komplexen Basisbandsignals (zum Beispiel eine Mischung, oder eine einem Mischer nachgeschaltete digitale Phasenkorrektur) von dem Kombinationssignal, so dass Empfangssymbole eines in Intersymbolinterferenz erzeugender Weise verarbeiteten (z.B. nach Durchgang durch ein matched Filter nicht zu den "richtigen" Zeitpunkten abgetasteten) Signalanteils, getrennt in Inphasekomponente und Quadraturkomponente behandelt werden können. Beispielsweisel derart, dass in dem komplexen Basisbandsignal eine Mehrzahl von Empfangssymbolen einer Konstellation des ersten Signalanteils existieren, die unterschiedliche Imaginärteile aufweisen und deren Realteile sich um beispielsweise höchstens 10% eines Empfangssymbolabstands entlang einer reellen Achse unterscheiden.

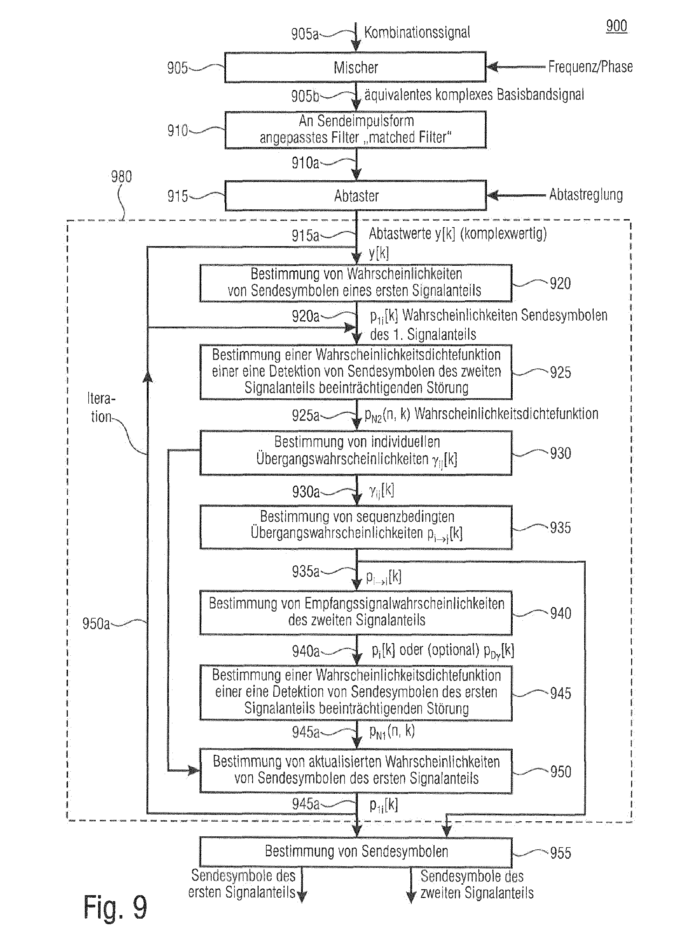

Fig. 9 zeigt eine schematische Darstellung von Funktionsblöcken bzw. Funktionalitäten eines Empfängers 900 gemäß Ausführungsbeispielen der Erfindung. Der Empfänger 900 weist Merkmale und Funktionalitäten auf, die einzeln oder in Kombination in die Empfänger 100, 230, 500 und 700 übernommen werden können. Eine Kernfunktionalität, bei der die für eine Bestimmung von Sendesymbolen erforderlichen Wahrscheinlichkeitsinformationen hergeleitet werden, ist in einem Block 980 gezeigt.

Der Empfänger umfasst einen Mischer 905, der ein äquivalentes komplexes Basisbandsignal 905b erzeugt, basierend auf dem Kombinationssignal 905a. Der Empfänger 900 weist ein an eine Sendeimpulsform, eines der Signalanteile des Kombinationssignal 905a, angepasstes Filter 910 und einen Abtaster 915 auf. Der Abtaster 915 stellt Abtastwerte 915a bereit, basierend auf dem Filterausgang 910a. Der Empfänger 900 weist ferner einen ersten Bestimmer 920 auf, der ausgelegt ist, um basierend auf den Abtastwerten 915a Wahrscheinlichkeiten 920a $p_{1i}[k]$ von Sendesymbolen des ersten Signalanteils zu bestimmen. Der Empfänger 900 weist einen zweiten Bestimmer 925 auf, der ausgelegt ist, um basierend auf den Wahrscheinlichkeiten 920a eine Wahrscheinlichkeitsdichtefunktion 925a einer eine Detektion von Sendesymbolen des zweiten Signalanteils beeinträchtigenden Störung zu bestimmen. Der Empfänger 900 weist einen dritten Bestimmer 930 auf, der ausgelegt ist, um basierend auf der Wahrscheinlichkeitsdichtefunktion 925a und den Abtastwerten 915a, allgemeine Übergangswahrscheinlichkeiten 930a ($\gamma_{ij}[k]$) für ein Zustandsautomatenmodell der Signalerzeugung zu bestimmen. Der Empfänger 900 weist einen vierten Bestimmer 935 auf, der ausgelegt ist um basierend auf den allgemeinen Übergangswahrscheinlichkeiten 930a sequenzbedingte Übergangswahrscheinlichkeiten 935a zu bestimmen. Der Empfänger 900 weist einen fünften Bestimmer 940 auf, der ausgelegt ist, um basierend auf den sequenzbedingten Übergangswahrscheinlichkeiten 935a, Empfangssignalwahrscheinlichkeiten 940a $p_i[k]$ (oder $p_{D\lambda}[k]$) des zweiten Signalanteils zu bestimmen. Der Empfänger 900 weist einen sechsten Bestimmer 945 auf, der ausgelegt ist, um basierend auf den Empfangssignalwahrscheinlichkeiten 940a, eine Wahrscheinlichkeitsdichtefunktion 945a $p_{N1}(n, k)$ eines einer Detektion von Sendesymbolen des erstens Signalanteils beeinträchtigende Störung zu bestimmen. Der Empfänger 900 weist einen siebten Bestimmer 950 auf, der ausgelegt ist, um basierend auf den Abtastwerten 915a und der Wahrscheinlichkeitsdichtefunktion 945a, aktualisierte Wahrscheinlichkeiten 950a $p_{l i}[k]$ von Sendesymbolen des ersten Signalanteils zu bestimmen. Der Empfänger weist einen achten Bestimmer 955 auf, der ausgelegt ist, um basierend auf den sequenzbedingten Übergangswahrscheinlichkeiten 935a oder den Wahrscheinlichkeiten 950a, Sendesymbole des ersten oder des zweiten Signalanteils zu bestimmen.

Der Mischer 905 kann ein Signal mit einer hohen Trägerfrequenz heruntermischen, so dass eine weitere Verarbeitung mit digitalen Mitteln möglich ist. Der Mischer kann optional so eingestellt werden, dass ein Signalanteil des Kombinationssignal Trägerphasenrichtig moduliert wird. Vorzugsweise wird hierzu der Signalanteil herangezogen, der im Folgenden Intersymbol-Interferenz-behaftet abgetastet wird, um eine Entgegenwirkung der Intersymbol-Interferenz zu erleichtern, beispielsweise durch getrennte Verarbeitbarkeit von Inphase- und Quadraturkomponente. Das angepasste Filter ist in der Regel ein "matched filter" und seine Impulsform entspricht in der Regel einem in einem der Sender genutzten Filter. Häufig wird dieser mit einem Tiefpass kombiniert bzw. funktioniert als Bandpass. Der Abtaster 915 wird bevorzugt mittels der Abtastreglung so eingestellt, dass ein Signalanteil (z.B. der erste Signalanteil) Intersymbol-Interferenz-frei abgetastet wird, d.h. ein Impuls des Intersymbol-Interferenz-frei abgetasteten Signalanteils liefert nur zu einem Abtastzeitpunkt einen von 0 wesentlich verschiedenen Wert. Der andere Signalanteil wird in der Regel Intersymbol-Interferenz-behaftet empfangen und fließt so in die Abtastwerte 915a ein. Diese Trennung von Intersymbol-Interferenz-Behaftung und Intersymbol-Interferenz-Freiheit und/oder ein Versatz der Phasen der Trägerschwingungen ermöglicht eine spätere Trennung der Signalanteile und einen folglichen Empfang. Der Bestimmer 920 bestimmt (für eine erste Iteration) ausgehend von den Abtastwerten 915a (und beispielsweise unter der Annahme von Gauß-verteiltem Kanalrauschen), die Wahrscheinlichkeit der möglichen Sendesymbole des ersten Signalanteils, der Intersymbol-Interferenz-frei abgetastet wurde. Der Bestimmer 925 bestimmt aus den Wahrscheinlichkeiten 920a eine Störung des ersten Signalanteils auf den zweiten Signalanteil (beispielsweise wieder unter der Annahme von Gauß-verteiltem Kanalrauschen; das Modell der Rauschstörung ist aber grundsätzlich ganz beliebig; wenn man nichts weiß (also keine genauere Kenntnis über das Rauschen hat), nimmt man eine Normalverteilung an, ansonsten ein etwas Genaueres (beispielsweise eine von einer Normalverteilung abweichende Modellierung)). Die Wahrscheinlichkeitsdichtefunktion 925a kann dann im Bestimmer 930 Verwendung finden, um Wahrscheinlichkeiten von möglichen Intersymbol-Interferenz-bedingten Beiträgen zu den Abtastwerten 915a zu bestimmen, die von dem zweiten Signalanteil stammen. Hierzu werden mögliche Beiträge eines Zustandsmodells, der in Form eines Filters mit endlicher Impulsantwort modelliert wird, zu dem Abtastwert betrachtet. Zustände des Zustandsmodells beschreiben aktuelle und vorherige Sendesymbole des zweiten Signalanteils, und werden zur Modellierung der Intersymbol-Interferenz herangezogen. Hierzu werden allgemeine Übergangswahrscheinlichkeiten 930a im Bestimmer 930 erzeugt, die genutzt werden können, um beispielsweise ein Trellis-Decodierverfahren anzuwenden, um die Zustände des Zustandsmodells zu bestimmen. Abhängig von den allgemeinen Übergangswahrscheinlichkeiten 930a können (beispielsweise unter Verwendung eines BCJR-Algorithmus) Vorwärts- und Rückwärtswahrscheinlichkeiten bestimmt werden, um eine Sequenz von Sendesymbolen zu bestimmen. In Bestimmer 935 werden die sequenzbedingten Übergangswahrscheinlichkeiten 935a bestimmt, die aussagen, wie wahrscheinlich ein Übergang von Zustand i nach j zum Zeitpunkt k ist. Diese sequenzbedingten Wahrscheinlichkeiten können maximiert werden über alle k um die Sendesymbole des zweiten Signalanteils zu bestimmen, dies ist allerding nur optional und wird bevorzugt erst dann angewandt, wenn mehrere Iterationen durchgeführt worden sind, um die sequenzbedingten Übergangswahrscheinlichkeiten 935 zu bestimmen. Der Bestimmer 940 bestimmt die Wahrscheinlichkeiten für die möglichen Beiträge des zweiten Signalanteils zu einem Abtastwert 915a, hierzu ist kein Wissen über die Sendesymbole des zweiten Signalanteils nötig, da allein die möglichen Ausgänge des Zustandsmodell betrachtet werden. Hierdurch werden Empfangssignalwahrscheinlichkeiten 940a des zweiten Signalanteils bestimmt, die in dem Bestimmer 945 genutzt werden können, um eine Störung ausgehend von dem zweiten Signalanteil auf den ersten Signalanteil mit einer Wahrscheinlichkeitsdichtefunktion 945a zu beschreiben. Mittels der Wahrscheinlichkeitsdichtefunktion 945a kann eine verbesserte Schätzung für die Sendesymbole des ersten Signalanteils erzielt werden und anschließend genutzt werden, um in einer weiteren Iteration das Decodierergebnis zu verbessern, d.h. neue Wahrscheinlichkeitsdichtefunktionen 925a und 945a zu erhalten.

Ausgehend von den Wahrscheinlichkeiten 920a, 950a und/oder 935a kann der Bestimmer 955 die Sendesymbole für den ersten und/oder zweiten Signalanteil wählen, die aufgrund der genannten Wahrscheinlichkeiten am wahrscheinlichsten gesendet worden sind. Dies kann beispielsweise dann durchgeführt werden wenn eine bestimmte Anzahl an Interationen erreicht wurde oder keine oder nur noch marginale Änderungen der Wahrscheinlichkeitsdichten 925a oder 945a von einer Iteration auf die andere mehr stattfinden.

Somit wird dadurch, dass das jeweils andere Signal als Störung betrachtet und mit einer Wahrscheinlichkeitsdichteverteilung modelliert wird eine iterative Verbesserung der Schätzungen ermöglicht. Im Hinblick auf den Intersymbol-Interferenz-behafteten Signalanteil ist in den Zwischenschritten keine Bestimmung der Sendesymbolwahrscheinlichkeiten von Nöten und wird daher bevorzugt nicht durchgeführt. Vielmehr ist beispielsweise für die Decodierung des ersten Signalanteils lediglich zu bestimmen, welche Beiträge zu Abtastwerten der zweite Signalanteil liefert (wobei verschiedene Sequenzen von Sendesymbolen des zweiten Signalanteils den gleichen oder ähnlichen Beitrag zum Abtastwert liefern kann), und mit welchen Wahrscheinlichkeiten diese Beiträge zu erwarten sind. Hierzu sind beispielsweise in dem BCJR-Algorithmus die Wahrscheinlichkeiten für die Zustandsübergänge zu addieren, denen gleiche oder ähnliche hypothetische Nutzsignalwerte zugeordnet sind. Damit kann die Komplexität gering gehalten werden.

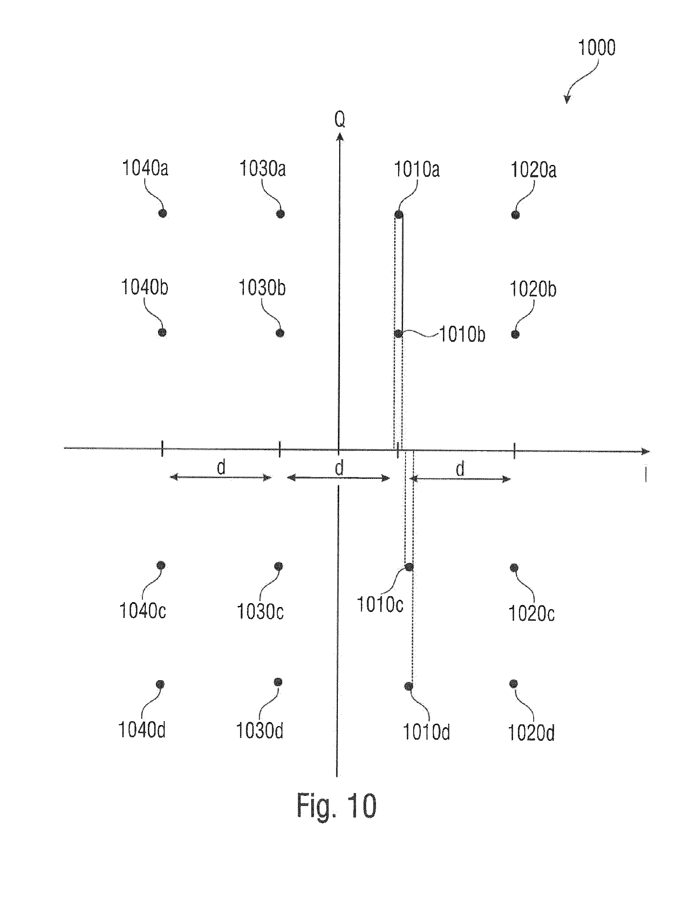

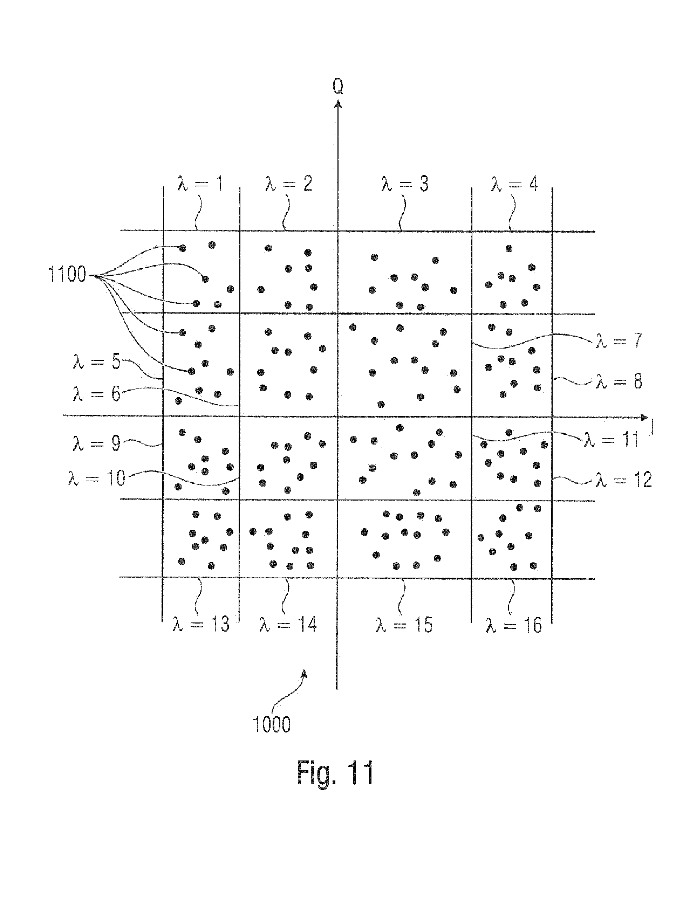

Weitere Verbesserungen bzw. Verringerungen der Komplexität können (optional) einerseits durch das anhand in Fig. 10 beschriebene Konzept zum getrennten verarbeiten von Inphase- und Quadraturkomponente und andererseits durch eine geeignete Einteilung von Beiträgen des zweiten Signalanteils zu Abtastwerten in Domänen, wie sie beispielsweise anhand der Fig. 11 gezeigt ist, erzielt werden.

Fig. 10 zeigt anhand einer Signalkonstellation 1000 eines 16-QAM Symbolalphabets ein Konzept gemäß Ausführungsbeispielen des dritten Aspekts der Erfindung. Die Signalkonstellation 1000 (bei der es sich um mögliche Empfangssymbole des ersten Signalanteils und auch des zweiten Signalanteils, dieser jedoch ohne Berücksichtigung von Intersymbolinterferenz handelt) ist in Inphase- und Quadraturkomponenten aufgezeichnet, die Inphase- und Quadraturkomponenten können auch als Realteil-Werte und Imaginärteil- Werte in der komplexen Ebene (mit einer Realteil-Achse und einer Imaginärteil-Achse) verstanden werden. Die Signalpunkte 1010a-d, 1020a-d, 1030a-d und 1040a-d sind entlang der Realteil-Achse und entlang der Imaginärteil-Achse mindestens einen Symbolabstand d±10% entfernt. Durch Trägerphasensynchronisation (die beispielsweise durch eine geeignete Einstellung von Mischer 905 erzielt werden kann) sind die Signalpunkte 1010a-d, 1020a-d, 1030a-d und 1040a-d so eingestellt, dass sie höchstens um 10% von Gitterpunkten abweichen, wobei die Gitterpunkte auf Linien liegen, die im Wesentlichen parallel zur Realteil-Achse oder Imaginärteil-Achse sind. Im Beispiel von QAM ist die QAM-Konstellation der Empfangssymbole beispielsweise mit einer Abweichung von höchstens 10°, 5° oder 2° (je nach Größe der Konstellation oder Symbolabstand) parallel zu den Achsen ausgerichtet. Damit kann eine getrennte Verarbeitung von Inphase- und Quadraturkomponente der Empfangssignale durchgeführt werden.

Beispielsweise kann eine getrennte Verarbeitung der Inphase- und Quadraturkomponente in den Blöcken 925 bis 945 durchgeführt werden. So kann die Wahrscheinlichkeitsdichtefunktion einer eine Detektion von Sendesymbolen des zweiten Signalanteils beeinträchtigenden Störung getrennt im Hinblick auf Inphase- und Quadraturkomponente bestimmt werden (Bestimmung von $p_{NI2}(n_I, k)$, $p_{NQ2}(n_Q, k)$ an Stelle von $p_{N2}(n, k)$ in Block 925). Die Berechnungen in Blöcken 930, 935 und 940 können ebenso getrennt nach Inphase- und Quadraturkomponente durchgeführt werden, da aufgrund der Trägerphasensynchronisation davon ausgegangen werden kann, dass Intersymbol-Interferenz nur einerseits zwischen Inphase-Anteilen und andererseits zwischen Quadratur-Anteilen erfolgt, ohne Überkoppelung von Inphasekomponente auf Quadraturkomponente oder umgekehrt. Damit wird die Komplexität der Schritte 930 bis 945 wesentlich verringert, da separate Intersymbol-Interferenz-Modellierung für Inphase-Anteile und Quadratur-Anteile durchgeführt wird (wodurch die Anzahl an möglichen Zuständen bzw. Zustandsfolgen gerade bei höheren Konstellation ganz deutlich abnimmt). Aufgrund der Bestimmung von Wahrscheinlichkeiten von Inphasebeiträgen und Quadraturbeiträgen des zweiten Signalanteils zu Abtastwerten kann somit eine Wahrscheinlichkeitsdichtefunktion ($p_{N1}(n, k)$) ermittelt werden (beispielsweise gemäß Gleichung 8). Eine Domänenbildung kann optional separat im Hinblick auf Inphaseanteile und Quadraturanteile durchgeführt werden, wie beispielsweise auch in Gleichung 8 gezeigt ist.

Fig. 11 zeigt zur Erläuterung eine Signalkonstellation 1100 mit einer Gruppierung bzw. Domänenbildung von Empfangssignalpunkten (nun mit Berücksichtigung von Intersymbolinterferenz) gemäß Ausführungsbeispielen der Erfindung. Der Signalkonstellation 1100 liegt ein Symbolalphabet einer 16-QAM zugrunde. Diese führen empfangsseitig zu einer Mehrzahl ($M^L$) von möglichen Empfangssignalpunkten (Beiträgen zu den Abtastwerten zu einem Abtastzeitpunkt) aufgrund von Intersymbolinterferenz. Ähnliche Empfangssignalpunkte 1110 werden beispielsweise durch das gleiche aktuelle Sendesymbol aber unterschiedliche frühere Sendesymbole bewirkt, auf der andere Seite können sich bei entsprechender Intersymbol-Interferenz Konstellationspunkte, denen das gleiche aktuelle Sendesymbol zugrunde liegt, ganz deutlich unterscheiden. Weiterhin können ähnliche Empfangssignalpunkte 1110 zu Domänen mit Index $\lambda$ zusammengefasst werden. In der Signalkonstellation ist dies mit den Indices $\lambda = 1, ...,16$ gekennzeichnet. Dies erleichtert eine Erzeugung der Wahrscheinlichkeitsdichte $p_{N1}(n, k)$ einer eine Detektion von Sendesymbolen des ersten Signalanteils beeinträchtigenden Störung, da nicht mehr jeder einzelne mögliche Empfangssignalpunkt zur Berechnung genutzt wird, sondern ein Repräsentant gewählt werden kann und dieser entsprechend der Auftrittswahrscheinlichkeiten der in der Domäne zusammengefassten Empfangssignalpunkte gewichtet werden kann. In Block 940 kann somit statt einzelnen Empfangssignalpunktwahrscheinlichkeiten $p_I[k]$ Wahrscheinlichkeiten von Domänen $p_{D\lambda}[k]$ für Block 945 bereitgestellt werden. Diese können beispielsweise gemäß Gleichung 7 oder optional getrennt in Inphase- und Quadraturanteil berücksichtigt werden gemäß Gleichung 8.

## Weitere Aspekte und Schlussfolgerungen

Die hierin beschriebenen Konzepte erlauben insbesondere bei zwei gleichartigen Datensignalen mit nahezu gleicher Empfangsleistung eine wirksame Trennung bei handhabbarem Aufwand. Als Beispiel für einen Anwendungsfall kann die doppelte Nutzung von Satelliten-Transponderkanälen durch zwei Signale ("Double Talk Carrier in Carrier-Verfahren") bei Empfang an einem dritten Standort angegeben werden, an dem eine Subtraktion des eigenen Sendesignals vom Summensignal, das vom Satelliten abgestrahlt wird, nicht möglich ist.

Im Folgenden werden Vorschläge für aufwandsgünstige Empfänger für zwei überlagerte Datensignale besprochen und zuerst die Ausgangslage behandelt.

Es wird nachfolgend davon ausgegangen, dass beide überlagerten Signale mit in etwa gleicher Leistung empfangen werden, und dass, wie bei der digitalen Pulsamplituden-Modulation (PAM) üblich, sendeseitig sog. Square-Root-Nyquist-Impulse verwendet werden.

Es sei angemerkt, dass hier unter dem Oberbegriff PAM alle digitalen Übertragungsverfahren verstanden werden, welche im äquivalenten komplexen Basisband (equivalent complex baseband: ECB) mittels der Gleichung für das Sendesignal

$$s(t) = \sum_{k=-\infty}^{\infty} a[k]\, g_T(t - kT) \quad \text{mit} \quad (1)$$

$a[k] \in A$ : Datentragender Amplitudenkooffizient
$A$ : Signalkonstellation
$g_T(t)$ : Sendeimpulsform
$T$ : Symbolintervalldauer ($1/T$: Baudrate)

beschrieben werden können. Dies schließt die Verfahren Amplitude-Shift-Keying (ASK: $a[k] \in \mathbb{R}$), Phase-Shift-Keying (PSK: $a[k] \in \mathbb{C}$, $|a[k]| = const$) und Quadrature-Amplitude-Modulation (QAM: $a[k] \in \mathbb{C}$) sowie alle Mischformen, ohne oder mit differentieller Vorcodierung etc. mit ein.

Für beide Signale kann (zumindest näherungsweise) die gleiche Baudrate $1/T$ bzw. das gleiche Symbolintervall T und die gleiche Trägerfrequenz vorliegen.

Im Folgenden werden Empfangsfilter und Symboltaktsychronisation besprochen.

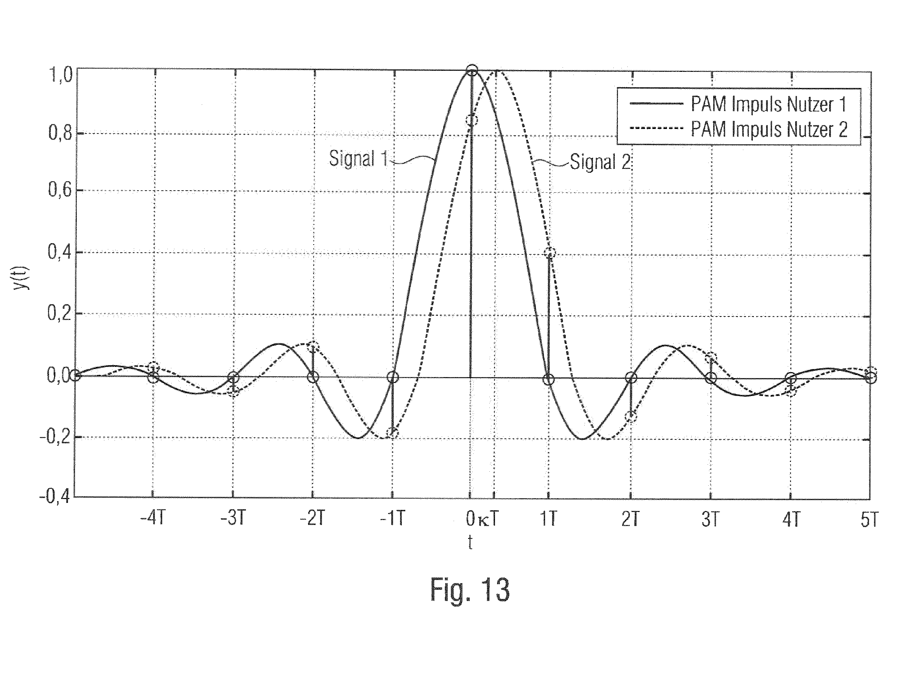

Es wird vorgeschlagen als Empfangsfilter 910 vor der Datendetektion, d.h. einer Abtastung 915 im Symboltakt 1/*T*, wie beim Einzelsignalempfang üblich, das passende signalangepasste Filter (Matched-Filter) (vorzugsweise ebenfalls mit einer Square-Root-Nyquist-Funktion als Impulsantwort) zum Sendeimpuls eines der beiden Signale zu verwenden, wodurch eine Nyquist-Gesamtimpulsform erzeugt wird, und in der Symboltaktsynchronisation die Taktphase (beispielsweise der Abtastung 915) so zu regeln, dass dieses Signal, nachfolgend als Signal 1 bezeichnet, zu den optimalen Zeitpunkten im Symboltakt, also ISI-frei, abgetastet wird. Gegebenenfalls ist hierfür eine lineare, adaptive Null-erzwingende (Zero-Forcing-; ZF-) Entzerrung für das Signal 1 vorzusehen. Das andere Signal (Signal 2) wird dabei zwar ebenfalls weitgehend optimal rauschbandbegrenzt, es wird jedoch bis auf Sonderfälle nicht zu den richtigen Zeitpunkten im Symboltakt abgetastet. Somit ist dieses Signal nach der Abtastung im Symboltakt 1/*T* durch ISI gekennzeichnet, siehe Fig. 13. Fig. 13 zeigt Detektionsimpulse für beide Signale nach einer ISI-freien Entzerrung (Lineare Zero-Forcing-(ZF) Entzerrung) für das Signal 1.

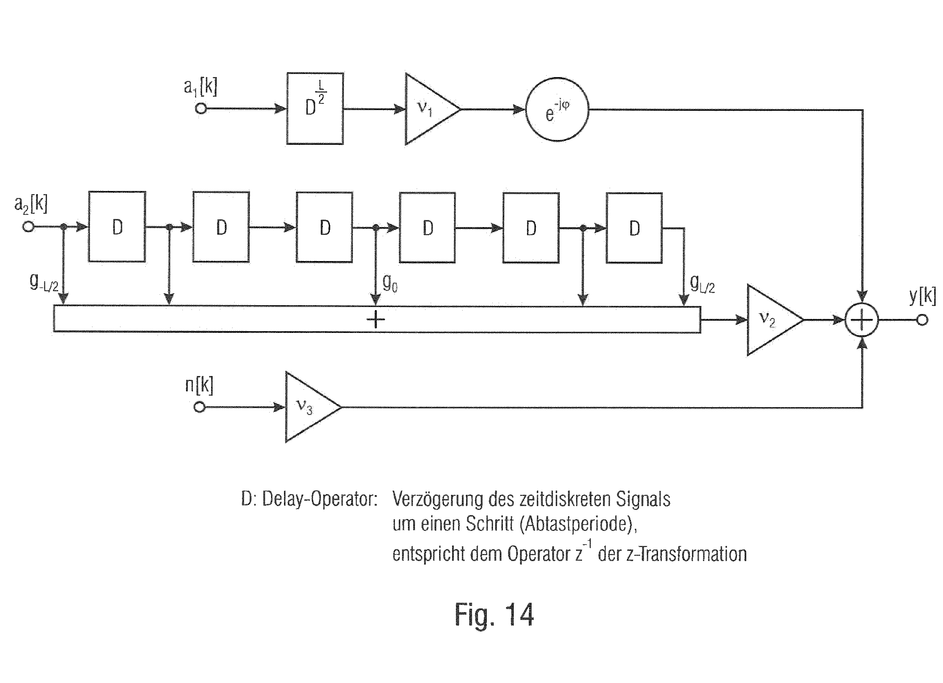

Insgesamt ergibt sich somit für den Zwei-Nutzer-Empfänger das Ersatzschaltbild gemäß Fig. 14 für die Erzeugung des zeitdiskreten Empfangssignals. In Fig. 14 ist ein Ersatzschaltbild für ein zeitdiskretes Empfangssignal nach einer phasenrichtigen Abtastung von Signal 1 im Symboltakt bei einer Überlagerung zweier gleichartiger Signal gezeigt.

Ein Vorteil dieser Wahl von Empfangsfilter und Abtastphase besteht darin, dass ISI nur für eines der beiden Signale auftritt und somit eine gemeinsame Maximum-Likelihood-Detektion (Maximale-Wahrscheinlichkeit-Detektion) für beide Symbolsequenzen $a_1[k]$ und $a_2[k]$ mit Hilfe eines Viterbi-Algorithmus mit nur $M^{L-1}$ Zuständen anstelle von $(M^2)^{L-1}$ bei der Vorfilterung gemäß dem Stand der Technik erlaubt, siehe Fig. 14. Umfangreiche Untersuchungen haben ergeben, dass auf diese Weise für $L \geq 4$; $M \geq 4$, weit geringere Zustandszahlen erreichbar sind als bei einer Kompromissentzerrung für beide Signale. Diese Wahl von Empfangsfilter und Symboltaktphase für Signal 1 wird nachfolgend vorausgesetzt.

Im Folgenden wird ein iteratives Verfahren durch Modifikation des BCJR-Algorithmus vorgestellt.

Werden für beide Sendesignale Kanalcodierungsverfahren (z.B. Faltungscodes) eingesetzt und sollen diese bei der Detektion beider Signale mittels eines gemeinsamen Trellis-Decodierverfahrens zur Steigerung der Leistungseffizienz ausgenutzt werden, so kann trotz der ISI-freien Entzerrung des ersten Signals die Zustandszahl eines die Erzeugung des Empfangssignals aus beiden Informationssequenzen beschreibenden Mealy-Automaten rasch nicht mehr handhabbare Größenordnungen erreichen. Als Lösung bietet sich hierzu ein iterativer Multi-User-Empfänger an, für den hier eine vereinfachte und zugleich nahe am Optimum arbeitende Variante vorgeschlagen wird.

Bei iterativen Verfahren werden jeweils die Einzelsignale für sich decodiert bzw. detektiert, wobei das jeweils andere Signal als Störung betrachtet wird. Im Gegensatz zum Stand der Literatur wird hier ein modifiziertes Störmodell vorgeschlagen, in welchem die bisher gewonnene Information über die Datensymbole des jeweils einen Signals in optimaler Form für das jeweils andere Signal verwertet wird (beispielsweise in den Blöcken 925 und 945).

Dabei wird wiederum vom Systemmodell nach Fig. 14 ausgegangen, d.h. das Signal 1 sei ISI-frei abgetastet, während für Signal 2 ISI infolge einer "falschen" (nicht an den zweiten Signalanteil angepassten) Abtastphase zu berücksichtigen ist.

Im Folgenden wird die Interferenz von Signal 1 auf Signal 2 behandelt:

Bei Verfahren gemäß dem Stand der Literatur werden bei uncodierter Übertragung, bzw. bei codierter Übertragung analog zum nachfolgenden Abschnitt, nach einer symbolweisen Bestimmung individueller Symbolwahrscheinlichkeiten (sog. soft-output Decodierung) für die $M_1$ verschiedenen Signalpunkte $a_{1i}, i \in \{1, \ldots, M_1\}$ des Signals 1 a-posteriori Wahrscheinlichkeiten $p_{1i}[k] = \Pr(A_1[k] = a_{1i})$ (mit $A_1[k]$: Zufallsvariable für Amplitudenkoeffizienten $a_1[k]$) für jeden Modulationsschritt k bestimmt.

Bei einer **codierten** Übertragung wären hierzu aufwändige Prozesse der gewichteten Re-Codierung und Re-Modulation notwendig, was Näherungen erfordert und/oder sehr komplex werden kann.

Im Gegensatz hierzu wird gemäß dieser Erfindung vorgeschlagen, das Verfahren, das im nachfolgenden Abschnitt beschrieben wird, auch hier für die Berechnung der Sendesymbola-posteriori-Wahrscheinlichkeiten einzusetzen.

Nach einer Bestimmung der Werte $p_{1i}[k]$ (erstmalig in Block bzw. Schritt 920; Aktualisierung in Block bzw. Schritt 950) kann die Wirkung von Signal 1 auf Signal 2 folgendermaßen beschrieben werden:

Bei einer additiven Störung mit der Wahrscheinlichkeitsdichtefunktion (probability density function: pdf) $f_N(n)$ z.B. komplexwertigem rotationssymmetrischen Gauß'schen Rauschen mit Varianz $\sigma_n^2$,

$$f_N(n) = \frac{1}{\pi \sigma_n^2} \exp\left(-\frac{|n|^2}{\sigma_n^2}\right), \quad (2)$$

ergibt sich die pdf der im Schritt k auf das Signal 2 wirkende Rausch- und Interferenzstörung zu

$$p_{N2}(n, k) = \sum_{i=1}^{M} p_{1i}[k] f_N(n - a_{1i}). \quad (3)$$

Die Bestimmung kann beispielsweise in Block bzw. Schritt 925 erfolgen.

Diese pdf einer Störung von Signal 2 durch Rauschen und Signal 1 wird dem Detektions-/Decodiervorgang für das Signal 2 zugrunde gelegt.

Im Folgenden wird eine Interferenz von Signals 2 auf Signal 1 behandelt:

Da das Signal 2 meist starkem ISI unterliegt, ist zu dessen Detektion vorzugsweise ein Trellis-Decodierverfahren anzuwenden, welches Wahrscheinlichkeiten für die einzelnen Datensymbole liefert. In besonders effizienter Weise kann dies durch den Algorithmus nach **B**ahl, **C**ocke, **J**elinek und **R**aviv (BCJR-Algorithmus) erfolgen [5]. Dabei werden in einer Vorwärtsrekursion Wahrscheinlichkeiten $\alpha_i[k]$ für die Z Trellis-Zustände S[k] des modellbildenden Mealy-Automaten im Schritt k abhängig von den Empfangssignalbeobachtungen $\langle y[k]\rangle_1^{k-1}$ in den Schritten 1 bis k - 1 berechnet (beispielsweise als Teil von Block bzw. Schritt 935, und basierend auf den allgemeinen Übergangswahrscheinlichkeiten 930a, $\gamma_{ij}[k]$ und den Abtastwerten). In einer Rückwärtsrekursion werden ebenso Zustandswahrscheinlichkeiten $\beta_i[k]$ abhängig von den nachfolgenden Empfangssignalbeobachtungen $\langle y[k]\rangle_k^B$ bestimmt (beispielsweise ebenfalls als Teil von Block bzw. Schritt 935, und basierend auf den allgemeinen Übergangswahrscheinlichkeiten 930a, $\gamma_{ij}[k]$ und den Abtastwerten). Hierbei bezeichnet B die Gesamtlänge eines Verarbeitungsblocks.

Die Wahrscheinlichkeit für einen Übergang zum Zustand S[k] = *i* im Schritt k zum Zustand *S[k* + 1] = j im Schritt k + 1 berechnet sich zu

$$p_{i \to j}[k] = c \cdot \alpha_i[k] \cdot \gamma_{ij}[k] \cdot \beta_j[k+1]. \quad (4)$$

Diese Berechnung kann ebenfalls Teil von Block bzw. Schritt 935 sein. Dabei bezeichnet $\gamma_{ij}[k]$ die Wahrscheinlichkeit der Beobachtung des dem Zustandsübergang $i \to j$ zugeordneten Mealy-Automaten-Ausgangssignalwertes $y_{i \to j}$ anhand des beobachteten Signals y[k] (wobei y[k] beispielsweise ein Abtastwert sein kann), welches gemäß des Rauschens und der geschätzten Interferenz durch das Signal 1 gegeben ist:

$$\gamma_{ij}[k] = p_{N2}\big(y[k] - y_{i \to j}\big) \quad (5)$$

Die Konstante c in Gl. 4 ist für jeden Schritt beispielsweise so zu bestimmen, dass sich Summen von Wahrscheinlichkeiten zu 1 ergeben.

Üblicherweise (siehe [4, 5]) werden die Wahrscheinlichkeiten $p_{i \to j}[k]$ für alle Zustandsübergänge $i \to j$ addiert, welche durch das gleiche Trellis-Coder (=Mealy-Automaten-) Eingangssymbol hervorgerufen werden, um so die Wahrscheinlichkeiten für die einzelnen Datensymbole zu berechnen.

Eine Idee dieser Erfindung besteht darin, die Wahrscheinlichkeiten $p_{i \to j}[k]$ für diejenigen Zustandsübergänge $i \to j$ zu addieren, denen gleiche oder hinreichend ähnliche hypothetische Trelliscoder-Ausgangssignale $y_l$ zugeordnet sind. Beispielsweise werden Wahrscheinlichkeiten für solche Zustandsübergänge addiert, die unter Berücksichtigung von Intersymbolinterferenz zu gleichen oder ähnlichen (beispielsweise einer gemeinsamen Domäne zugeordneten) Beiträgen des zweiten Signalanteils zu einem Abtastwert führen (bzw. die aufgrund der Intersymbolinterferenz zu einem gleichen Ausgangswert eines Filterbasierten Intersymbolinterferenzmodells - zum Beispiel eines Mealy-Automaten-führen).

Somit werden beispielsweise in einfacher und zugleich optimaler Weise die Wahrscheinlichkeiten $p_l[k]$ für alle möglichen Ausgangswerte $y_l$ des Mealy-Automaten, hier des ISI erzeugenden FIR-Systems, in jedem Schritt k bestimmt, ohne dass in komplexen Gleichungen von den Trelliscoder-Eingangssymbolwahrscheinlichkeiten über die Codevorschriften des Mealy-Automaten auf die Wahrscheinlichkeiten der Ausgangswerte geschlossen werden müsste.

Auf diese Weise kann in optimaler Weise die pdf der auf das Signal 1 wirkenden Störung infolge von Rauschen und Interferenz durch das Signal 2 bestimmt werden zu:

$$p_{N1}(n,k) = \sum_{l=1}^{M^L} p_l[k] f_N(n - y_l) \qquad (6)$$

Die Bestimmung kann beispielsweise in Block bzw. Schritt 945 erfolgen.

Diese pdf wird dem Detektions-/Decodiervorgang bzgl. des Signals 1 zur Bestimmung der Symbolwahrscheinlichkeiten (oder zur Bestimmung von aktualisierten Symbolwahrscheinlichkeiten) (zum Beispiel in Block bzw. Schritt 950) zugrunde gelegt. Hieraus kann wiederum über Gleichung 3 die pdf $p_{N2}(n, k)$ für den nächsten Iterationsschritt berechnet werden (beispielsweise durch Wiederholung der in Block bzw. Schritt 925 gezeigten Funktionalität), wodurch die Iterationsschleife geschlossen wird.

Das iterative Verfahren kann beispielsweise mit als gleichwahrscheinlich angenommenen Signalpunkten für das Signal 1 begonnen werden (beispielsweise in Block 920). Ebenso kann das iterative Verfahren mit gleichwahrscheinlichen Zuständen des Mealy-Automaten, der die Erzeugung des Signals 2 modelliert, begonnen werden. Beide Startphasen für die Iterationen sind möglich und zielführend.

Die Bestimmung und Auswertung der pdf $p_{N1}(n, k)$ in Gleichung 6 kann aufgrund von bis zu $M^L$ Summanden sehr aufwändig werden. Deshalb wird zudem optional folgende Modifikation vorgeschlagen:

Da sich den Interferenzwerten Rauschen mit einer Varianz $\sigma_n^2$ überlagert, ist es nicht erforderlich, Interferenzwerte getrennt zu betrachten, die sich nur wenig unterscheiden. Es wird deshalb vorgeschlagen, die Menge der bis zu $M^L$ möglichen Ausgangswerte $y_l$ des den Nutzanteil von Signal 2 erzeugenden FIR-Filters in $\Lambda$ disjunkte Teilmengen (Domänen) aufzuteilen und jede Teilmenge nur durch einen Repräsentanten $\bar{y}_\lambda$, $\lambda \in \{1, \ldots, \Lambda\}$ zu charakterisieren. Die Trennlinien zwischen den Domänen $D_\lambda$ sowie deren Repräsentanten $\bar{y}_\lambda$ sind beispielsweise so zu wählen, dass der mittlere quadratische Fehler, der durch diese komplexwertige (bzw. mehrdimensionale) Quantisierung für die Menge der möglichen FIR-Filter-Ausgangswerte verursacht wird, minimiert wird. Hierfür ist beispielsweise der sog. k-Means-Algorithmus (teilweise auch als Max-Lloyd-Algorithmus bekannt) anzuwenden [6]. Die Zuordnung aller bis zu $M^L$ möglichen FIR-Filter-Ausgangswerte $y_l$ zu den $\Lambda$ Domänen $D_\lambda$ kann beispielsweise einmalig vor der Inbetriebnahme der Datenschätzung vorgenommen werden und trägt somit nicht zur Komplexität des Verfahrens bei.

Im modifizierten BCJR-Algorithmus sind beispielsweise die Übergangswahrscheinlichkeiten $p_{i \to j}[k]$ für diejenigen Übergänge zu summieren, deren zugehörige Nutzsignalwerte $y_l$ in die gleiche Domäne $D_\lambda$ fallen. Auf diese Weise werden Wahrscheinlichkeiten $p_{D\lambda}[k]$ für Interferenzwerte aus der Domäne $D_\lambda$ bestimmt. Die pdf für die Störung aus Interferenz und Rauschen, die für Signal 1 wirksam wird, und die beispielsweise in Block oder Schritt 945 bestimmt wird, vereinfacht sich damit zu

$$p_{N1}(n,k) = \sum_{\lambda=1}^{\Lambda} p_{D\lambda}[k] f_N(n - \bar{y}_\lambda) \qquad (7)$$

mit wenigen Summanden. Gleichung (7) kann damit beispielsweise an Stelle von Gleichung (6) treten.

Im iterativen Verfahren erfolgt nun eine erneute Schätzung der Wahrscheinlichkeiten für die Sendesymbole $a_1[k]$ anhand der Stör-pdf gemäß Gleichung 7 (Block bzw. Schritt 950).

Hieraus wird über Gleichung 3 eine erneuerte Stör-pdf $p_{N2}(n, k)$ für die Schätzung des Signals 2 mit Hilfe des modifizierten BCJR-Algorithmus bestimmt (Wiederholte Durchführung der Funktionalität von Block bzw. Schritt 925). Das iterative Verfahren wird beispielsweise solange wiederholt bis entweder

- alle Symbolwahrscheinlichkeiten sich bis auf eine kleine Abweichung $\varepsilon$, die als freier Parameter günstig zu wählen ist, dem Wert 0 oder dem Wert 1 angenähert haben, oder

- eine maximale Anzahl von Iterationsschritten erreicht worden ist.

Im Folgenden wird als eine optionale Ergänzung eine getrennte Datenschätzung für die beiden Quadraturkomponenten bei QAM behandelt.

Bei vielstufigen digitalen Übertragungsverfahren kann die Zahl Z der im Trellis-Decodierverfahren zur ML-Detektion eines ISI-behafteten Datensignals auftretenden Zustände rasch sehr hohe Werte annehmen, da $Z = M^{L-1}$ gilt. Bei QAM mit regulärer Signalkonstellation, d.h. $a[k] \in \mathbb{Z} + j\mathbb{Z}$, kann bei einer reellwertigen Detektionsgrundimpulsform nach dem Empfangsfilter (z.B. Matched Filter für Signal 1) aufgrund der Orthogonalität von Inphase- und Quadraturkomponente die Signalschätzung für die beiden Quadraturkomponenten (also beispielsweise für Inphasekomponenten und Quadraturkomponenten) getrennt erfolgen (üblicherweise liegen bei PAM reellwertige Grundimpulsformen vor). Die Zustandszahl verringert sich dadurch von $M^{L-1}$ auf $2M^{(L-1)/2}$, was für M $\geq$ 4 eine bedeutende Komplexitätsreduktion darstellen kann.

Hierzu wird gemäß einem (dritten) Aspekt dieser Erfindung (optional) vorgeschlagen, die Trägerphasensynchronisation (beispielsweise durch geeignete Ansteuerung des Mischers 905 bzw. der Vorrichtung 710 zur Ableitung eines komplexen Basisbandsignals) so zu regeln, dass das mit ISI behaftete Signal 2 (beispielsweise auch als zweiter Signalanteil bezeichnet), d.h. das bezüglich des Symboltaktes verschoben abgetastete Signal, trägerphasenrichtig demoduliert wird, bzw. so in ein äquivalentes komplexes Basisbandsignal umgesetzt wird, dass Inphase- und Quadraturkomponente jeweils möglichst nahe an den Koordinatenachsen der komplexen Ebene ausgerichtet werden (oder auch parallel zu den Koordinatenachsen der komplexen Ebene ausgerichtet wird, siehe zum Beispiel die Erläuterungen zu Figur 11). Das ISI-frei abgetastete Signal 1 (zum Beispiel als erster Signalanteil bezeichnet) unterliegt damit der Trägerphasenverschiebung $\Delta\varphi$, die zwischen den beiden zu detektierenden Signalen vorliegt, was jedoch im Detektionsvorgang für das ISI-freie Signal 1 einfach berücksichtigt werden kann.

Eine direkte optimale Zwei-Nutzer-Detektion beider Signale, z.B. mit Hilfe des Viterbi-Algorithmus, wäre nach Inphase- und Quadraturkomponente nur dann getrennt möglich, wenn für diese Trägerphasenverschiebung gilt $\Delta\varphi = n \cdot \pi/2, n \in \mathbb{Z}$.

Die iterative Zwei-Nutzer-Detektion nach dem Abschnitt "iteratives Verfahren durch Modifikation des BCJR-Algorithmus" hingegen ist jedoch für jede Trägerphasendifferenz möglich, indem die bei der Detektion von Signal 2 (beispielsweise in den Blöken bzw. Schritten 930,935,940) nach Real- und Imaginärteil getrennt bestimmten Interferenzwerte bzw. Repräsentanten $\bar{y}_{I,\lambda_I}, \bar{y}_{Q,\lambda_Q}$ der entsprechenden Domänen mit den Auftrittswahrscheinlichkeiten $p_{DI,\lambda_I}[k]$ und $p_{DQ,\lambda_Q}[k]$ im Zeitschritt $k$ zu komplexen Zahlen zusammengefasst werden. So ergibt sich bei je $\sqrt{\Lambda}$ Domänen in Real- und Imaginärteil folgende pdf für die Störung von Signal 1 durch Interferenz und Rauschen

$$p_{N1}(n, k) = \sum_{\lambda_I=1}^{\sqrt{\Lambda}} \sum_{\lambda_Q=1}^{\sqrt{\Lambda}} p_{DI,\lambda_I}[k] \cdot p_{DQ,\lambda_Q}[k] \cdot f_N\left(n - \left(\bar{y}_{I,\lambda_I} + j\bar{y}_{Q,\lambda_Q}\right)\right) \qquad (8)$$

Die Berechnung nach Gleichung 8 kann beispielsweise in Schritt 945 an Stelle der oben beschriebenen Funktionalität erfolgen.

Die pdfs für die Störung von Signal 2 durch Interferenz von Signal 1 und Rauschen können aufgrund der Rotationssymmetrie der pdf des Rauschens getrennt nach Inphase- und Quadraturkomponente angegeben werden zu

$$p_{NI2}(n_I, k) = \sum_{i=1}^{M} p_{1i}[k] \cdot f_{NR}\left(n_I - \text{Re}\{a_{1i} \cdot e^{j\Delta\varphi}\}\right) \qquad (9)$$

$$p_{NQ2}(n_Q, k) = \sum_{i=1}^{M} p_{1i}[k] \cdot f_{NR}\left(n_Q - \text{Im}\{a_{1i} \cdot e^{j\Delta\varphi}\}\right) \qquad (10)$$

Dies kann beispielsweise in Block bzw. Schritt 925 alternativ zu den oben erläuterten Funktionalitäten erfolgen.

Hierbei bezeichnet $f_{NR}(n_R)$ die pdf des Realteils des komplexwertigen Rauschens, die identisch zur pdf des Imaginärteil ist (Rotationssymmetrie schwach stationärer komplexwertiger Zufallsprozesse). Somit erlaubt das iterative Verfahren gemäß dem Abschnitt "Empfangsfilter und Symboltaktsynchronisation" in Kombination mit der Zerlegung der Signaldetektion für Signal 2 (oder den zweiten Signalanteil) in die beiden Quadraturkomponenten auch bei relativ großen Signalkonstellationen wie 16 QAM, 32 QAM und 64 QAM einen nahezu optimalen Zwei-Nutzer-Empfang.

Im Folgenden werden Aspekte der Erfindung in Form einer Liste aufgezählt.

1. Zwei-Nutzer-Empfänger mit Taktphasensynchronisation bzgl. eines Nutzers, so dass bei einer Taktphasendifferenz zwischen den beiden Signalen ISI aufgrund falscher Symboltaktphase nur für eines der beiden Signale auftritt und im Detektionsprozess zu berücksichtigen ist.

2. Nutzung der Berechnungen in rekursiven Trellis-Decodieralgorithmen, speziell der Zustandswahrscheinlichkeiten unter Berücksichtigung vorangegangener und zukünftiger Signalbeobachtungen sowie der Wahrscheinlichkeiten für aktuelle Zustandsübergänge, zur direkten Bestimmung der Wahrscheinlichkeiten für alle hypothetischen Signalnutzwerte zum aktuellen Zeitpunkt anhand der gesamten empfangenen Signalsequenz mit Nutzung der Bindungen innerhalb der Abfolge von Signalwerten, die als Ausgangswerte eines Mealy-Automaten interpretiert werden.

3. Gemäß Punkt 2. mit einer Zusammenfassung von nahe beieinander liegenden hypothetischen Signalnutzwerten zu Clustern, welche jeweils durch einen einzigen Signalwert repräsentiert werden, und Berechnung der Clusterwahrscheinlichkeiten in rekursiven Trellis-Decodieralgorithmen analog zu Punkt 2.

4. Iteratives Zwei-Nutzer-Detektionsverfahren, wobei die Wahrscheinlichkeiten für alle möglichen Interferenzstörungen des einen Signals auf das jeweils andere berechnet werden und hieraus zusammen mit den statistischen Parametern sonstiger Störungen die mutmaßlichen Störparameter (Mittelwert, Varianz, Wahrscheinlichkeitsdichtefunktion etc.) für die einzelnen Signale zu allen Modulationszeitschritten bestimmt werden. Dies erlaubt eine optimale Detektion eines Einzelsignals unter Nutzung bislang vorhandener Information über das jeweils andere Signal. Durch wiederholte Schätzungen der Signal- und Symbolwahrscheinlichkeiten für die Einzelsignale und Berücksichtigung dieser Parameter des jeweils anderen Signals wird eine Konvergenz zu sicheren Datenschätzungen erreicht. Infolge der Einzeldatenschätzungen ist die Komplexität proportional zur Summe der Komplexitäten der Verfahren für die Einzelsignale multipliziert mit einer (meist sehr niedrigen) Zahl von Iterationsschritten, während sich bei einer direkten Zwei-Nutzer-Schätzung eine Komplexität proportional zum Produkt der Komplexitäten für die Einzelsignale ergibt. Eine weitere Komplexitätsreduktion wird durch eine Verknüpfung des iterativen Zwei- Nutzer-Empfangsverfahrens mit einer Clusterbildung für die geschätzten Interferenzen des jeweils anderen Signals gemäß Punkt 3. erreicht.

5. Unabhängige Signalschätzung für das nach Punkt 1 infolge einer taktverschobenen Abtastung durch ISI behaftete Signal 2 für die beiden Quadraturkomponenten infolge einer bezüglich dieses Signals phasenrichtigen Trägerphasensynchronisation. Das Gesamtverfahren ist damit gekennzeichnet durch eine empfangsseitig gemischte Regelung der Synchronisationsparameter: Die Symboltaktphase wird zur phasenrichtigen Abtastung des einen Signals, das damit ISI-frei detektiert werden kann, eingeregelt, während die Phase der empfangsseitigen Trägerschwingung zur Verschiebung des Summensignals ins äquivalente komplexe Basisband so eingeregelt wird, dass beim meist ISI-behafteten anderen Signal eine getrennte Verarbeitung von Real- und Imaginäranteil ermöglicht wird. Durch die in I- und Q-Komponente getrennte Schätzung von Daten- und Signalwahrscheinlichkeiten wird die Komplexität bei einem $M$-stufigen QAM-Übertragungsverfahren bei L berücksichtigten wesentlich von Null verschiedenen Abtastwerten der verschoben abgetasteten reellen PAM-Impulsform nach dem Empfängereingangsfilter von $M^{L-1}$ auf $2M^{(L-1)/2}$ reduziert.

6. Anwendung der bzgl. der beiden Quadraturkomponenten getrennten Schätzung von Daten- und Signalwahrscheinlichkeiten nach Punkt 5 auf die iterative Zwei-Nutzer-Detektion nach Punkt 4 mit einer Berechnung der Interferenz auf das jeweils andere Signal durch Verbindung der Schätzwerte für die Quadraturkomponenten in Schätzwerte für komplexwertige Interferenzen für die Verarbeitungsrichtung Signal 2 auf Signal 1 und Trennung der Schätzungen für die komplexwertigen Interferenzen durch Projektion auf die Koordinatenachsen für die Verarbeitungsrichtung Signal 1 auf Signal 2.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren auf-gezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literatur

[1] Comtech EF Data. Doubletalk carrier-in-carrier bandwidth compression. http://www.comtechefdata.com/technologies/doubletalk, 2016. abgerufen am 25. Juli 2016.

[2] A. Duel-Hallen and C. Heegard. Delayed decision-feedback sequence estimation. In IEEE Transactions on Communications, volume 37, pages 428-436, Mai 1989.

[3] A. Eckels, R. Koidan, I. Harris, and R. Jastrow. Ephemeris of satellite 1957 alpha 2. IGY Satellite Rpt. Series, June 1959.

[4] J. Huber. Trelliscodierung: Grundlagen und Anwendungen in der digitalen Übertragungstechnik, volume 21 of Nachrichtentechnik. Springer-Verlag, 1992.

[5] F. Jelinek L. Bahl, J. Cocke and J. Raviv. Optimal decoding of linear codes for minimizing symbol error rate. In IEEE Transactions on Information Theory, volume 20, pages 284-287, 1974.

[6] Stuart P. Lloyd. Least Squares Quantization in PCM. IEEE Transactions on Information Theory, 28(2):129-137, March 1982.

[7] P. Nickel and W. Gerstacker. Single Antenna Interference Cancellation using Prefiltering and Multiuser Joint Detection based on the M-Algorithm. In Proc. of 14th IST Mobile & Wireless Communications Summit, Dresden, 2005.

[8] Sergio Verdu. Multiuser Detection. Cambridge University Press, 1998.

[9] A. J. Viterbi. Error bounds for convolutional codes and an asymptotically optimum decoding algorithm. In IEEE Transactions on Information Theory, volume 13, pages 260-269, 1967.

**Patentansprüche**

1. Empfänger (100; 230; 900) zum Empfangen eines Kombinationssignals (101), das zwei separate Signalanteile aufweist, deren Impulse zueinander verschoben sind und/oder deren Trägerschwingungen eine Phasendifferenz aufweisen,

    wobei der Empfänger ein an eine Sendeimpulsform der Impulse zumindest eines der Signalanteile angepasstes Filter (110; 910) aufweist, und

    wobei der Empfänger ausgelegt ist, um Abtastzeitpunkte, zu denen ein Ausgangssignal des Filters abgetastet wird, so einzustellen, dass ein Ausgangssignalanteil des Filters, der auf einem der Signalanteile basiert, im Wesentlichen IntersymbolInterferenz-frei abgetastet wird;

    wobei der Empfänger ausgelegt ist, um Wahrscheinlichkeiten ($p_{1i}[k]$) von Sendesymbolen eines ersten Signalanteils für eine Mehrzahl von Abtastzeitpunkten (k) zu bestimmen;

    wobei der Empfänger ausgelegt ist, um eine Wahrscheinlichkeitsdichtefunktion ($p_{N2}(n, k)$) einer eine Detektion von Sendesymbolen des zweiten Signalanteils beeinträchtigenden Störung unter Berücksichtigung der Wahrscheinlichkeiten von Sendesymbolen des ersten Signalanteils zu bestimmen;

    wobei der Empfänger ausgelegt ist, um eine Wahrscheinlichkeitsdichtefunktion ($p_{N1}(n, k)$) einer eine Detektion von Sendesymbolen des ersten Signalanteils beeinträchtigenden Störung unter Berücksichtigung

    - der Wahrscheinlichkeitsdichtefunktion ($p_{N2}(n,$ k)) der die Detektion von Sendesymbolen des zweiten Signalanteils beeinträchtigenden Störung und
    - der Abtastwerte (y[k]) und
    - einer Information über Inter-Symbol-Interferenz-Eigenschaften

    zu bestimmen; und

    wobei der Empfänger ausgelegt ist, um basierend auf Abtastwerten und der Wahrscheinlichkeitsdichtefunktion ($p_{N1}(n, k)$) der die Detektion von Sendesymbolen des ersten Signalanteils beeinträchtigenden Störung aktualisierte Wahrscheinlichkeiten ($p_{1i}[k]$) von Sendesymbolen des ersten Signalanteils für eine Mehrzahl von Abtastzeitpunkten (k) zu bestimmen; und

    wobei der Empfänger ausgelegt ist, um basierend auf einer End-Wahrscheinlichkeitsdichtefunktion Sendesymbole des ersten Signalanteils und/oder des zweiten Signalanteils zu bestimmen;

    wobei der Empfänger ausgelegt ist, um die Wahrscheinlichkeitsdichtefunktion ($p_{N2}(n, k)$) der die Detektion von Sendesymbolen des zweiten Sendesignalanteils beeinträchtigenden Störung als eine Summe von Wahrscheinlichkeitsdichtefunktionen einer vermuteten Rauschstörung zu bestimmen, und

    wobei der Empfänger ausgelegt ist, um Mittelwerte von Wahrscheinlichkeitsdichtefunktionen einer Rauschstörung, die zu der Summe von Wahrscheinlichkeitsdichtefunktionen beitragen, gemäß den Sendesymbolen des ersten Signalanteils zu wählen, und

    wobei der Empfänger ausgelegt ist, um Wahrscheinlichkeitsdichtefunktionen von vermuteten Rauschstörungen, die zu der Summe von Wahrscheinlichkeitsdichten beitragen, mit Wahrscheinlichkeiten von Sendesymbolen des ersten Signalanteils zu gewichten.

2. Empfänger gemäß Anspruch 1, wobei der Empfänger ausgelegt ist, um die Abtastzeitpunkte so einzustellen, dass eine Antwort auf einen Impuls des ersten Signalanteils nach einer Filterung mit dem Filter nur zu einem Abtastzeitpunkt einen Hauptbeitrag liefert, wobei die Antwort auf den Impuls zu anderen Abtastzeitpunkten höchstens 10% des Hauptbeitrags beträgt; oder
wobei der Empfänger ausgelegt ist, um die Abtastzeitpunkte so einzustellen, dass ein Impuls des ersten Signalanteils nur zu einem Abtastzeitpunkt einen wesentlich von Null verschiedenen Beitrag zu einem Abtastwert liefert.

3. Empfänger gemäß einem der Ansprüche 1 bis 2, wobei Impulse des ersten Signalanteils und Impulse des zweiten Signalanteils gleiche Sendeimpulsformen aufweisen.

4. Empfänger gemäß einem der Ansprüche 1 bis 3, wobei der Empfänger ausgelegt ist, um basierend auf den Abtastwerten einen Informationsinhalt eines der Signalanteile zu bestimmen und dabei eine Störung durch den anderen Signalanteil abzuschätzen und zu berücksichtigen.

5. Empfänger gemäß einem der Ansprüche 1 bis 4, wobei der Empfänger ausgelegt ist, um Sendesymbole, die dem zweiten Signalanteil zugrunde liegen, oder Wahrscheinlichkeiten von Sendesymbolen, die dem zweiten Signalanteil zugrunde liegen, mittels eines Trellis-Decodierverfahren zu bestimmen.

6. Empfänger gemäß einem der Ansprüche 1 bis 5, wobei der Empfänger ausgelegt ist, um allgemeine Übergangswahrscheinlichkeiten ($\gamma_{ij}[k]$) von einem ersten Speicherzustand eines diskreten Filters, das eine Intersymbol-Interferenz beschreibt, basierend auf einem Abtastwert des Kombinationssignals und der Wahrscheinlichkeitsdichtefunktion ($p_{N2}(n, k)$) einer eine Detektion von Sendesymbolen des zweiten Signalanteils beeinträchtigenden Störung, zu einem zweiten Speicherzustand zu bestimmen, wobei der zweite Speicherzustand dem ersten Speicherzustand zeitlich folgt.

7. Empfänger gemäß einem der Ansprüche 1 bis 6, wobei der Empfänger ausgelegt ist, um Störungen von dem zweiten Signalanteil auf den ersten Signalanteil zu schätzen, und wobei der Empfänger ausgelegt ist, um basierend auf der Schätzung von Störungen von dem zweiten Signalanteil auf den ersten Signalanteil eine Schätzung von Sendesymbolwahrscheinlichkeit des ersten Signalanteils zu erhalten, und

wobei der Empfänger ausgelegt ist, um Störungen von dem ersten Signalanteil auf den zweiten Signalanteil, mittels der Schätzung von Sendesymbolwahrscheinlichkeiten des ersten Signalanteils, zu schätzen, und
wobei der Empfänger ausgelegt ist, um basierend auf der Schätzung von Störungen von dem ersten Signalanteil auf den zweiten Signalanteil einen Beitrag des zweiten Signalanteils auf den Abtastwert zu schätzen; und
wobei der Empfänger optional zudem ausgelegt ist, um die Schätzung von Störungen von dem zweiten Signalanteil auf den ersten Signalanteil und von Störungen von dem ersten Signalanteil auf den zweiten Signalanteil abwechselnd iterativ zu verbessern.

8. Empfänger gemäß einem der Ansprüche 1 bis 7, wobei der Empfänger ausgelegt ist, um direkt aus einer Schätzung von Störungen von dem zweiten Signalanteil auf den ersten Signalanteil und einem Abtastwert ein Empfangssymbol des ersten Signalanteils oder eine Wahrscheinlichkeit eines Empfangssymbols des ersten Signalanteils zu bestimmen.

9. Empfänger (100; 230; 900) zum Empfangen eines Kombinationssignals (101), das zwei separate Signalanteile aufweist, deren Impulse zueinander verschoben sind und/oder deren Trägerschwingungen eine Phasendifferenz aufweisen,

wobei der Empfänger ein an eine Sendeimpulsform der Impulse zumindest eines der Signalanteile angepasstes Filter (110; 910) aufweist, und
wobei der Empfänger ausgelegt ist, um Abtastzeitpunkte, zu denen ein Ausgangssignal des Filters abgetastet wird, so einzustellen, dass ein Ausgangssignalanteil des Filters, der auf einem der Signalanteile basiert, im Wesentlichen IntersymbolInterferenz-frei abgetastet wird;
wobei der Empfänger ausgelegt ist, um Wahrscheinlichkeiten ($p_{1i}[k]$) von Sendesymbolen eines ersten Signalanteils für eine Mehrzahl von Abtastzeitpunkten (k) zu bestimmen;
wobei der Empfänger ausgelegt ist, um eine Wahrscheinlichkeitsdichtefunktion ($p_{N2}(n, k)$) einer eine Detektion von Sendesymbolen des zweiten Signalanteils beeinträchtigenden Störung unter Berücksichtigung der Wahrscheinlichkeiten von Sendesymbolen des ersten Signalanteils zu bestimmen;
wobei der Empfänger ausgelegt ist, um eine Wahrscheinlichkeitsdichtefunktion ($p_{N1}(n, k)$) einer eine Detektion von Sendesymbolen des ersten Signalanteils beeinträchtigenden Störung unter Berücksichtigung

- der Wahrscheinlichkeitsdichtefunktion ($p_{N2}(n, k)$) der die Detektion von Sendesymbolen des zweiten Signalanteils beeinträchtigenden Störung und
- der Abtastwerte ($y[k]$) und
- einer Information über Inter-Symbol-Interferenz-Eigenschaften

zu bestimmen; und
wobei der Empfänger ausgelegt ist, um basierend auf Abtastwerten und der Wahrscheinlichkeitsdichtefunktion ($p_{N1}(n, k)$) der die Detektion von Sendesymbolen des ersten Signalanteils beeinträchtigenden Störung aktualisierte Wahrscheinlichkeiten ($p_{1i}[k]$) von Sendesymbolen des ersten Signalanteils für eine Mehrzahl von Abtastzeitpunkten ($k$) zu bestimmen; und
wobei der Empfänger ausgelegt ist, um basierend auf einer End-Wahrscheinlichkeitsdichtefunktion Sendesymbole des ersten Signalanteils und/oder des zweiten Signalanteils zu bestimmen;
wobei der Empfänger ausgelegt ist, um die Wahrscheinlichkeitsdichtefunktion ($p_{N1}(n, k)$) der die Detektion des ersten Signalanteils beeinträchtigenden Störung basierend auf einer Gruppierung in Domänen von Beiträgen des zweiten Signalanteils zu den Abtastwerten zu bestimmen, wobei die in eine Domäne gruppierten Beiträge des zweiten Signalanteils im Wesentlichen ähnliche Werte aufweisen.

10. Empfänger (100; 230; 900) zum Empfangen eines Kombinationssignals (101), das zwei separate Signalanteile aufweist, deren Impulse zueinander verschoben sind und/oder deren Trägerschwingungen eine Phasendifferenz aufweisen,

wobei der Empfänger ein an eine Sendeimpulsform der Impulse zumindest eines der Signalanteile angepasstes Filter (110; 910) aufweist, und
wobei der Empfänger ausgelegt ist, um Abtastzeitpunkte, zu denen ein Ausgangssignal des Filters abgetastet wird, so einzustellen, dass ein Ausgangssignalanteil des Filters, der auf einem der Signalanteile basiert, im Wesentlichen IntersymbolInterferenz-frei abgetastet wird;
wobei der Empfänger ausgelegt ist, um Wahrscheinlichkeiten ($p_{1i}[k]$) von Sendesymbolen eines ersten Signalanteils für eine Mehrzahl von Abtastzeitpunkten (k) zu bestimmen;
wobei der Empfänger ausgelegt ist, um eine Wahrscheinlichkeitsdichtefunktion ($p_{N}2(n, k)$) einer eine Detektion von Sendesymbolen des zweiten Signalanteils beeinträchtigenden Störung unter Berücksichtigung der Wahrscheinlichkeiten von Sendesymbolen des ersten Signalanteils zu bestimmen;
wobei der Empfänger ausgelegt ist, um eine Wahrscheinlichkeitsdichtefunktion ($p_{N1}(n, k)$) einer eine Detektion von Sendesymbolen des ersten Signalanteils beeinträchtigenden Störung unter Berücksichtigung

- der Wahrscheinlichkeitsdichtefunktion ($p_{N2}(n, k)$) der die Detektion von Sendesymbolen des zweiten Signalanteils beeinträchtigenden Störung und
- der Abtastwerte (y[k]) und
- einer Information über Inter-Symbol-Interferenz-Eigenschaften

zu bestimmen; und
wobei der Empfänger ausgelegt ist, um basierend auf Abtastwerten und der Wahrscheinlichkeitsdichtefunktion ($p_{N1}(n, k)$) der die Detektion von Sendesymbolen des ersten Signalanteils beeinträchtigenden Störung aktualisierte Wahrscheinlichkeiten ($p_{1i}[k]$) von Sendesymbolen des ersten Signalanteils für eine Mehrzahl von Abtastzeitpunkten (k) zu bestimmen; und
wobei der Empfänger ausgelegt ist, um basierend auf einer End-Wahrscheinlichkeitsdichtefunktion Sendesymbole des ersten Signalanteils und/oder des zweiten Signalanteils zu bestimmen;
wobei der Empfänger ausgelegt ist, um die Wahrscheinlichkeitsdichtefunktion ($p_{N1}(n, k)$) der die Detektion des ersten Signalanteils beeinträchtigenden Störung basierend auf einer gewichteten Summation von Wahrscheinlichkeitsdichtefunktionen einer vermuteten Rauschstörung zu bestimmen, wobei der Empfänger ausgelegt ist, um als Mittelwerte der einzelnen Wahrscheinlichkeitsdichtefunktionen die Beträge des zweiten Signalanteils zu den Abtastzeitpunkten zu wählen und diese einzelnen Wahrscheinlichkeitsdichtefunktionen gemäß den Wahrscheinlichkeiten von Beiträgen des zweiten Signalanteils zu den Abtastwerten zu gewichten.

11. Kommunikationssystem (200), mit folgenden Merkmalen:

einem ersten Sender (210),
einem zweiten Sender (220), und
einem Empfänger (230) gemäß einem der Ansprüche 1 bis 10,
wobei der erste Sender und der zweite Sender jeweils ausgelegt sind, um Sendesymbole mit einer identischen Symboltaktrate zu senden, wobei der Symboltakt des ersten Senders und des zweiten Senders so sind, dass auf Seite des Empfängers empfangene Sendesymbole des ersten Senders und empfangene Sendesymbole des zweiten Senders einen Versatz aufweisen, der einem Bruchteil einer Symboldauer entspricht.

12. Verfahren (300) zum Empfangen eines Kombinationssignals, das zwei separate Signalanteile aufweist, deren Impulse zueinander verschoben sind und/oder deren Trägerphasen voneinander abweichen, wobei das Verfahren Folgendes umfasst:

Einstellen (310) von Abtastzeitpunkten, zu denen ein Ausgangssignal eines Filters, abgetastet wird, wobei das Filter an eine Sendeimpulsform der Impulse zumindest eines der Signalanteile angepasst ist, so dass ein Ausgangssignalanteil des Filters, der auf einem der Signalanteile basiert, im Wesentlichen IntersymbolInterferenz-frei abgetastet wird;
wobei das Verfahren ein Bestimmen von Wahrscheinlichkeiten ($p_{1i}[k]$) von Sendesymbolen eines ersten Signalanteils für eine Mehrzahl von Abtastzeitpunkten (k) umfasst;
wobei das Verfahren ein Bestimmen einer Wahrscheinlichkeitsdichtefunktion ($p_{N2}(n, k)$) einer eine Detektion von Sendesymbolen des zweiten Signalanteils beeinträchtigenden Störung unter Berücksichtigung der Wahrscheinlichkeiten von Sendesymbolen des ersten Signalanteils umfasst;
wobei eine Wahrscheinlichkeitsdichtefunktion ($p_{N1}(n, k)$) einer eine Detektion von Sendesymbolen des ersten Signalanteils beeinträchtigenden Störung unter Berücksichtigung

- der Wahrscheinlichkeitsdichtefunktion ($p_{N2}(n, k)$) der die Detektion von Sendesymbolen des zweiten Signalanteils beeinträchtigenden Störung und
- der Abtastwerte (y[k]) und
- einer Information über Inter-Symbol-Interferenz-Eigenschaften

bestimmt wird; und
wobei basierend auf Abtastwerten und der Wahrscheinlichkeitsdichtefunktion ($p_{N1}(n, k)$) der die Detektion von Sendesymbolen des ersten Signalanteils beeinträchtigenden Störung aktualisierte Wahrscheinlichkeiten ($p_{1i}[k]$) von Sendesymbolen des ersten Signalanteils für eine Mehrzahl von Abtastzeitpunkten (k) bestimmt werden; und
wobei basierend auf einer End-Wahrscheinlichkeitsdichtefunktion Sendesymbole des ersten Signalanteils und/oder des zweiten Signalanteils bestimmt werden;
wobei die Wahrscheinlichkeitsdichtefunktion ($p_{N2}(n, k)$) der die Detektion von Sendesymbolen des zweiten Sendesignalanteils beeinträchtigenden Störung als eine Summe von Wahrscheinlichkeitsdichtefunktionen einer vermuteten Rauschstörung bestimmt wird und
wobei Mittelwerte von Wahrscheinlichkeitsdichtefunktionen einer Rauschstörung, die zu der Summe von Wahrscheinlichkeitsdichtefunktionen beitragen, gemäß den Sendesymbolen des ersten Signalanteils gewählt werden und
wobei Wahrscheinlichkeitsdichtefunktionen von vermuteten Rauschstörungen, die zu der Summe von Wahrscheinlichkeitsdichten beitragen, mit Wahrscheinlichkeiten von Sendesymbolen des ersten Signalanteils gewichtet werden.

13. Verfahren (300) zum Empfangen eines Kombinationssignals, das zwei separate Signalanteile aufweist, deren Impulse zueinander verschoben sind und/oder deren Trägerphasen voneinander abweichen, wobei das Verfahren Folgendes umfasst:

Einstellen (310) von Abtastzeitpunkten, zu denen ein Ausgangssignal eines Filters, abgetastet wird, wobei das Filter an eine Sendeimpulsform der Impulse zumindest eines der Signalanteile angepasst ist, so dass ein Ausgangssignalanteil des Filters, der auf einem der Signalanteile basiert, im Wesentlichen IntersymbolInterferenz-frei abgetastet wird;
wobei das Verfahren ein Bestimmen von Wahrscheinlichkeiten ($p_{1i}[k]$) von Sendesymbolen eines ersten Signalanteils für eine Mehrzahl von Abtastzeitpunkten (k) umfasst;
wobei das Verfahren ein Bestimmen einer Wahrscheinlichkeitsdichtefunktion ($p_{N2}(n, k)$) einer eine Detektion von Sendesymbolen des zweiten Signalanteils beeinträchtigenden Störung unter Berücksichtigung der Wahrscheinlichkeiten von Sendesymbolen des ersten Signalanteils umfasst;

wobei eine Wahrscheinlichkeitsdichtefunktion ($p_{N1}(n, k)$) einer eine Detektion von Sendesymbolen des ersten Signalanteils beeinträchtigenden Störung unter Berücksichtigung

- der Wahrscheinlichkeitsdichtefunktion ($p_{N2}(n, k)$) der die Detektion von Sendesymbolen des zweiten Signalanteils beeinträchtigenden Störung und
- der Abtastwerte ($y[k]$) und
- einer Information über Inter-Symbol-Interferenz-Eigenschaften

bestimmt wird; und

wobei basierend auf Abtastwerten und der Wahrscheinlichkeitsdichtefunktion ($p_{N1}(n, k)$) der die Detektion von Sendesymbolen des ersten Signalanteils beeinträchtigenden Störung aktualisierte Wahrscheinlichkeiten ($p_{1i}[k]$) von Sendesymbolen des ersten Signalanteils für eine Mehrzahl von Abtastzeitpunkten ($k$) bestimmt werden; und

wobei basierend auf einer End-Wahrscheinlichkeitsdichtefunktion Sendesymbole des ersten Signalanteils und/oder des zweiten Signalanteils bestimmt werden;

wobei die Wahrscheinlichkeitsdichtefunktion ($p_{N1}(n, k)$) der die Detektion des ersten Signalanteils beeinträchtigenden Störung basierend auf einer Gruppierung in Domänen von Beiträgen des zweiten Signalanteils zu den Abtastwerten bestimmt wird, wobei die in eine Domäne gruppierten Beiträge des zweiten Signalanteils im Wesentlichen ähnliche Werte aufweisen.

**14.** Verfahren (300) zum Empfangen eines Kombinationssignals, das zwei separate Signalanteile aufweist, deren Impulse zueinander verschoben sind und/oder deren Trägerphasen voneinander abweichen, wobei das Verfahren Folgendes umfasst:

Einstellen (310) von Abtastzeitpunkten, zu denen ein Ausgangssignal eines Filters, abgetastet wird, wobei das Filter an eine Sendeimpulsform der Impulse zumindest eines der Signalanteile angepasst ist, so dass ein Ausgangssignalanteil des Filters, der auf einem der Signalanteile basiert, im Wesentlichen IntersymbolInterferenz-frei abgetastet wird;

wobei das Verfahren ein Bestimmen von Wahrscheinlichkeiten ($p_{1i}[k]$) von Sendesymbolen eines ersten Signalanteils für eine Mehrzahl von Abtastzeitpunkten ($k$) umfasst;

wobei das Verfahren ein Bestimmen einer Wahrscheinlichkeitsdichtefunktion ($p_{N2}(n, k)$) einer eine Detektion von Sendesymbolen des zweiten Signalanteils beeinträchtigenden Störung unter Berücksichtigung der Wahrscheinlichkeiten von Sendesymbolen des ersten Signalanteils umfasst;

wobei eine Wahrscheinlichkeitsdichtefunktion ($p_{N1}(n, k)$) einer eine Detektion von Sendesymbolen des ersten Signalanteils beeinträchtigenden Störung unter Berücksichtigung

- der Wahrscheinlichkeitsdichtefunktion ($p_{N2}(n, k)$) der die Detektion von Sendesymbolen des zweiten Signalanteils beeinträchtigenden Störung und
- der Abtastwerte ($y[k]$) und
- einer Information über Inter-Symbol-Interferenz-Eigenschaften

bestimmt wird; und

wobei basierend auf Abtastwerten und der Wahrscheinlichkeitsdichtefunktion ($p_{N1}(n, k)$) der die Detektion von Sendesymbolen des ersten Signalanteils beeinträchtigenden Störung aktualisierte Wahrscheinlichkeiten ($p_{1i}[k]$) von Sendesymbolen des ersten Signalanteils für eine Mehrzahl von Abtastzeitpunkten ($k$) bestimmt werden; und

wobei basierend auf einer End-Wahrscheinlichkeitsdichtefunktion Sendesymbole des ersten Signalanteils und/oder des zweiten Signalanteils bestimmt werden,

wobei die Wahrscheinlichkeitsdichtefunktion ($p_{N1}(n, k)$) der die Detektion des ersten Signalanteils beeinträchtigenden Störung basierend auf einer gewichteten Summation von Wahrscheinlichkeitsdichtefunktionen einer vermuteten Rauschstörung bestimmt werden, wobei als Mittelwerte der einzelnen Wahrscheinlichkeitsdichtefunktionen die Beträge des zweiten Signalanteils zu den Abtastzeitpunkten gewählt werden und diese einzelnen Wahrscheinlichkeitsdichtefunktionen gemäß den Wahrscheinlichkeiten von Beiträgen des zweiten Signalanteils zu den Abtastwerten gewichtet werden.

**15.** Computerprogramm mit einem Programmcode zur Durchführung des Verfahrens nach einem der Ansprüche 12 bis 14, wenn das Programm auf einem Computer abläuft.

**Claims**

1. Receiver (100; 230; 900) for receiving a combination signal (101) that comprises two separate signal portions whose impulses are shifted with respect to each other and/or whose carrier oscillations comprise a phase difference,

    wherein the receiver comprises a filter (110; 910) matched to a transmission impulse shape of the impulses of at least one of the signal portions, and

    wherein the receiver is configured to set sampling instants at which an output signal of the filter is sampled such that an output signal portion of the filter based on one of the signal portions is sampled essentially free of intersymbol interference;

    wherein the receiver is configured to determine probabilities ($p_{1i}[k]$) of transmission symbols of a first signal portion for a plurality of sampling instants ($k$);

    wherein the receiver is configured to determine a probability density function ($p_{N2}(n, k)$) of a disturbance affecting a detection of transmission symbols of the second signal portion, taking into account the probabilities of transmission symbols of the first signal portion;

    wherein the receiver is configured to determine a probability density function ($p_{N1}(n, k)$) of a disturbance affecting a detection of transmission symbols of the first signal portion, taking into account:

    - the probability density function ($p_{N2}(n, k)$) of a disturbance affecting a detection of transmission symbols of the second signal portion, and
    - the sample values (y[k]), and
    - information about intersymbol interference properties; and

    wherein the receiver is configured to determine, on the basis of sample values and the probability density function ($p_{N1}(n, k)$) of a disturbance affecting a detection of transmission symbols of the first signal portion, updated probabilities ($p_{1i}[k]$) of transmission symbols of the first signal portion for a plurality of sampling instants ($k$); and

    wherein the receiver is configured to determine, on the basis of an end probability density function, transmission symbols of the first signal portion and/or of the second signal portion;

    wherein the receiver is configured to determine the probability density function ($p_{N2}(n, k)$) of a disturbance affecting a detection of transmission symbols of the second transmission signal portion as a sum of probability density functions of a presumed noise disturbance, and

    wherein the receiver is configured to select, according to transmission symbols of the first signal portion, mean values of probability density functions of a noise disturbance that contribute to the sum of probability density functions, and

    wherein the receiver is configured to weight, with probabilities of transmission symbols of the first signal portion, probability density functions of presumed noise disturbances that contribute to the sum of probability densities.

2. Receiver according to claim 1, wherein the receiver is configured to set the sampling instants such that, after filtering with the filter, a response to an impulse of the first signal portion provides a main contribution only at one sampling instant, wherein the response to the impulse is at other sampling instants at most 10% of the main contribution; or wherein the receiver is configured to set the sampling instants such that an impulse of the first signal portion provides to a sample value only at one sampling instant a contribution substantially differing from zero.

3. Receiver according to any one of claims 1 to 2, wherein impulses of the first signal portion and impulses of the second signal portion comprise equal transmission impulse shapes.

4. Receiver according to any one of claims 1 to 3, wherein the receiver is configured to determine, on the basis of the sample values, an information content of one of the signal portions and, in doing so, to estimate and consider interference by the other signal portion.

5. Receiver according to any one of claims 1 to 4, wherein the receiver is configured to determine transmission symbols that the second signal portion is based upon, or probabilities of transmission symbols that the second signal portion is based upon, by means of a Trellis decoding method.

6. Receiver according to any one of claims 1 to 5, wherein the receiver is configured to determine general transition probabilities ($\gamma_{ij}[k]$) from a first memory state of a discrete filter that describes an intersymbol interference, on the basis of a sample value of the combination signal and the probability density function ($p_{N2}(n, k)$ of a disturbance affecting a detection of transmission symbols of the second signal portion, to a second memory state, wherein the second memory state temporally follows the first memory state.

7. Receiver according to any one of claims 1 to 6, wherein the receiver is configured to estimate disturbances from the second signal portion to the first signal portion, and wherein the receiver is configured to obtain, on the basis of the estimation of disturbances from the second signal portion to the first signal portion, an estimation of a transmission symbol probability of the first signal portion, and

wherein the receiver is configured to estimate disturbances from the first signal portion to the second signal portion by means of the estimation of transmission symbol probabilities of the first signal portion, and
wherein the receiver is configured to estimate, on the basis of the estimation of disturbances from the first signal portion to the second signal portion, a contribution of the second signal portion to the sample value; and
wherein, in addition, the receiver is optionally configured to alternately iteratively improve the estimation of disturbances from the second signal portion to the first signal portion and of disturbances from the first signal portion to the second signal portion.

8. Receiver according to any one of claims 1 to 7, wherein the receiver is configured to determine a reception symbol of the first signal portion or a probability of a reception symbol of the first signal portion directly from an estimation of disturbances from the second signal portion to the first signal portion and a sample value.

9. Receiver (100; 230; 900) for receiving a combination signal (101) that comprises two separate signal portions whose impulses are shifted with respect to each other and/or whose carrier oscillations comprise a phase difference,

wherein the receiver comprises a filter (110; 910) matched to a transmission impulse shape of the impulses of at least one of the signal portions, and
wherein the receiver is configured to set sampling instants at which an output signal of the filter is sampled such that an output signal portion of the filter based on one of the signal portions is sampled essentially free of intersymbol interference;
wherein the receiver is configured to determine probabilities ($p_{1i}[k]$) of transmission symbols of a first signal portion for a plurality of sampling instants ($k$);
wherein the receiver is configured to determine a probability density function ($p_{N2}(n, k)$) of a disturbance affecting a detection of transmission symbols of the second signal portion, taking into account the probabilities of transmission symbols of the first signal portion;
wherein the receiver is configured to determine a probability density function ($p_{N1}(n, k)$) of a disturbance affecting a detection of transmission symbols of the first signal portion, taking into account:

- the probability density function ($p_{N2}(n, k)$) of a disturbance affecting a detection of transmission symbols of the second signal portion, and
- the sample values (y[k]), and
- information about intersymbol interference properties; and

wherein the receiver is configured to determine, on the basis of sample values and the probability density function ($p_{N1}(n, k)$) of a disturbance affecting a detection of transmission symbols of the first signal portion, updated probabilities ($p_{1i}[k]$) of transmission symbols of the first signal portion for a plurality of sampling instants ($k$); and
wherein the receiver is configured to determine, on the basis of an end probability density function, transmission symbols of the first signal portion and/or of the second signal portion;
wherein the receiver is configured to determine, on the basis of a grouping into domains of contributions of the second signal portion to the sample values, the probability density function ($p_{N1}(n, k)$) of a disturbance affecting a detection of the first signal portion, wherein the contributions of the second signal portion grouped into a domain essentially comprise similar values.

10. Receiver (100; 230; 900) for receiving a combination signal (101) that comprises two separate signal portions whose impulses are shifted with respect to each other and/or whose carrier oscillations comprise a phase difference,

wherein the receiver comprises a filter (110; 910) matched to a transmission impulse shape of the impulses of at least one of the signal portions, and
wherein the receiver is configured to set sampling instants at which an output signal of the filter is sampled such that an output signal portion of the filter based on one of the signal portions is sampled essentially free of intersymbol interference;

wherein the receiver is configured to determine probabilities ($p_{1i}[k]$) of transmission symbols of a first signal portion for a plurality of sampling instants ($k$);

wherein the receiver is configured to determine a probability density function ($p_{N2}(n, k)$) of a disturbance affecting a detection of transmission symbols of the second signal portion, taking into account the probabilities of transmission symbols of the first signal portion;

wherein the receiver is configured to determine a probability density function ($p_{N1}(n, k)$) of a disturbance affecting a detection of transmission symbols of the first signal portion, taking into account:

- the probability density function ($p_{N2}(n, k)$) of a disturbance affecting a detection of transmission symbols of the second signal portion, and
- the sample values *(y[k])*, and
- information about intersymbol interference properties; and

wherein the receiver is configured to determine, on the basis of sample values and the probability density function ($p_{N1}(n, k)$) of a disturbance affecting a detection of transmission symbols of the first signal portion, updated probabilities ($p_{1i}[k]$) of transmission symbols of the first signal portion for a plurality of sampling instants ($k$); and

wherein the receiver is configured to determine, on the basis of an end probability density function, transmission symbols of the first signal portion and/or of the second signal portion;

wherein the receiver is configured to determine, on the basis of a weighted summation of probability density functions of a presumed noise disturbance, the probability density function ($p_{N1}(n, k)$) of a disturbance affecting a detection of the first signal portion, wherein the receiver is configured to select as mean values of the individual probability density functions the magnitudes of the second signal portion at the sampling instants and to weight these individual probability density functions in accordance with the probabilities of contributions of the second signal portion to the sample values.

**11.** Communication system (200) comprising:

a first transmitter (210),
a second transmitter (220), and
a receiver (230) according to any one of claims 1 to 10,
wherein the first transmitter and the second transmitter are each configured to transmit transmission symbols with an identical symbol clock rate, wherein the symbol clock of the first transmitter and the second transmitter are such that transmission symbols of the first transmitter received on the side of the receiver and received transmission symbols of the second transmitter comprise an offset corresponding to a fraction of a symbol duration.

**12.** Method (300) for receiving a combination signal that comprise two separate signal portions whose impulses are shifted with respect to each other and/or whose carrier phases deviate from each other, comprising:

setting (310) sampling instants at which an output signal of a filter is sampled, wherein the filter is matched to a transmission impulse shape of the impulses of at least one of the signal portions so that an output signal portion of the filter based on one of the signal portions is sampled essentially free of intersymbol interference;

wherein the method comprises determining probabilities ($p_{1i}[k]$) of transmission symbols of a first signal portion for a plurality of sampling instants ($k$);

wherein the method comprises determining a probability density function ($p_{N2}(n, k)$) of a disturbance affecting a detection of transmission symbols of the second signal portion, taking into account the probabilities of transmission symbols of the first signal portion;

wherein a probability density function ($p_{N1}(n, k)$) of a disturbance affecting a detection of transmission symbols of the first signal portion is determined, taking into account:

- the probability density function ($p_{N2}(n, k)$) of a disturbance affecting a detection of transmission symbols of the second signal portion, and
- the sample values (y[k]), and
- information about intersymbol interference properties; and

wherein updated probabilities ($p_{1_i}[k]$) of transmission symbols of the first signal portion for a plurality of sampling instants (k) are determined on the basis of sample values and the probability density function ($p_{N1}(n, k)$) of a disturbance affecting a detection of transmission symbols of the first signal portion; and
wherein transmission symbols of the first signal portion and/or of the second signal portion are determined on the basis of an end probability density function;
wherein the probability density function ($p_{N2}(n, k)$) of a disturbance affecting a detection of transmission symbols of the second transmission signal portion as a sum of probability density functions of a presumed noise disturbance is determined,
and
wherein mean values of probability density functions of a noise disturbance that contribute to the sum of probability density functions are selected according to transmission symbols of the first signal portion, and
wherein probability density functions of presumed noise disturbances that contribute to the sum of probability densities are weighted with probabilities of transmission symbols of the first signal portion.

**13.** Method (300) for receiving a combination signal that comprise two separate signal portions whose impulses are shifted with respect to each other and/or whose carrier phases deviate from each other, comprising:

setting (310) sampling instants at which an output signal of a filter is sampled, wherein the filter is matched to a transmission impulse shape of the impulses of at least one of the signal portions so that an output signal portion of the filter based on one of the signal portions is sampled essentially free of intersymbol interference;
wherein the method comprises determining probabilities ($p_{1_i}[k]$) of transmission symbols of a first signal portion for a plurality of sampling instants (k);
wherein the method comprises determining a probability density function ($p_{N2}(n, k)$) of a disturbance affecting a detection of transmission symbols of the second signal portion, taking into account the probabilities of transmission symbols of the first signal portion;
wherein a probability density function ($p_{N1}(n, k)$) of a disturbance affecting a detection of transmission symbols of the first signal portion is determined, taking into account:

- the probability density function ($p_{N2}(n, k)$) of a disturbance affecting a detection of transmission symbols of the second signal portion, and
- the sample values ($y[k]$), and
- information about intersymbol interference properties; and

wherein updated probabilities ($p_{1_i}[k]$) of transmission symbols of the first signal portion for a plurality of sampling instants (k) are determined on the basis of sample values and the probability density function ($p_{N1}(n, k)$) of a disturbance affecting a detection of transmission symbols of the first signal portion;
wherein transmission symbols of the first signal portion and/or of the second signal portion are determined on the basis of an end probability density function;
wherein the probability density function ($p_{N1}(n, k)$) of a disturbance affecting a detection of the first signal portion is determined on the basis of a grouping into domains of contributions of the second signal portion to the sample values, wherein the contributions of the second signal portion grouped into a domain essentially comprise similar values.

**14.** Method (300) for receiving a combination signal that comprise two separate signal portions whose impulses are shifted with respect to each other and/or whose carrier phases deviate from each other, comprising:

setting (310) sampling instants at which an output signal of a filter is sampled, wherein the filter is matched to a transmission impulse shape of the impulses of at least one of the signal portions so that an output signal portion of the filter based on one of the signal portions is sampled essentially free of intersymbol interference;
wherein the method comprises determining probabilities ($p_{1_i}[k]$) of transmission symbols of a first signal portion for a plurality of sampling instants (k);
wherein the method comprises determining a probability density function ($p_{N2}(n, k)$) of a disturbance affecting a detection of transmission symbols of the second signal portion, taking into account the probabilities of transmission symbols of the first signal portion;
wherein a probability density function ($p_{N1}(n, k)$) of a disturbance affecting a detection of transmission symbols of the first signal portion is determined, taking into account:

- the probability density function ($p_{N2}(n, k)$) of a disturbance affecting a detection of transmission symbols of the second signal portion, and
- the sample values (y[k]), and
- information about intersymbol interference properties; and

wherein updated probabilities ($p_{1i}$[k]) of transmission symbols of the first signal portion for a plurality of sampling instants (k) are determined on the basis of sample values and the probability density function ($p_{N1}(n, k)$) of a disturbance affecting a detection of transmission symbols of the first signal portion; and
wherein transmission symbols of the first signal portion and/or of the second signal portion are determined on the basis of an end probability density function;
wherein the probability density function ($p_{N1}(n, k)$) of the disturbance affecting a detection of the first signal portion is determined on the basis of a weighted summation of probability density functions of a presumed noise disturbance, wherein the magnitudes of the second signal portion at the sampling instants are selected as mean values of the individual probability density functions, and these individual probability density functions are weighted in accordance with the probabilities of contributions of the second signal portion to the sample values.

15. Computer program having program code for performing the method according to any one of claims 12 to 14 if the program runs on a computer.


**Revendications**

1. Récepteur (100 ; 230 ; 900) pour recevoir un signal de combinaison (101) qui présente deux parts de signal séparées dont les impulsions sont décalées l'une par rapport à l'autre et/ou dont les oscillations de porteuse présentent une différence de phase,

dans lequel le récepteur présente un filtre (110 ; 910) adapté à une forme d'impulsion de transmission des impulsions d'au moins l'une des parts de signal, et
dans lequel le récepteur est conçu pour régler les moments de balayage auxquels est balayé un signal de sortie du filtre, de sorte qu'une part de signal de sortie du filtre qui est basée sur l'une des parts de signal soit balayée sensiblement sans interférence entre symboles;
dans lequel le récepteur est conçu pour déterminer les probabilités ($p_{1i}$[k]) de symboles de transmission d'une première part de signal pour une pluralité de moments de balayage (k);
dans lequel le récepteur est conçu pour déterminer une fonction de densité de probabilité ($p_{N2}(n, k)$) d'une perturbation dégradant une détection de symboles de transmission de la deuxième part de signal en tenant compte des probabilités de symboles de transmission de la première part de signal;
dans lequel le récepteur est conçu déterminer une fonction de densité de probabilité ($p_{N1}(n, k)$) d'une perturbation dégradant une détection de symboles de transmission de la première part de signal en tenant compte

- de la fonction de densité de probabilité ($p_{N2}(n, k)$) de la perturbation dégradant la détection de symboles de transmission de la deuxième part de signal, et
- des valeurs de balayage (y[k]), et
- d'une information sur les propriétés d'interférence entre symboles; et

dans lequel le récepteur est conçu pour déterminer, sur base des valeurs de balayage et de la fonction de densité de probabilité ($p_{N1}(n, k)$) de la perturbation dégradant la détection de symboles de transmission de la première part de signal, les probabilités actualisées ($p_{1i}$[k]) de symboles de transmission de la première part de signal pour une pluralité de moments de balayage (k); et
dans lequel le récepteur est conçu pour déterminer, sur base d'une fonction de densité de probabilité finale, les symboles de transmission de la première part de signal et/ou de la deuxième part de signal;
dans lequel le récepteur est conçu pour déterminer la fonction de densité de probabilité ($p_{N2}(n, k)$) de la perturbation dégradant la détection de symboles de transmission de la deuxième part de signal de transmission comme une somme de fonctions de densité de probabilité d'une interférence de bruit supposée, et
dans lequel le récepteur est conçu pour choisir les valeurs moyennes de fonctions de densité de probabilité d'une interférence de bruit qui contribuent à la somme de fonctions de densité de probabilité selon les symboles de transmission de la première part de signal, et
dans lequel le récepteur est conçu pour pondérer les fonctions de densité de probabilité d'interférences de bruit supposées qui contribuent à la somme de densités de probabilité par les probabilités de symboles de transmission de la première part de signal.

**2.** Récepteur selon la revendication 1, dans lequel le récepteur est conçu pour régler les moments de balayage de sorte qu'une réaction à une impulsion de la première part de signal après un filtrage par le filtre n'apporte une contribution principale qu'à un moment de balayage, dans lequel la réaction à l'impulsion à d'autres moments de balayage est de tout au plus 10 % de la contribution principale; ou

dans lequel le récepteur est conçu pour régler les moments de balayage de sorte qu'une impulsion de la première part de signal n'apporte une contribution sensiblement différente de zéro à une valeur d'échantillon qu'à un moment de balayage.

**3.** Récepteur selon l'une des revendications 1 à 2, dans lequel les impulsions de la première part de signal et les impulsions de la deuxième part de signal présentent des formes d'impulsions de transmission identiques.

**4.** Récepteur selon l'une des revendications 1 à 3, dans lequel le récepteur est conçu pour déterminer, sur base des valeurs de balayage, un contenu d'information de l'une des parts de signal et pour estimer ainsi et prendre en compte une perturbation par l'autre part de signal.

**5.** Récepteur selon l'une des revendications 1 à 4, dans lequel le récepteur est conçu pour déterminer les symboles de transmission sur lesquels est basée la deuxième part de signal, ou les probabilités de symboles de transmission sur lesquels est basée la deuxième part de signal, à l'aide d'un procédé de décodage en treillis.

**6.** Récepteur selon l'une des revendications 1 à 5, dans lequel le récepteur est conçu pour déterminer les probabilités de transition générales ($\gamma_{ij}[k]$) d'un premier état de mémoire d'un filtre discret qui décrit une interférence entre symboles sur base d'une valeur de balayage du signal de combinaison et de la fonction de densité de probabilité ($p_{N2}(n, k)$) d'une perturbation dégradant une détection de symboles de transmission de la deuxième part de signal à un deuxième état de mémoire, le deuxième état de mémoire suivant le premier état de mémoire dans le temps.

**7.** Récepteur selon l'une des revendications 1 à 6, dans lequel le récepteur est conçu pour estimer les perturbations de la deuxième part de signal sur la première part de signal, et dans lequel le récepteur est configuré pour obtenir, sur base de l'estimation des perturbations de la deuxième part de signal sur la première part de signal, une estimation de la probabilité de symbole de transmission de la première part de signal, et

dans lequel le récepteur est conçu pour estimer les perturbations de la première part de signal sur la deuxième part de signal en estimant les probabilités de symboles de transmission de la première part de signal, et
dans lequel le récepteur est conçu pour estimer, sur base de l'estimation des perturbations de la première part de signal sur la deuxième part de signal, une contribution de la deuxième part de signal à la valeur de balayage, et
dans lequel le récepteur est optionnellement conçu en outre pour améliorer de manière itérative les perturbations de la deuxième part de signal sur la première part de signal et les perturbations de la première part de signal sur la deuxième part de signal.

**8.** Récepteur selon l'une des revendications 1 à 7, dans lequel le récepteur est conçu pour déterminer, directement à partir d'une estimation de perturbations de la deuxième part de signal sur la première part de signal et d'une valeur de balayage, un symbole de réception de la première part de signal ou une probabilité d'un symbole de réception de la première part de signal.

**9.** Récepteur (100; 230; 900) pour recevoir un signal de combinaison (101) qui présente deux parts de signal séparées dont les impulsions sont décalées l'une par rapport à l'autre et/ou dont les oscillations de porteuse présentent une différence de phase,

dans lequel le récepteur présente un filtre (110; 910) adapté à une forme d'impulsion de transmission des impulsions d'au moins l'une des parts de signal, et
dans lequel le récepteur est conçu pour régler les moments de balayage auxquels est balayé un signal de sortie du filtre de sorte qu'une part de signal de sortie du filtre qui est basée sur l'une des parts de signal soit balayée sensiblement sans interférence entre symboles;
dans lequel le récepteur est conçu pour déterminer les probabilités ($p_{1i}[k]$) de symboles de transmission d'une première part de signal pour une pluralité de moments de balayage ($k$);
dans lequel le récepteur est conçu pour déterminer une fonction de densité de probabilité ($p_{N2}(n, k)$) d'une perturbation dégradant une détection de symboles de transmission de la deuxième part de signal en tenant compte des probabilités de symboles de transmission de la première part de signal;
dans lequel le récepteur est conçu déterminer une fonction de densité de probabilité ($p_{N1}(n, k)$) d'une perturbation dégradant une détection de symboles de transmission de la première part de signal en tenant compte

- de la fonction de densité de probabilité ($p_{N2}(n, k)$) de la perturbation dégradant la détection de symboles de transmission de la deuxième part de signal, et
- des valeurs de balayage (y[k]), et
- d'une information sur les propriétés d'interférence entre symboles ; et

dans lequel le récepteur est conçu pour déterminer, sur base des valeurs de balayage et de la fonction de densité de probabilité ($p_{N1}(n, k)$) de la perturbation dégradant la détection de symboles de transmission de la première part de signal, les probabilités actualisées ($p_{1i}[k]$) de symboles de transmission de la première part de signal pour une pluralité de moments de balayage (k) ; et

dans lequel le récepteur est conçu pour déterminer, sur base d'une fonction de densité de probabilité finale, les symboles de transmission de la première part de signal et/ou de la deuxième part de signal ;

dans lequel le récepteur est conçu pour déterminer la fonction de densité de probabilité ($p_{N1}(n, k)$) de la perturbation dégradant la détection de la première part de signal sur base d'un regroupement en domaines des contributions de la deuxième part de signal aux valeurs de balayage, dans lequel les contributions regroupées dans un domaine de la deuxième part de signal présentent des valeurs sensiblement similaires.

**10.** Récepteur (100 ; 230 ; 900) pour recevoir un signal de combinaison (101) qui présente deux parts de signal séparées dont les impulsions sont décalées l'une par rapport à l'autre et/ou dont les oscillations de porteuse présentent une différence de phase,

dans lequel le récepteur présente un filtre (110 ; 910) adapté à une forme d'impulsion de transmission des impulsions d'au moins l'une des parts de signal, et

dans lequel le récepteur est conçu pour régler les moments de balayage auxquels est balayé un signal de sortie du filtre de sorte qu'une part de signal de sortie du filtre qui est basée sur l'une des parts de signal soit balayée sensiblement sans interférence entre symboles ;

dans lequel le récepteur est conçu pour déterminer les probabilités ($p_{1i}[k]$) de symboles de transmission d'une première part de signal pour une pluralité de moments de balayage (k) ;

dans lequel le récepteur est conçu pour déterminer une fonction de densité de probabilité ($p_{N2}(n, k)$) d'une perturbation dégradant une détection de symboles de transmission de la deuxième part de signal en tenant compte des probabilités de symboles de transmission de la première part de signal ;

dans lequel le récepteur est conçu déterminer une fonction de densité de probabilité ($p_{N1}(n, k)$) d'une perturbation dégradant une détection de symboles de transmission de la première part de signal en tenant compte

- de la fonction de densité de probabilité ($p_{N2}(n, k)$) de la perturbation dégradant la détection de symboles de transmission de la deuxième part de signal, et
- des valeurs de balayage (y[k]), et
- d'une information sur les propriétés d'interférence entre symboles ; et

dans lequel le récepteur est conçu pour déterminer, sur base des valeurs de balayage et de la fonction de densité de probabilité ($p_{N1}(n, k)$) de la perturbation dégradant la détection de symboles de transmission de la première part de signal, les probabilités actualisées ($p_{1i}[k]$) de symboles de transmission de la première part de signal pour une pluralité de moments de balayage (k) ; et

dans lequel le récepteur est conçu pour déterminer, sur base d'une fonction de densité de probabilité finale, les symboles de transmission de la première part de signal et/ou de la deuxième part de signal ;

dans lequel le récepteur est conçu pour déterminer la fonction de densité de probabilité ($p_{N1}(n, k)$) de la perturbation dégradant la détection de la première part de signal sur la base d'une addition pondérée des fonctions de densité de probabilité d'une interférence de bruit supposée, dans lequel le récepteur est conçu pour choisir, comme valeurs moyennes des fonctions de densité de probabilité individuelles, les quantités de la deuxième part de signal aux moments de balayage et pour pondérer ces fonctions de densité de probabilité individuelles selon les probabilités de contributions de la deuxième part de signal aux valeurs de balayage.

**11.** Système de communication (200), aux caractéristiques suivantes :

un premier émetteur (210),
un deuxième émetteur (220), et
un récepteur (230) selon l'une des revendications 1 à 10,

dans lequel le premier émetteur et le deuxième émetteur sont conçus, chacun, pour transmettre les symboles de transmission à une fréquence d'horloge de symbole identique, dans lequel la fréquence d'horloge de symbole du premier émetteur et du deuxième émetteur est telle que les symboles de transmission du premier émetteur et les symboles de transmission du deuxième émetteur reçus du côté du récepteur présentent un décalage qui correspond à une fraction d'une durée de symbole.

12. Procédé (300) pour recevoir un signal de combinaison qui présente deux parts de signal séparées dont les impulsions sont décalées l'une par rapport à l'autre et/ou dont les phases de porteuse diffèrent l'une de l'autre, dans lequel le procédé comporte le fait de:

régler (310) les moments de balayage auxquels est balayé un signal de sortie d'un filtre, où le filtre est adapté à une forme d'impulsion de transmission des impulsions d'au moins l'une des parts de signal, de sorte qu'une part de signal de sortie du filtre qui se base sur l'une des parts de signal soit balayée sensiblement sans interférence entre symboles;

dans lequel le procédé comporte le fait de déterminer les probabilités ($p_{1i}[k]$) de symboles de transmission d'une première part de signal pour une pluralité de moments de balayage ($k$);

dans lequel le procédé comporte le fait de déterminer une fonction de densité de probabilité ($p_{N2}(n, k)$) d'une perturbation dégradant une détection de symboles de transmission de la deuxième part de signal en tenant compte des probabilités de symboles de transmission de la première part de signal;

dans lequel une fonction de densité de probabilité ($p_{N1}(n, k)$) d'une perturbation dégradant une détection de symboles de transmission de la première part de signal est déterminée en tenant compte

- de la fonction de densité de probabilité ($p_{N2}(n, k)$) de la perturbation dégradant la détection de symboles de transmission de la deuxième part de signal, et
- des valeurs de balayage ($y[k]$), et
- d'une information sur les propriétés d'interférence entre symboles; et

dans lequel sont déterminées, sur base des valeurs de balayage et de la fonction de densité de probabilité ($p_{N1}(n, k)$) de la perturbation dégradant la détection des symboles de transmission de la première part de signal, les probabilités actualisées ($p_{1i}[k]$) de symboles de transmission de la première part de signal pour une pluralité de moments de balayage ($k$); et

dans lequel sont déterminés, sur base d'une fonction de densité de probabilité finale, les symboles de transmission de la première part de signal et/ou de la deuxième part de signal;

dans lequel la fonction de densité de probabilité ($p_{N2}(n, k)$) de la perturbation dégradant la détection de symboles de transmission de la deuxième part de signal de transmission est déterminée comme une somme de fonctions de densité de probabilité d'une interférence de bruit supposée, et

dans lequel les valeurs moyennes des fonctions de densité de probabilité d'une interférence de bruit qui contribuent à la somme des fonctions de densité de probabilité sont choisies selon les symboles de transmission de la première part de signal, et

dans lequel les fonctions de densité de probabilité d'interférences de bruit supposées qui contribuent à la somme de densités de probabilité sont pondérées par les probabilités de symboles de transmission de la première part de signal.

13. Procédé (300) pour recevoir un signal de combinaison qui présente deux parts de signal séparées dont les impulsions sont décalées l'une par rapport à l'autre et/ou dont les phases de porteuse diffèrent l'une de l'autre, dans lequel le procédé comporte le fait de:

régler (310) les moments de balayage auxquels est balayé un signal de sortie d'un filtre, où le filtre est adapté à une forme d'impulsion de transmission des impulsions d'au moins l'une des parts de signal, de sorte qu'une part de signal de sortie du filtre qui se base sur l'une des parts de signal soit balayée sensiblement sans interférence entre symboles;

dans lequel le procédé comporte le fait de déterminer les probabilités ($p_{1i}[k]$) de symboles de transmission d'une première part de signal pour une pluralité de moments de balayage ($k$);

dans lequel le procédé comporte le fait de déterminer une fonction de densité de probabilité ($p_{N2}(n, k)$) d'une perturbation dégradant une détection de symboles de transmission de la deuxième part de signal en tenant compte des probabilités de symboles de transmission de la première part de signal;

dans lequel une fonction de densité de probabilité ($p_{N1}(n, k)$) d'une perturbation dégradant une détection de symboles de transmission de la première part de signal est déterminée en tenant compte

- de la fonction de densité de probabilité ($p_{N2}(n, k)$) de la perturbation dégradant la détection de symboles de transmission de la deuxième part de signal, et
- des valeurs de balayage ($y[k]$), et
- d'une information sur les propriétés d'interférence entre symboles; et

dans lequel sont déterminées, sur base des valeurs de balayage et de la fonction de densité de probabilité ($p_{N1}(n, k)$) de la perturbation dégradant la détection des symboles de transmission de la première part de signal, les probabilités actualisées ($p_{1i}[k]$) de symboles de transmission de la première part de signal pour une pluralité de moments de balayage ($k$); et

dans lequel sont déterminés, sur base d'une fonction de densité de probabilité finale, les symboles de transmission de la première part de signal et/ou de la deuxième part de signal;

dans lequel la fonction de densité de probabilité ($p_{N1}(n, k)$) de la perturbation dégradant la détection de la première part de signal est déterminée sur base d'un regroupement en domaines des contributions de la deuxième part de signal aux valeurs de balayage, dans lequel les contributions regroupées dans un domaine de la deuxième part de signal présentent des valeurs sensiblement similaires.

**14.** Procédé (300) pour recevoir un signal de combinaison qui présente deux parts de signal séparées dont les impulsions sont décalées l'une par rapport à l'autre et/ou dont les phases de porteuse diffèrent l'une de l'autre, dans lequel le procédé comporte le fait de:

régler (310) les moments de balayage auxquels est balayé un signal de sortie d'un filtre, où le filtre est adapté à une forme d'impulsion de transmission des impulsions d'au moins l'une des parts de signal, de sorte qu'une part de signal de sortie du filtre qui se base sur l'une des parts de signal soit balayée sensiblement sans interférence entre symboles;

dans lequel le procédé comporte le fait de déterminer les probabilités ($p_{1i}[k]$) de symboles de transmission d'une première part de signal pour une pluralité de moments de balayage ($k$);

dans lequel le procédé comporte le fait de déterminer une fonction de densité de probabilité ($p_{N2}(n, k)$) d'une perturbation dégradant une détection de symboles de transmission de la deuxième part de signal en tenant compte des probabilités de symboles de transmission de la première part de signal;

dans lequel une fonction de densité de probabilité ($p_{N1}(n, k)$) d'une perturbation dégradant une détection de symboles de transmission de la première part de signal est déterminée en tenant compte

- de la fonction de densité de probabilité ($p_{N2}(n, k)$) de la perturbation dégradant la détection de symboles de transmission de la deuxième part de signal, et
- des valeurs de balayage ($y[k]$), et
- d'une information sur les propriétés d'interférence entre symboles; et

dans lequel sont déterminées, sur base des valeurs de balayage et de la fonction de densité de probabilité ($p_{N1}(n, k)$) de la perturbation dégradant la détection des symboles de transmission de la première part de signal, les probabilités actualisées ($p_{1i}[k]$) de symboles de transmission de la première part de signal pour une pluralité de moments de balayage ($k$); et

dans lequel sont déterminés, sur base d'une fonction de densité de probabilité finale, les symboles de transmission de la première part de signal et/ou de la deuxième part de signal;

dans lequel la fonction de densité de probabilité ($p_{N1}(n, k)$) de la perturbation dégradant la détection de la première part de signal est déterminée sur base d'une addition pondérée des fonctions de densité de probabilité d'une interférence de bruit supposée, dans lequel les quantités de la deuxième part de signal aux moments de balayage sont choisies comme valeurs moyennes des fonctions de densité de probabilité individuelles, et ces fonctions de densité de probabilité individuelles sont pondérées selon les probabilités de contributions de la deuxième part de signal aux valeurs de balayage.

**15.** Programme d'ordinateur avec un code de programme pour la mise en œuvre du procédé selon l'une des revendications 12 à 14 lorsque le programme est exécuté sur un ordinateur.

100

Kombinationssignal

101

Filter

110

Abtaster

120

Fig. 1

210

200

erster Sender

220

zweiter Sender

225

Kanal

230

Empfänger

Fig. 2

300

Einstellen von Abtastzeitpunkten, zu denen ein Ausgangssignal eines Filters abgetastet wird, wobei der Filter an eine Sendeimpulsform der Impulse zumindest eines der Signalanteile angepasst ist, so dass ein Ausgangssignalanteil des Filters, der auf einem der Signalanteile basiert, im Wesentlichen Intersymbol-Interferenz-frei abgetastet wird.

~310

## Fig. 3

400

erster Signalanteil

410

zweiter Signalanteil

420

## Fig. 4

<u>500</u>

wahlweise, je nachdem
mit welcher Halbiteration
man beginnt

— 510a

Bestimmen vom Wahrscheinlichkeiten von Sendesymbolen
eines ersten Signalanteils — 510

510b

Wahrscheinlichkeitsdichtfunktionsbestimmer (1 → 2)
(Halbiteration)

520a

520

530a

Information über ISI

Wahrscheinlichkeitsdichtefunktionsbestimmer (2 → 1)
(Halbiteration)

520a

530a

530a

530

Bestimmer für aktualisierte
Wahrscheinlichkeiten $p_{1i}[k]$

540a

540

wahlweise, je nachdem,
nach welcher Halbiteration
man aufhört

Sendesymbolbestimmung
für beide Signale

550

550a

Fig. 5

600

Bestimmen von Wahrscheinlichkeiten ($p_{1i}[k]$)
von Sendesymbolen eines ersten Signalanteils
für eine Mehrzahl von Abtastzeitpunkten (k).
⌐~610

Bestimmen von Wahrscheinlichkeitsdichtefunktion
($p_{N2}(n,k)$) einer eine Detektion von Sendesymbolen
des zweiten Signalanteils beeinträchtigenden Störung
unter Berücksichtigung der Wahrscheinlichkeiten von
Sendesymbolen des ersten Signalanteils.
⌐~620

Bestimmen von Wahrscheinlichkeitsdichtefunktion ($p_{N1}(n,k)$)
einer eine Detektion von Sendesymbolen des ersten Signalanteils beeinträchtigenden Störung unter Berücksichtigung

— der Wahrscheinlichkeitsdichtefunktion ($p_{N2}(n,k)$)
   einer eine Detektion von Sendesymbolen des
   zweiten Signalanteils beeinträchtigenden Störung, und

— der Abtastwerte (y[k]), und

— einer Information über Inter-Symbol-Interferenz-
   Eigenschaften
⌐~630

I Iterationen

Bestimmen von aktualisierten Wahrscheinlichkeiten
($p_{1i}[k]$) von Sendesymbolen des ersten Signalanteils für
eine Mehrzahl von Abtastzeitpunkten (k), basierend auf
Abtastwerten und der Wahrscheinlichkeitsdichtefunktion
($p_{N1}(n,k)$) einer eine Detektion von Sendesymbolen
des ersten Signalanteils beeinträchtigenden Störung
⌐~640

Bestimmen von Sendesymbole des ersten Signalanteils
und/oder des zweiten Signalanteils, basierend auf einer
End-Wahrscheinlichkeitsdichtefunktion
⌐~650

Fig. 6

710

Vorrichtung zur Ableitung
eines komplexen
Basisbandsignals

700

## Fig. 7

800

Einstellen einer Ableitung eines komplexen
Basisbandsignals von dem Kombinationssignal, so
dass Empfangssymbole eines in Intersymbolinterferenz
erzeugender Weise verarbeiteten Signalanteils, getrennt
in Inphasekomponente und Quadraturkomponente
behandelt werden können.

810

## Fig. 8

900

905a — Kombinationssignal

905 — | Mischer | ← Frequenz/Phase

905b — äquivalentes komplexes Basisbandsignal

910 — | An Sendeimpulsform angepasstes Filter „matched Filter" |

910a —

980

915 — | Abtaster | ← Abtastreglung

915a — Abtastwerte y[k] (komplexwertig)
y[k]

| Bestimmung von Wahrscheinlichkeiten von Sendesymbolen eines ersten Signalanteils | — 920

920a — $p_{1i}[k]$ Wahrscheinlichkeiten Sendesymbolen des 1. Signalanteils

| Bestimmung einer Wahrscheinlichkeitsdichtefunktion einer eine Detektion von Sendesymbolen des zweiten Signalanteils beeinträchtigenden Störung | — 925

925a — $p_{N2}(n, k)$ Wahrscheinlichkeitsdichtefunktion

Iteration

| Bestimmung von individuellen Übergangswahrscheinlichkeiten $\gamma_{ij}[k]$ | — 930

930a — $\gamma_{ij}[k]$

| Bestimmung von sequenzbedingten Übergangswahrscheinlichkeiten $p_{i\to j}[k]$ | — 935

935a — $p_{i\to i}[k]$

950a

| Bestimmung von Empfangssignalwahrscheinlichkeiten des zweiten Signalanteils | — 940

940a — $p_i[k]$ oder (optional) $p_{D\gamma}[k]$

| Bestimmung einer Wahrscheinlichkeitsdichtefunktion einer eine Detektion von Sendesymbolen des ersten Signalanteils beeinträchtigenden Störung | — 945

945a — $p_{N1}(n, k)$

| Bestimmung von aktualisierten Wahrscheinlichkeiten von Sendesymbolen des ersten Signalanteils | — 950

945a — $p_{1i}[k]$

| Bestimmung von Sendesymbolen | — 955

Sendesymbole des ersten Signalanteils    Sendesymbole des zweiten Signalanteils

# Fig. 9

Fig. 10

Fig. 11

Signal 1 Signal 2 Empfangsseite

−1 −1 −2

−1 +1 0

+1 −1

+1 +1 +2

Fig. 12

EP 3 756 290 B1

Fig. 13

D: Delay-Operator: Verzögerung des zeitdiskreten Signals
um einen Schritt (Abtastperiode),
entspricht dem Operator $z^{-1}$ der z-Transformation

Fig. 14

EP 3 756 290 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004170230 A1

**In der Beschreibung aufgeführte Nicht-Patentliteratur**

- Doubletalk carrier-in-carrier bandwidth compression. *Comtech EF Data,* 25. Juli 2016, http://www.comtechefdata.com/technologies/doubletalk
- **A. DUEL-HALLEN ; C. HEEGARD.** Delayed decision-feedback sequence estimation. *IEEE Transactions on Communications,* Mai 1989, vol. 37, 428-436
- **A. ECKELS ; R. KOIDAN ; I. HARRIS ; R. JASTROW.** Ephemeris of satellite 1957 alpha 2. *IGY Satellite Rpt,* Juni 1959
- **J. HUBER.** Trelliscodierung: Grundlagen und Anwendungen in der digitalen Übertragungstechnik. Springer-Verlag, 1992, vol. 21
- **F. JELINEK ; L. BAHL ; J. COCKE ; J. RAVIV.** Optimal decoding of linear codes for minimizing symbol error rate. *IEEE Transactions on Information Theory,* 1974, vol. 20, 284-287
- **STUART P. LLOYD.** Least Squares Quantization in PCM. *IEEE Transactions on Information Theory,* Marz 1982, vol. 28 (2), 129-137
- **P. NICKEL ; W. GERSTACKER.** Single Antenna Interference Cancellation using Prefiltering and Multiuser Joint Detection based on the M-Algorithm. *In Proc. of 14th IST Mobile & Wireless Communications Summit, Dresden,* 2005
- **SERGIO VERDU.** Multiuser Detection. Cambridge University Press, 1998
- **A. J. VITERBI.** Error bounds for convolutional codes and an asymptotically optimum decoding algorithm. *In IEEE Transactions on Information Theory,* 1967, vol. 13, 260-269